Europäisches Patentamt

(19) European Patent Office

Office européen des brevets

(11) Numéro de publication : **0 334 716 B1**

(12) **FASCICULE DE BREVET EUROPEEN**

(45) Date de publication du fascicule du brevet :
24.04.91 Bulletin 91/17

(51) Int. Cl.⁵ : **B64C 27/51, F16F 13/00**

(21) Numéro de dépôt : 89400706.1

(22) Date de dépôt : 14.03.89

(54) **Contre-fiche de rappel élastique de type élasto-hydraulique à amortissement linéaire incorporé par laminage d'un fluide de viscosité élevée.**

(30) Priorité : 24.03.88 FR 8803880

(43) Date de publication de la demande :
27.09.89 Bulletin 89/39

(45) Mention de la délivrance du brevet :
24.04.91 Bulletin 91/17

(84) Etats contractants désignés :
DE GB IT

(56) Documents cités :
EP-A- 0 097 091
FR-A- 2 592 696

(73) Titulaire : **AEROSPATIALE Société Nationale Industrielle**
**37, Boulevard de Montmorency**
**F-75781 Paris Cédex 16 (FR)**

(72) Inventeur : **Aubry, Jacques Antoine**
**2 Avenue Marie Gasquet**
**F-13480 Cabries (FR)**
Inventeur : **Mondet, Jean Joseph**
**Villa Le Lauzet 839 route de Lambesc**
**F-13330 Pelissanne (FR)**

(74) Mandataire : **Bérogin, Francis et al**
**CABINET HARLE & PHELIP 21, rue de la Rochefoucauld**
**F-75009 Paris (FR)**

# Description

La présente invention a pour objet une contre-fiche de rappel élastique de type élasto-hydraulique, à amortissement linéaire incorporé par laminage d'un fluide hydraulique de viscosité élevée, tel qu'en particulier une huile de silicone.

Une telle contre-fiche est destinée plus particulièrement, mais non uniquement, à l'équipement des rotors d'aérodynes à voilure tournante, et plus spécialement des rotors d'hélicoptères.

Sur les rotors sustentateurs d'hélicoptères dont le moyeu est du type articulé et comporte en particulier pour chaque pale une articulation dite de traînée, articulation autour d'un axe perpendiculaire au plan de la pale et donnant donc à cette dernière une liberté d'oscillations angulaires dans le plan de rotation du rotor, il est bien connu qu'il est avantageux d'assurer autour de cette articulation un énergique rappel élastique de chaque pale vers sa position angulaire moyenne, de façon à pouvoir ajuster la fréquence propre de l'ensemble de la pale en traînée, et il est également bien connu qu'il est impératif d'amortir ces oscillations angulaires de traînée de la pale pour minimiser la transmission des efforts dynamiques de traînée provenant de la pale vers la structure de l'hélicoptère, tout en évitant tout instabilité pouvant naître des couplages entre les oscillations dues à des sollicitations aérodynamiques et les réponses mécaniques des éléments du rotor et du fuselage, tant pendant la montée et la descente en régime du rotor, au décollage et à l'atterrissage, qu'en vol lorsque le rotor tourne en régime sensiblement stabilisé.

On sait que les caractéristiques dynamiques de traînée d'une pale de rotor sustentateur d'hélicoptère dépendent de la valeur de son premier mode naturel de vibration en traînée, lequel est fonction, d'une part, du rappel centrifuge de la pale en traînée occasionné par la force centrifuge qui s'exerce radialement au centre de gravité de la pale et d'un éventuel rappel additionnel et élastique en traînée apporté par tout dispositif s'opposant élastiquement aux déplacements angulaires de la pale autour de sa position moyenne en traînée, et, d'autre part, de l'amortissement introduit dans les mouvements angulaires alternés de la pale autour de son articulation de traînée.

Pour obtenir un fonctionnement correct du rotor vis-à-vis de ces phénomènes dynamiques, les deux paramètres que sont la position du premier mode de traînée et l'amortissement doivent être ajustés mutuellement.

Afin de satisfaire à cette exigence, il a été récemment proposé d'utiliser des contre-fiches de rappel élastique à amortissement incorporé, de type hydro-élastique, dont chacune est un équipement assurant simultanément le rappel élastique d'une pale en traînée par déformation d'une masse d'un matériau souple, et l'amortissement par un dispositif hydraulique.

Des contre-fiches de ce type, dont des exemples sont décrits dans les brevets français 2 528 382 et 2 592 696, ont été développées notamment à partir d'amortisseurs rotatifs à laminage, utilisant des huiles de haute viscosité, tels que décrits dans les brevets français 2 256 347 et 2 592 449, ainsi que d'amortisseurs tubulaires à fluide tels que décrits dans le brevet français 2 573 829, dont on a proposé l'application des principes de fonctionnement à la réalisation de contre-fiches de rappel élastique à amortissement linéaire incorporé.

L'amortisseur rotatif à laminage d'un liquide de viscosité élevée qui est décrit dans le brevet français 2 256 347 est constitué par l'agencement coaxial d'un rotor et d'un stator munis de palettes radiales alternativement solidaires du rotor et du stator, en direction circonférentielle, et délimitant à l'intérieur de l'amortisseur, fermé transversalement à l'axe du rotor et du stator par au moins un couvercle, une chambre interne principale qui est remplie d'un fluide visqueux.

Les palettes sont associées à des moyens de laminage du fluide passant de l'un à l'autre des différents volumes délimités par les palettes dans la chambre principale interne, lorsque le rotor et le stator de l'amortisseur sont entraînés en rotation relative autour de leur axe commun. L'amortissement est ainsi assuré par le transfert du fluide visqueux au travers des moyens de laminage, sous l'effet de la rotation des palettes liées au rotor par rapport aux palettes liées au stator. La compensation des dilatations thermiques du fluide visqueux est assurée grâce à la présence d'une chambre auxiliaire remplie d'un volume de ce fluide visqueux et en communication permanente avec la chambre interne principale par au moins un trou de petit diamètre percé dans un fond de l'amortisseur qui sépare la chambre principale de la chambre auxiliaire. Le fluide visqueux contenu dans cette dernière est pressurisé par un piston soumis à l'action de rondelles élastiques afin d'assurer une alimentation constante de la chambre principale sous pression statique. De plus, la chambre auxiliaire est reliée à la chambre principale par au moins un trou de plus grand diamètre coopérant avec un clapet de gavage qui comporte une lame-ressort fixée dans la face du fond percé du trou de grand diamètre, du côté de la chambre interne, de façon à fonctionner en clapet anti-retour, s'opposant à l'écoulement du fluide visqueux de la chambre principale vers la chambre auxiliaire, mais autorisant un écoulement en sens opposé lorsque la partie de la chambre principale dans laquelle ce trou de grand diamètre débouche se trouve en dépression.

Un tel amortisseur de rotation est d'une réalisation particulièrement économique, du fait de l'utilisation d'un liquide de viscosité élevée, qui permet de donner des valeurs importantes aux jeux de fonctionnement entre les parties actives de l'amortisseur, et simultanément d'utiliser des moyens de laminage simplifiés pour créer les forces d'amortissement, ainsi que des clapets de structure également simple pour les fonctions annexes, telles que la compensation des dilatations thermiques du fluide visqueux et le gavage de la chambre principale de l'amortisseur.

Un amortisseur de rotation de ce type a été perfectionné dans le brevet français 2 592 449, selon lequel la chambre auxiliaire est formée au moins partiellement par une membrane déformable élastiquement, permettant de compenser les variations de volume du fluide en fonction de sa température. Avantageusement, une membrane déformable élastiquement est associée à chaque face extrême et sensiblement transversale de l'amortisseur, de sorte que deux chambres auxiliaires sont ainsi délimitées respectivement de part et d'autre du stator et du rotor de l'amortisseur, chaque chambre auxiliaire étant plus précisément délimitée entre une face extrême de l'amortisseur et la membrane correspondante, et au moins un passage de communication entre chaque chambre auxiliaire et la chambre principale est prévu dans la face extrême correspondante, ce passage de communication étant suffisamment petit pour faire office de filtre dynamique aux fréquences d'utilisation de l'amortisseur. Cette disposition permet de limiter l'effort de rappel des membranes élastiquement déformables, et, de ce fait, cet effort de rappel peut être inférieur à celui correspondant à la pression de fonctionnement de l'amortisseur. De plus, chaque face extrême est de préférence constituée d'une première couronne, associée au stator, et d'une seconde couronne, associée au rotor, et la membrane est annulaire et présente des bords périphériques interne et externe qui sont respectivement entourés par une bague intérieure et une bague extérieure auxquelles la membrane est solidarisée par vulcanisation, les bagues intérieure et extérieure sont logées dans une gorge annulaire définie par les deux couronnes de la face extrême correspondante, l'étanchéité de la chambre auxiliaire correspondante étant obtenue par adhérisation de la bague intérieure et de la bague extérieure avec les parois de la gorge, et le passage de communication entre la chambre principale et la chambre auxiliaire correspondante étant formé par un jeu ménagé entre les deux couronnes de la face extrême considérée. Le laminage du fluide de viscosité élevée, par exemple une huile de silicone, est bidirectionnel et assuré entre l'extrémité de chaque palette du stator et la paroi interne cylindrique circulaire du rotor, des moyens de transfert unidirectionnel du fluide étant de plus prévus sur chaque palette du stator et constitués par une lame élastique fixée par une vis sur chaque palette et obturant un orifice percé au-travers de la palette. Les chambres auxiliaires permettent ainsi de compenser les variations de volume du fluide visqueux remplissant la chambre principale, en fonction de sa température de fonctionnement, grâce aux membranes élastiquement déformables.

Ces membranes solidarisées respectivement au stator et au rotor par l'intermédiaire des bagues intérieures et extérieures, travaillent, lors des mouvements du rotor par rapport au stator, en torsion, de sorte qu'elles exercent un certain rappel élastique en torsion tendant à ramener le stator et le rotor dans une position initiale relative. De plus, comme le fluide visqueux est introduit dans l'amortisseur avec une pression suffisante pour assurer une déformation élastique des membranes qui couvre la rétraction volumique du fluide en utilisation à basse température, les membranes assurent la pressurisation des volumes de fluide visqueux contenus dans les chambres auxiliaires, ce qui assure le remplissage de la chambre principale d'amortisseur sous pression statique.

Le brevet français 2 573 829 décrit un amortisseur tubulaire à fluide, qui assure un amortissement linéaire et en rotation entre un tube et un axe central au tube, par cisaillement d'huile entre deux jeux de tubes concentriques alternativement télescopiques dans une chambre de cisaillement délimitée entre le tube et l'axe central, l'étanchéité axiale étant assurée par deux bagues élastiques de liaison entre le tube et l'axe central, de sorte que ces bagues élastiques assurent également un rappel élastique en rotation et linéaire. De plus, une chambre de dilatation, coaxiale à la chambre de cisaillement, est délimitée entre l'axe central et le tube externe par une membrane de dilatation annulaire qui sépare la chambre de dilatation de la chambre de cisaillement. Cette chambre de dilatation assure la compensation des variations de volume d'origine thermique du fluide cisaillé dans l'amortisseur. Un tel dispositif peut donc être utilisé comme une contre-fiche de rappel élastique linéaire et en rotation, de type hydro-élastique, à amortissement incorporé, linéaire et en rotation, par cisaillement de fluide entre deux jeux de tubes concentriques et alternativement télescopiques. De plus, cette contre-fiche est équipée d'un dispositif de compensation des dilatations thermiques du fluide cisaillé, et les tampons élastiques assurant le rappel élastique de l'axe central et du tube externe vers une position relative initiale, assurent de plus la fermeture étanche de la chambre d'amortisseur. Pour leur application sur les rotors d'hélicoptères, de tels amortisseurs tubulaires à fluide ne présentent pas une raideur suffisante et sont d'une structure complexe et délicate à réaliser, en particulier du fait de la présence des deux jeux coaxiaux et alternativement télescopiques de tubes de cisaillement.

Pour ces raisons, on a récemment proposé, par les brevets français 2.528.382 et 2.592.696, des contre-fiches de rappel élastique à amortissement incorporé, de type hydro-élastique, qui comprennent:
    – deux organes rigides munis chacun de moyens d'articulation destinés à relier l'un des organes rigides à une première pièce, telle qu'un pale ou un organe de liaison de ladite pale à un moyeu du rotor, et l'autre organe rigide à une second pièce, telle que ledit moyeu de rotor,

– au moins un organe de rappel élastique comprenant une masse d'un matériau déformable, solidaire des deux organes rigides et destiné à se déformer lorsque lesdits organes rigides sont déplacés l'un par rapport à l'autre, et à exercer sur lesdits organes rigides une action de rappel élastique tendant à les ramener dans une position relative initiale,

– au moins un amortisseur hydraulique, comprenant deux chambres de travail à volume variable en sens opposé, qui contiennent un fluide hydraulique relativement visqueux destiné à passer de l'une à l'autre des chambres par au moins un passage étranglé de communication entre lesdites chambres de travail, lorsque lesdits organes rigides sont déplacés l'un par rapport à l'autre, afin de produire un effet d'amortissement du déplacement relatif desdits organes rigides, et

– des moyens d'absorption des dilatations thermiques du fluide hydraulique.

Dans la contre-fiche de ce type, appelée également amortisseur de traînée ou adaptateur de fréquence, et qui est décrite dans le brevet français 2 528 382, la masse de matériau déformable est un anneau de matériau visco-élastique adhérant par ses deux faces frontales à deux plaques rigides boulonnées l'une à l'autre et sur une entretoise, de manière à former l'organe rigide solidarisé à la pale, l'entretoise étant conformée en patte de fixation supportant une rotule de montage, tandis que le second organe rigide, monté sur le moyeu du rotor par une rotule, présente une partie en forme de plaque annulaire noyée dans l'épaisseur de l'anneau visco-élastique et autour d'un évidement central oblong de cet anneau, dans lequel est logé un élément de restriction délimitant, avec la paroi latérale de l'évidement central de l'anneau, les deux chambres de travail à volume variable en sens opposé, et deux passages étranglés de communication entre les deux chambres de travail. L'élément de restriction est formé par le boulonnage l'une contre l'autre des parties centrales sensiblement cylindriques de deux pièces rigides comportant chacune un flasque circulaire logé dans une ouverture de l'une des deux plaques rigides de l'organe lié à la pale, afin de fermer l'évidement central de l'anneau visco-élastique. Les moyens d'absorption des dilatations thermiques du fluide hydraulique sont logés dans l'élément de restriction et formés de deux paires de chambres internes contenant chacune une capsule manométrique, et les deux chambres de chaque paire sont reliées à un même canal étroit débouchant au niveau du col de l'un des deux passages étranglés de communication entre les deux chambres de travail.

L'expérimentation en vol, sur des hélicoptères de moyen tonnage, d'un rotor principal comportant un moyeu de nouvelle génération et équipé de contre-fiches de rappel élastique en traînée, de type visco- et hydro-élastique, telles que décrites dans le brevet français 2 528 382, a montré qu'il était souhaitable d'augmenter l'amortissement assuré par ces contre-fiches de rappel élastique pour couvrir correctement un domaine de vol élargi en masse et surtout en vitesse accessible à ces hélicoptères modernes équipés d'un moyeu de rotor de nouvelle génération. Mais l'augmentation de l'amortissement sur ces contre-fiches de rappel élastique conduit à une augmentation corrélative de leur raideur, qui est incompatible avec une tenue mécanique satisfaisante des moyens de fixation de ces contre-fiches sur le moyeu du rotor.

Afin de remédier à ces inconvénients, il a été proposé dans le brevet français 2 592 696 que, dans une contre-fiche du type présenté ci-dessus, la masse de matériau déformable de l'organe de rappel élastique soit un manchon cylindrique d'un matériau élastique formant également joint de fermeture de l'amortisseur hydraulique, ce manchon étant adhérisé de façon étanche par ses deux surfaces interne et externe entre deux cylindres tubulaires métalliques coaxiaux selon l'axe de la contre-fiche et solidaires chacun de l'un des deux organes rigides, l'amortisseur hydraulique comprenant, en plus d'un piston monté coulissant axialement dans un cylindre porté par l'un des organes rigides, et séparant l'une de l'autre les deux chambres de travail délimitées dans ce cylindre, une tige d'axe longitudinal parallèle à l'axe de la contre-fiche et qui solidarise le piston à l'autre organe rigide, en traversant l'une au moins des chambres de travail, ainsi qu'une chambre de compensation, ménagée entre, d'une part, un fond du cylindre adjacent à une chambre de travail traversée par la tige, et, d'autre part, une face latérale du manchon élastique cylindrique, et la face latérale interne du cylindre tubulaire interne, cette chambre de compensation contenant un volume de fluide hydraulique ainsi qu'un volume de gaz, constituant lesdits moyens d'absorption des dilatations thermiques du fluide hydraulique, et destinée de plus à compenser la différence entre les variations de volume des deux chambres de travail qui est due à la tige lorsque le piston est déplacé dans le cylindre, et enfin, un organe de compensation, par l'intermédiaire duquel, la chambre de compensation est reliée à chacune des chambres de travail, afin de permettre un écoulement de fluide hydraulique de l'une des chambres de travail vers la chambre de compensation lorsque le piston est déplacé dans un sens, et un écoulement de fluide hydraulique de la chambre de compensation vers une chambre de travail lorsque le piston est déplacé dans l'autre sens dans le cylindre.

Comme le piston coulisse avec étanchéité dans le cylindre, le passage étranglé de communication entre les deux chambres de travail est un passage ménagé dans le piston et dans lequel est monté un organe de restriction. De plus, des clapets de surpression sont également montés dans des canaux ménagés au travers du piston pour mettre en communication les deux chambres de travail l'une avec l'autre et pour autoriser un écoulement de fluide hydraulique de celle des chambres de travail qui est mise sous pression, lorsque le piston est déplacé dans le cylindre, vers l'autre chambre de travail en dépression, dès que la pression différentielle entre les deux chambres de travail dépasse un seuil donné. En outre, l'organe de compensation est logé dans un canal de compensation lui-même ménagé dans le piston, de sorte que chacune de ses deux extrémités soient en communication permanente avec l'une des deux chambres de travail, et qu'une portion sensiblement centrale de ce canal de compensation soit en communication permanente avec la chambre de compensation, par l'intermédiaire d'un conduit de compensation qui s'étend dans la tige du piston. L'organe de compensation est un clapet double qui comporte deux obturateurs mobiles, dont chacun coopère avec l'un de deux sièges contre lequel il est appliqué de manière étanche par la pression régnant dans l'une des deux chambres de travail, lorsque cette chambre est mise sous pression par un déplacement du piston dans le cylindre, tandis que l'autre obturateur est écarté de son siège afin que l'autre chambre de travail soit en communication avec la chambre de compensation.

Une telle disposition rend nécessaire un guidage de la tige, ce qui est assuré par un palier monté dans un fond de cylindre adjacent à une chambre de travail traversée par la tige et équipé d'un joint d'étanchéité dynamique.

Une telle contre-fiche a pour inconvénients que sa structure interne impose l'utilisation de clapets complexes, de pièces d'usure, de divers organes coopérant les uns avec les autres en présentant de faibles jeux relatifs, et enfin que l'étanchéité est délicate à obtenir, au niveau, d'une part, du piston coulissant et, d'autre part de la tige liée à ce piston.

L'invention a pour but de proposer une contre-fiche de rappel élastique à amortissement incorporé, de type hydro-élastique, qui remplit les mêmes fonctions et présente les mêmes avantages que la contre-fiche dans le brevet français 2 592 696, sans en présenter les inconvénients précités.

En d'autres termes, l'invention a pour but de proposer une contre-fiche de rappel élastique, de type élasto-hydraulique, à amortissement linéaire incorporé par laminage d'un fluide hydraulique, et qui rassemble dans un même dispositif la fonction de rappel élastique de la pale en traînée, assurée par cisaillement d'une masse de matériau élastiquement déformable, en caoutchouc naturel, synthétique ou de silicone, donnant la raideur en traînée, et la fonction d'amortissement, assurée par un amortisseur hydraulique, la contre-fiche selon l'invention permettant d'ajuster la fréquence propre en traînée de la pale correspondante et son amortissement sur ce mode d'oscillations angulaires, c'est-à-dire les caractéristiques dynamiques de traînée de la pale. Simultanément, comme on se propose d'utiliser comme fluide hydraulique un fluide de viscosité élevée, en particulier une huile de silicone, l'invention a pour but de proposer une contre-fiche de structure simplifiée, compatible avec l'utilisation d'un tel fluide de viscosité élevée, ce qui permet d'élargir les tolérances de fabrication, d'utiliser des clapets simples et économiques, d'accepter un jeu de laminage important, en raison de la viscosité importante du fluide hydraulique, d'où une influence réduite des tolérances de fabrication sur les caractéristiques d'amortissement, d'assurer dans de meilleures conditions l'étanchéité totale de l'amortisseur, et enfin d'éviter l'utilisation de pièces d'usure. Il en résulte que la contre-fiche selon l'invention doit présenter une meilleure fiabilité et une plus grande longévité ainsi qu'un coût de fabrication plus réduit que les contre-fiches à amortisseur à fluide hydraulique de faible viscosité qui sont actuellement utilisées pour assurer le rappel élastique et l'amortissement en traînée des pales sur les moyeux articulés des rotors sustentateurs d'hélicoptères.

A cet effet, la contre-fiche de rappel élastique de type élasto-hydraulique, à amortissement linéaire incorporé par laminage d'un fluide hydraulique, conforme à l'invention, est d'un type connu par le brevet français 2 592 696 pour relier une pale d'un rotor d'aérodyne à voilure tournante au moyeu du rotor et qui comprend :

- deux organes rigides, munis chacun de moyens d'articulation destinés à relier l'un des organes rigides à une première pièce, telle qu'une pale ou un organe de liaison de ladite pale à un moyeu du rotor, et l'autre organe rigide à une seconde pièce, telle que ledit moyeu du rotor,
- un amortisseur hydraulique, comprenant deux chambres d'amortisseur à volume variable en sens opposé, qui sont délimitées à l'intérieur d'un corps tubulaire solidaire de l'un des deux organes rigides, et séparées l'une de l'autre par une cloison transversale, formant piston, montée dans le corps tubulaire et également solidaire de l'un des organes rigides, et qui sont remplies d'un fluide hydraulique destiné à passer de l'une à l'autre des chambres d'amortisseur par au moins un passage étranglé de communication entre ces chambres, lorsque les organes rigides sont déplacés l'un par rapport à l'autre sensiblement selon l'axe général de la contre fiche, afin de produire un effet d'amortissement linéaire du déplacement relatif des organes rigides,
- un dispositif de compensation des dilatations thermiques du fluide hydraulique, comprenant une chambre auxiliaire contenant un volume de fluide hydraulique et en permanence en communication avec l'une au moins des chambres d'amortisseur au-travers d'un fond d'amortisseur délimitant partiellement la chambre auxiliaire et adjacent à une chambre d'amortisseur, et

– au moins un organe de rappel élastique, comprenant un manchon d'un matériau élastiquement déformable adhérisé de façon étanche par ses surfaces latérales respectivement interne et externe entre deux tronçons tubulaires rigides respectivement interne et externe, sensiblement coaxiaux suivant l'axe général de la contre-fiche, et solidaires chacun de l'un respectivement des deux organes rigides, de sorte que le manchon soit déformé en cisaillement lorsque les deux organes rigides sont déplacés l'un par rapport à l'autre sensiblement selon l'axe général de la contre-fiche, et que le manchon exerce sur lesdits organes rigides une action de rappel élastique tendant à les ramener dans une position relative initiale le manchon formant également un joint de fermeture étanche de l'amortisseur hydraulique.

Conformément à l'invention, une telle contre-fiche se caractérise en ce que les chambres d'amortisseur sont délimitées, en direction axiale, entre deux organes de rappel élastique dont les tronçons tubulaires rigides externes sont disposés longitudinalement de part et d'autre du corps tubulaire d'amortisseur, sensiblement coaxiaux l'un à l'autre et au corps tubulaire, et solidaires de ce dernier en formant une unique armature externe tubulaire solidaire de l'un des deux organes rigides, les tronçons tubulaires rigides internes des organes de rappel élastique étant sensiblement coaxiaux l'un à l'autre, disposés longitudinalement avec espacement et de part et d'autre de ladite cloison transversale de l'amortisseur, et solidaires l'un de l'autre ainsi que de l'autre organe rigide, dont l'armature tubulaire externe n'est pas solidaire, en formant une unique armature interne comportant une partie centrale qui traverse axialement les deux chambres d'amortisseur et solidarise les deux tronçons tubulaires internes l'un à l'autre en étant entourée par la cloison transversale, de forme annulaire et solidaire de l'armature externe et de sorte que les manchons de matériau élastiquement déformables des organes de rappel élastique assurent chacun la fermeture étanche de l'une respectivement des deux chambres d'amortisseur, du côté opposé à la cloison transversale, les chambres d'amortisseur étant en communication permanente l'une avec l'autre par un passage étranglé annulaire délimité par un jeu radial de laminage entre la cloison transversale et celle des armatures dont la cloison transversale n'est pas solidaire et au travers duquel est laminé le fluide hydraulique de viscosité élevée, contenu dans les chambres d'amortisseur et la chambre auxiliaire du dispositif de compensation des dilatations thermiques de ce fluide.

Une telle architecture permet de donner au jeu radial de laminage une valeur relativement importante en raison de la viscosité élevée du fluide hydraulique utilisé, de sorte que les tolérances de fabrication peuvent être relativement larges, sans entraîner d'effet défavorable sur les caractéristiques d'amortissement.

La définition de jeu radial de laminage sera facilitée si, avantageusement, la cloison transversale annulaire est solidaire de l'armature externe tubulaire et s'étend en saillie sensiblement radiale vers l'intérieur de la partie centrale, formant corps d'amortisseur, de cette armature externe, de sorte que le bord radial interne de la cloison annulaire délimite le passage annulaire de laminage autour de la partie centrale de l'armature interne.

Dans ce cas, et dans une forme de réalisation simplifiée de l'armature interne, celle-ci comprend une entretoise longitudinale qui maintient un écartement axial constant entre deux fonds d'amortisseur, dont chacun est adjacent à l'une respectivement des chambres d'amortisseur et solidaire de l'un respectivement des tronçons tubulaires internes, le passage annulaire de laminage étant alors délimité entre la cloison transversale annulaire et la surface latérale externe de l'entretoise. Cette réalisation permet de plus de faire en sorte que le jeu radial de laminage entre la cloison et l'armature dont la cloison n'est pas solidaire soit un jeu variable en fonction de la position axiale de la cloison par rapport à cette armature, afin d'assurer un amortissement variable en fonction de la charge. En effet, lorsque le jeu radial de laminage est délimité entre le bord radial interne de la cloison annulaire et la surface latérale externe de l'entretoise de l'armature interne, cette surface latérale externe peut être de forme sensiblement tronconique ou même biconique vers au moins une extrémité axiale de l'amortisseur.

Dans cette contre-fiche, la raideur nécessaire est apportée par les organes de rappel élastique, dont les manchons de matériau élastiquement déformable, en élastomère tel que du caoutchouc naturel, sont cisaillés d'une part en raison du déplacement relatif des armatures externe et interne, et, d'autre part, en raison de la pression hydraulique interne de l'amortisseur. La fonction amortissement est assurée par laminage de l'huile de viscosité élevée à travers le passage annulaire défini par le jeu radial entre la cloison transversale annulaire et l'armature dont cette cloison n'est pas solidaire, et, de préférence, entre la cloison fixée à l'armature externe et une entretoise de l'armature interne, comme présenté ci-dessus.

Pour éviter la transmission d'efforts trop importants d'un organe rigide à l'autre, en cas de charge axiale excessive de la contre-fiche, l'amortisseur hydraulique de celle-ci comporte au moins un dispositif d'écrètage de l'effort d'amortissement, comprenant au moins un clapet de décharge destiné à autoriser l'écoulement d'un débit de fuite de l'une des chambres d'amortisseur, qui est comprimée par un déplacement axial relatif des deux organes rigides, vers l'autre chambre d'amortisseur alors en dépression, dès que la pression différentielle entre les deux chambres d'amortisseur dépasse un seuil donné.

La présence d'un dispositif d'écrètage est importante car elle permet de dimensionner le jeu radial de laminage de façon à assurer un fort amortissement, se traduisant par un effort axial important, qui est nécessaire pour s'opposer au phénomène dit "résonnance sol", aux faibles amplitudes de déplacement relatif des organes rigides (de 0 à 1,5 mm par exemple), alors qu'un écrètage de l'effort d'amortissement est demandé au-delà de ces amplitudes afin de limiter en vol de croisière les efforts subis par les organes d'attache et d'articulation de la contrefiche sur la pale et sur le moyeu.

Afin que l'écrètage de l'effort d'amortissement soit assuré en compression comme en traction sur la contre-fiche, le dispositif d'écrètage d'effort comprend au moins deux clapets de décharge, dont l'un au moins autorise l'écoulement d'un débit de fuite d'une première chambre d'amortisseur vers la seconde chambre, lorsque la pression dans la première chambre est supérieure d'un premier seuil donné à la pression dans la seconde chambre, et s'oppose à tout écoulement du fluide de viscosité élevée en sens opposé, de la seconde chambre à la première, tandis qu'au moins un autre clapet de décharge autorise l'écoulement d'un débit de fuite de la seconde vers la première chambre lorsque la pression dans la second chambre est supérieure d'un second seuil donné à la pression dans la première chambre, et s'oppose à tout écoulement en sens opposé de la première vers la seconde chambre d'amortisseur. Le premier et le second seuils peuvent être différents, si l'on souhaite une action différenciée d'écrètage en compression et en traction, et ces deux seuils sont égaux l'un à l'autre si une telle action différenciée n'est pas souhaitée. En outre, l'utilisation d'une huile de viscosité élevée comme fluide hydraulique permet d'utiliser des clapets de décharge de structure simplifiée, par exemple sous la forme de clapets à obturateur mobile précontraint qui est normalement rappelé en position d'obturation d'au moins un orifice d'écrètage faisant communiquer les deux chambres d'amortisseur l'une avec l'autre, et écarté de la position d'obturation dès que la pression différentielle à laquelle il est sensible dépasse le seuil donné correspondant.

Dans un exemple de réalisation particulièrement simple et efficace, au moins un orifice d'écrètage est un trou percé dans la cloison transversale, et l'obturateur mobile correspondant est une lame-ressort dont au moins une partie, formant diaphragme, est logée dans l'une des chambres d'amortisseur et élastiquement précontrainte et appliquée en position d'obturateur du trou, contre la face de la cloison qui est tournée vers cette chambre d'amortisseur, le trou étant progressivement dégagé par flexion élastique de la lame-ressort vers l'intérieur de cette chambre d'amortisseur qui la loge au moins partiellement pour libérer un passage complémentaire au passage annulaire de laminage et augmenter la section de laminage du fluide de viscosité élevé, dès que la pression dans la chambre d'amortisseur considérée est inférieure à la pression dans l'autre chambre d'amortisseur d'une valeur égale au seuil donné correspondant. Avantageusement, pour faciliter le montage du clapet de décharge sur la cloison transversale, la lame-ressort de ce clapet de décharge est fixée contre la face de la cloison transversale qui est tournée vers la chambre d'amortisseur vers l'intérieur de laquelle la lame-ressort est fléchie à l'ouverture du clapet de décharge correspondant.

Afin de permettre un écrètage de l'effort d'amortisseur dans les deux sens de sollicitation de la contre-fiche, en traction comme en compression, le dispositif d'écrètage comprend avantageusement plusieurs trous percés dans la cloison transversale et à chacun desquels est associé un clapet de décharge à lame-ressort précontrainte, les clapets de décharge étant disposés de part et d'autre de la cloison, de sorte que les lames-ressorts de tous les clapets autorisant l'écoulement de débits de fluide dans un même sens d'une chambre d'amortisseur à l'autre, sont toutes fixées contre la face de la cloison transversale qui est tournée vers la chambre d'amortisseur dans laquelle ces lames-ressorts fléchissent.

Afin de faciliter la réalisation de l'amortisseur et le montage des lames-ressorts, il est avantageux que les lames-ressorts fixées sur une même face de la cloison transversale soient des lames-ressorts qui, en position non fléchie, s'étendent sensiblement radialement contre cette face. En outre, on facilite le montage simultané de plusieurs lames-ressorts si au moins deux d'entre elles, disposées d'un même côté de la cloison transversale, sont solidaires d'une embase commune, par rapport à laquelle les lames-ressorts sont destinées à fléchir élastiquement, et qui est fixée contre la face de la cloison qui est tournée vers ce côté.

La réalisation des lames-ressorts est encore facilitée si, en outre, toutes les lames-ressorts disposées d'un même côté de la cloison transversale sont d'une seule pièce, découpée dans une tôle métallique avec une couronne annulaire plane fixée de manière amovible contre une partie annulaire en position radiale externe sur la face correspondante de la cloison, et à l'intérieur du corps d'amortisseur, et si, simultanément, chaque lame-ressort est liée à ladite couronne par son pied, délimité entre deux évidements ménagés dans le bord radial interne de la couronne, chaque lame-ressort s'étendant vers l'intérieur de cette couronne jusqu'à son extrémité libre, formant diaphragme, on regard d'un trou d'écrètage dans la cloison.

De plus, afin de réduire le nombre de pièces nécessaires à la réalisation de la contre-fiche, et en particulier de l'amortisseur de celle-ci, des moyens de fixation communs peuvent être utilisés pour fixer contre la cloison au moins une lame-ressort disposée d'un côté de celle-ci et au moins une lame-ressort disposée de l'autre côté de cette cloison.

Selon le meilleur mode de réalisation des clapets d'écrètage, la cloison est percée d'un nombre pair de trous d'écrètage, de préférence régulièrement répartis en direction circonférentielle autour de l'axe de la contre-fiche, et une moitié du même nombre pair de lames-ressorts est disposée de chaque côté de la cloison, les lames-ressorts de chaque côté de cette dernière coopèrant avec une moitié du nombre de trous, pris en alternance en direction circonférentielle avec les trous coopérant avec les lames-ressorts disposées de l'autre côté de la cloison. En outre, les lames-ressorts sont réalisées en deux sous-ensembles identiques, fixés chacun sur l'une respectivement des deux faces de la cloison transversale par les mêmes ensembles vis-écrous, et ces deux sous-ensembles sont chacun constitués d'une seule pièce en tôle métallique, décalée par rapport à l'autre en direction circonférentielle d'un angle au centre égal au rapport de 360° par le nombre de trous d'écrètage percés dans la cloison transversale.

Si, dans le cadre de son application préférentielle à la liaison d'une pale de rotor au moyeu du rotor, il est nécessaire d'augmenter l'amortissement dans les cas de fortes charges et aux grandes amplitudes de déplacement axial relatif des deux organes rigides, il est alors avantageux, selon l'invention, que l'amortisseur hydraulique de la contre-fiche comporte de plus au moins un dispositif de saturation du débit de fluide d'au moins un clapet de décharge, ce dispositif de saturation limitant le débit de fuite, lorsque la pression différentielle entre les deux chambres d'amortisseur atteint un autre seuil donné, supérieur à celui ou à ceux pour lequel ou lesquels le ou les clapets de décharge s'ouvrent.

Dans une forme particulièrement simple de réalisation, le dispositif de saturation du débit de fuite d'au moins un clapet de décharge comprend un mécanisme comportant au moins une butée limitant la course de l'obturateur mobile du clapet de décharge lorsque cet obturateur est écarté de sa position d'obturation du ou des orifices d'écrètage correspondants. Dans un mode de réalisation avantageux, la butée est une cale fixée à une face de la cloison transversale et chevauchant au moins partiellement une lame-ressort, constituant l'obturateur du clapet de décharge considéré, de sorte que la lame-ressort soit au moins en partie logée entre la cale et la face précédemment mentionnée de la cloison, et de sorte que les débattements en flexion de la lame-ressort soient limités par appui contre cette cale.

Dans cet exemple de réalisation, il est avantageux, pour limiter encore le nombre de pièces de l'amortisseur, qu'au moins une lame-ressort et au moins une cale formant butée limitant la flexion de cette lame-ressort soient fixées contre la cloison par des moyens de fixation communs. En particulier, lorsque les lames-ressorts disposées de chaque côté de la cloison sont d'une seule pièce avec une couronne annulaire, comme présenté ci-dessus, il est avantageux qu'une cale formant une unique butée pour toutes les lames-ressorts disposées d'un même côté de la cloison, soient réalisée sous la forme d'une rondelle annulaire rigidement appliquée contre ladite couronne annulaire dont sont solidaires ces lames-ressorts, la rondelle annulaire pouvant de préférence comporter également des bras radiaux, en saillie vers l'intérieur et recouvrant les lames-ressorts en présentant en regard de ces dernières des surfaces d'appui conformées selon la déformée en flexion des lames-ressorts pour une pression différentielle égale au seuil pour lequel doit intervenir la saturation des débits de fuite.

A l'aide d'une telle contre-fiche, on peut obtenir un niveau d'amortissement qui soit important aux faibles amplitudes (inférieures à 1,5 mm par exemple de déplacement relatif entre les armatures rigides liées chacune à l'un des organes rigides entre lesquels la contre-fiche est interposée) comme aux grandes amplitudes (supérieures à par exemple 4,5 mm dans les mêmes conditions), ce qui correspond à un comportement satisfaisant de l'appareil respectivement au sol et en vol lorsque les pales sont soumises à de fortes charges. Par contre, le niveau d'effort subi par la contre-fiche est alors très pénalisant pour la durée de vie des pièces mécaniques de sa structure. Comme les amplitudes intermédiaires (par exemple de 1, 5 à 4, 5 mm de déplacement relatif des armatures) correspondent à une configuration de vol sensiblement stabilisée, correspondant à la vitesse de croisière pour laquelle un fort niveau d'amortissement n'est pas nécessaire, il apparaît très souhaitable de diminuer le niveau d'effort subi par la contre-fiche aux amplitudes intermédiaires. Ainsi, le choix initial d'orifices d'écrètage de section transversale relativement grande, coopèrant avec des lames-ressorts dont le débattement sera limité après une course en flexion déterminée pour saturer le débit de fuite au travers de chaque orifice d'écrètage, permettra d'obtenir le faible niveau d'amortissement suffisant pour les vols de croisière. Par contre, pour augmenter la pente de la courbe donnant l'effort d'amortissement en fonction de la course de déplacement relatif des armatures de la contre-fiche, à partir d'un seuil inférieur d'une plage de grande amplitude (par exemple 4, 5 mm) il est avantageux que, selon l'invention, l'amortisseur hydraulique soit en plus équipé d'au moins un dispositif de coupure d'écrètage, piloté en pression, et commandant l'interruption du débit de fuite d'au moins un clapet de décharge lorsque la pression différentielle entre les deux chambres d'amortisseur atteint encore un autre seuil donné, supérieur aux différents seuils précédemment mentionnés.

De préférence, afin que ce dispositif de coupure d'écrêtage soit de structure simple et peu encombrante, il comprend un clapet de fermeture muni d'un obturateur mobile déplacé d'une position de dégagement d'au moins un orifice d'écrêtage d'au moins un clapet de décharge à une position d'obturation du ou des orifices d'écrêtage de ce clapet, lorsque la pression différentielle atteint le seuil supérieur précédemment mentionné.

Selon le meilleur mode de réalisation connu, le clapet de fermeture est porté par la cloison transversale de sorte que son obturateur mobile vienne obturer au moins un trou d'écrêtage percé dans cette cloison. En outre, l'obturateur mobile du clapet de fermeture est avantageusement monté en tiroir coulissant avec étanchéité dans un alésage transversal ménagé dans la cloison et qui coupe un trou d'écrêtage, l'alésage transversal étant, de part et d'autre du tiroir, en communication permanente avec l'une respectivement des deux chambres d'amortisseur, de sorte que les pressions dans ces chambres soient constamment appliquées sur les extrémités du tiroir qui est rappelé élastiquement en position de dégagement du trou d'écrêtage par au moins un organe élastique, de préférence également logé dans l'alésage transversal, le tiroir étant repoussé à l'encontre de l'organe élastique en position d'obturation du trou d'écrêtage lorsque la pression différentielle entre les deux chambres atteint le seuil supérieur précédemment mentionné et développe sur le tiroir un effort supérieur à la précontrainte de l'organe élastique de rappel. De la sorte, si un dispositif de coupure d'écrêtage est combiné à chaque clapet de décharge, l'amortisseur hydraulique comporte un dispositif de rétablissement du laminage initial par le passage annulaire de laminage, dès que la pression différentielle entre les deux chambres dépasse le seuil supérieur précité.

Cependant, dans une contre-fiche de cette structure, il est possible que la déformation en cisaillement des manchons de matériau élastiquement déformable des organes de rappel élastique, sous l'effet de la pression dynamique interne de l'amortisseur, entraîne une chute des caractéristiques d'amortissement qui soit trop importante pour être admise, compte-tenu des charges subies par la pale de rotor que la contre-fiche est destinée à relier au moyeu du rotor correspondant.

Dans ce cas, et selon une caractéristique propre à l'invention, chacune des deux chambres d'amortisseur délimitées de part et d'autre de la cloison transversale dans le corps tubulaire d'amortisseur est avantageusement subdivisée, par une paroi transversale rigide et solidaire de celle des deux armatures dont la cloison transversale n'est pas solidaire, en deux chambres dont l'une, en position axiale interne et adjacente à la cloison transversale, est une chambre de travail active en pression dynamique, et dont l'autre, en position axiale externe, et directement adjacente au manchon élastiquement déformable du côté correspondant, est une chambre de compensation des variations de volume liées aux déformations du matériau élastiquement déformable, et qui est en communication permanente avec l'autre chambre de même nature en position axiale externe par au moins une canalisation de liaison. Ceci permet simultanément de compenser les variations de volume dues aux déformations du matériau élastiquement déformable et de ne pas faire travailler ce matériau élastiquement déformable en pression. Une telle canalisation de liaison des deux chambres en position axiale externe, c'est-à-dire des deux chambres adjacentes aux deux manchons élastiquement déformable, peut être une tuyauterie extérieure au corps d'amortisseur auquel elle se raccorde par ses deux extrémités. Mais il est également possible que cette canalisation de liaison soit formée par au moins un passage essentiellement longitudinal ménagé dans l'épaisseur du corps d'amortisseur.

Dans le mode de réalisation avantageusement simple, dans lequel la cloison transversale est solidaire du corps d'amortisseur, et donc de l'armature tubulaire externe, les parois transversales assurant la séparation entre les chambres actives en pression dynamique et les chambres adjacentes au matériau élastiquement déformable peuvent être des coupelles sensiblement en forme de disque et maintenues en positions fixes et écartées axialement l'une de l'autre sur l'armature interne par une entretoise de cette dernière, l'entretoise appliquant chacune des coupelles contre l'un respectivement de deux fonds d'amortisseur sensiblement radiaux, dont chacun est solidaire de l'un respectivement des deux tronçons tubulaires internes des organes de rappel élastique. Avantageusement cependant, ces parois transversales sont des pistons montés coulissant avec étanchéite contre celle des deux armatures dont ils ne sont pas solidaires, c'est-à-dire contre celle des armatures dont la cloison transversale est solidaire, donc, de préférence, l'armature tubulaire externe. Dans ce cas, les pistons sont solidaires chacun de l'un respectivement des tronçons tubulaires internes et coulissent avec étanchéité à l'intérieur du corps tubulaire d'amortisseur.

Dans une telle configuration, l'un au moins des deux pistons peut être d'une seule pièce avec un tronçon tubulaire interne ainsi qu'avec un fond de fermeture de l'extrémité axiale interne de ce dernier. Mais il est également possible que l'un au moins des deux pistons soit réalisé par l'assemblage amovible d'une bride radiale externe, solidaire d'un tronçon tubulaire interne, et d'une bride radiale externe solidaire d'un fond rapporté sur la partie d'extrémité axiale interne de ce tronçon tubulaire interne.

De plus, le dispositif de compensation des dilatations thermiques du fluide de viscosité élevée peut être avantageusement intégré dans la contre-fiche si ce dispositif de compensation est agencé en accumulateur, dans lequel la chambre auxiliaire est remplie de fluide et pressurisée par l'action d'un dispositif de pressurisation assurant le remplissage sous pression statique des deux chambres d'amortisseur. Afin d'isoler la chambre auxiliaire des pulsations de pression dynamique dans les chambres d'amortisseur, la communication permanente entre au moins une chambre d'amortisseur et la chambre auxiliaire est avantageusement assurée par un canal calibré sur au moins une partie de sa longueur, et constituant un filtre des pulsations de pression dynamique. Ce canal calibré peut traverser le fond d'amortisseur qui délimite partiellement la chambre auxiliaire en débouchant directement dans la chambre d'amortisseur dont ce fond est adjacent. Cependant, dans le cas où la cloison transversale est solidaire de l'armature tubulaire externe et délimite le jeu annulaire de laminage permanent entre son bord radial interne et l'armature interne, la partie calibrée du canal peut être au moins un perçage radial ménagé dans la partie centrale de l'armature interne et débouchant, d'un côté, dans le passage annulaire de laminage et, de l'autre côté, dans un conduit longitudinal s'étendant dans l'armature interne, jusqu'au delà d'un fond d'amortisseur solidaire d'un tronçon tubulaire interne, et débouchant dans la chambre auxiliaire logée dans ce tronçon tubulaire interne.

Cependant, dans le cas où les chambres d'amortisseur sont subdivisées en chambres de travail actives en pression dynamique et en chambres de compensation reliées l'une à l'autre par au moins un passage longitudinal ménagé dans le corps d'amortisseur, la partie calibrée du canal peut comprendre au moins un perçage essentiellement radial, ménagé dans la cloison transversale et annulaire, et débouchant dans un passage longitudinal percé dans l'épaisseur du corps d'amortissement, et dans ledit passage annulaire de laminage.

Quelle que soit la disposition du canal calibré, la chambre auxiliaire est avantageusement également isolée des pulsations de pression dynamique dans les chambres d'amortisseur par, d'une part, un clapet de surpression, taré à une pression d'ouverture supérieure à la pression maximale de fonctionnement normal de l'amortisseur, pour autoriser un écoulement de fluide d'au moins une chambre d'amortisseur vers la chambre auxiliaire dès que la pression dans ladite chambre d'amortisseur est supérieure à la pression d'ouverture, et, d'autre part, par un clapet de gavage, taré à une autre pression d'ouverture, inférieure à la pression du fluide dans la chambre auxiliaire sous l'effet du dispositif de pressurisation, afin d'assurer une réalimentation constante des chambres d'amortisseur qui doivent toujours être remplies.

Dans une forme de réalisation simple, le clapet de surpression est un clapet à au moins une lame-ressort logée dans la chambre auxiliaire et précontrainte contre le fond d'amortisseur qui délimite partiellement cette chambre auxiliaire, de sorte que la lame-ressort soit en position d'obturation d'au moins un orifice traversant ce fond d'amortisseur et mettant la chambre auxiliaire en communication avec la chambre d'amortisseur adjacente à ce fond.

De manière similaire, le clapet de gavage est avantageusement un clapet à au moins une lame-ressort logée dans la chambre d'amortisseur adjacente au fond d'amortisseur qui délimite partiellement la chambre auxiliaire, et cette lame-ressort est précontrainte contre ce fond d'amortisseur en position d'obturation d'au moins un orifice qui traverse ce fond et met la chambre auxiliaire en communication avec la chambre d'amortisseur logeant la lame-ressort correspondante.

Dans l'accumulateur intégré à la contre-fiche pour assurer la compensation des dilatations thermiques du fluide de viscosité élevée, la chambre auxiliaire est avantageusement délimitée partiellement par un fond élastiquement déformable, constitué par une paroi en élastomère assurant l'étanchéité et rappelée élastiquement en position de compression du fluide de la chambre auxiliaire, ou encore par une membrane souple et étanche, soumise à l'action d'un organe élastique du dispositif de pressurisation. Ce dernier peut être un dispositif pneumatique dont l'organe élastique est un volume de gaz sous pression et logé dans une chambre pneumatique partiellement délimitée par la membrane souple et étanche.

Dans ce cas, la chambre auxiliaire est de préférence délimitée à l'intérieur du tronçon tubulaire interne d'un organe de rappel élastique, entre un fond de fermeture de l'extrémité axiale interne de ce tronçon et la membrane étanche, de forme cupulaire et fixée de manière étanche par son bord périphérique dans ce tronçon tubulaire interne, la chambre pneumatique sous pression étant alors délimitée entre la membrane et un couvercle de fermeture de l'extrémité axiale externe de ce même tronçon tubulaire interne.

Pour indiquer le niveau de remplissage de la chambre auxiliaire, le dispositif de compensation ainsi réalisé peut avantageusement comporter un indicateur muni d'une tige-témoin, dont une extrémité est solidaire de la partie centrale de la membrane et qui est montée coulissante axialement dans un tube au moins partiellement transparent, faisant saillie à l'extérieur du couvercle, sur lequel est de préférence également montée une valve de gonflage de la chambre pneumatique.

Cependant, le dispositif de pressurisation peut également être mécanique, auquel cas son organe élastique, dans une forme simple de réalisation, est soit un ressort repoussant un piston contre la membrane souple et étanche, soit un anneau élastomérique assurant à la fois l'étanchéité et l'élasticité du dispositif, et formant un fond élastiquement déformable de la chambre auxiliaire comme déjà mentionné précédemment.

Avantageusement, dans le premier cas, la chambre auxiliaire est délimitée à l'intérieur d'un tronçon tubulaire interne d'un organe de rappel élastique, entre un fond d'amortisseur solidaire de l'extrémité axiale interne de ce tronçon tubulaire et la membrane, du type à déroulement, et dont la partie centrale est appliquée contre le piston monté coulissant axialement sans étanchéité dans ce tronçon tubulaire, qui loge également le ressort, le piston de pressurisation de la membrane étant guidé dans ses déplacements axiaux par un axe central qui lui est solidaire et qui est de plus monté axialement coulissant, avec un faible jeu radial, à l'intérieur d'une entretoise tubulaire maintenant un écartement axial constant entre le fond d'amortisseur précédemment mentionné et un autre fond d'amortisseur, solidaire de l'extrémité axiale interne du tronçon tubulaire interne de l'autre organe élastique de rappel.

Dans cet exemple également, le dispositif de compensation des dilatations comporte avantageusement un indicateur du niveau de remplissage de la chambre auxiliaire, cet indicateur comprenant une tige-témoin solidaire du piston de pressurisation et s'étendant longitudinalement vers l'extérieur en traversant un fond qui ferme l'extrémité axiale externe du tronçon tubulaire interne logeant la membrane, le piston et le ressort, et contre lequel ce ressort de poussée du piston prend appui.

En ce qui concerne la structure générale de la contre-fiche, et selon un premier exemple préféré de réalisation, l'armature tubulaire externe comprend l'assemblage rigide et démontable de deux cylindres de même section transversale, disposés dans le prolongement axial l'un de l'autre et sensiblement bout à bout par des brides d'extrémité en regard et entre lesquelles est enserrée au moins une partie radiale périphérique de la cloison transversale, de sorte que les parties d'extrémité adjacentes des deux cylindres forment le corps tubulaire d'amortisseur et que l'autre partie d'extrémité de chacun d'eux forme le tronçon tubulaire externe d'un organe de rappel élastique l'un des deux cylindres comportant, de plus, de préférence à son extrémité opposée à celle par laquelle il est adjacent à l'autre cylindre, une autre bride d'assemblage rigide et démontable à l'organe rigide qui est solidaire de l'armature externe, et de préférence agencé en cloche à embout muni d'un oeil de liaison sur rotule, constituant les moyens d'articulation correspondants.

Cependant, selon un autre exemple préféré de réalisation, l'armature tubulaire externe peut comprendre un corps central cylindrique d'une seule pièce avec la cloison transversale et formant corps tubulaire d'amortissement en présentant deux parties d'extrémité axiale dans chacune desquelles est engagé et retenu un cylindre formant le tronçon tubulaire externe de l'un des organes de rappel élastique, l'une des parties d'extrémité axiale étant simultanément fixée rigidement à l'organe rigide solidaire de l'armature externe et de préférence agencé en cloche à embout muni d'un oeil de liaison sur rotule constituant, dans ce cas également, les moyens d'articulation correspondants.

Pour ce qui concerne l'armature interne, celle-ci comprend avantageusement, en plus des deux tronçons tubulaires internes, qui sont cylindriques, au moins un fond radial percé d'un trou central et solidaire d'un tronçon tubulaire interne, ainsi qu'au moins un support axial et une entretoise axiale, l'entretoise maintenant au moins un fond radial contre une butée radiale portée par le support axial qui traverse avec étanchéité le trou central du fond radial.

Cette butée radiale peut être une butée d'une seule pièce avec le support axial ou encore une butée amovible, comportant par exemple un écrou vissé sur une partie filetée du support axial correspondant. Ce dernier peut dans ce cas être une tige axiale engagée dans l'entretoise qui est alors tubulaire. Une telle tige axiale peut être d'une seule pièce avec l'organe rigide qui est solidaire de l'armature interne et, éventuellement, conformé en embout présentant un oeil de liaison sur rotule formant les moyens d'articulation correspondants.

Mais il est également possible que le support axial soit une portion d'extrémité axiale de l'entretoise, cette portion d'extrémité axiale étant alors avantageusement partiellement filetée et raccordée au reste de l'entretoise par un épaulement contre lequel un fond radial est avantageusement serré par un écrou vissé sur cette portion d'extrémité axiale de l'entretoise. De plus, l'un des deux fonds radiaux au moins peut être d'une seule pièce avec un tronçon tubulaire interne d'un organe de rappel élastique. Cependant, il est également possible que l'un au moins des fonds radiaux soit rapporté sur un tel tronçon tubulaire interne, ce fond radial étant par exemple d'une seule pièce avec l'entretoise. Enfin, l'organe rigide solidaire de l'armature interne peut être conformé en cloche à embout muni d'un oeil sur rotule et solidaire du tronçon tubulaire interne de l'un des organes de rappel élastique.

Dans ces différents cas, on obtient des contre-fiches dont les coûts de fabrication sont réduits, en raison d'une structure constituée par l'assemblage de pièces présentant de larges tolérances de fabrication tout en garantissant une étanchéité totale de l'amortisseur, avec une compensation intégrée des dilatations thermiques du fluide de viscosité élevée, qui permet d'utiliser des clapets de structure simple et fiable, sans pièce d'usure, ce qui garantit une bonne fiabilité et une grande longévité. En outre, les fluides de viscosité élevé que l'on peut utiliser ont l'avantage de présenter des caractéristiques bien plus stables en fonction de la température que les fluides hydrauliques usuellement utilisés dans des amortisseurs de qualité aéronautique.

La présente invention sera mieux comprise, et d'autres avantages et caractéristiques de l'invention ressortiront de la description donnée ci-dessous, à titre non limitatif, de plusieurs exemples de réalisation décrits en référence aux dessins annexés sur lesquels :

La figure 1 est une vue en coupe longitudinale et axiale d'un premier exemple de contre-fiche selon l'invention,

La figure 2 est une vue schématique en coupe transversale selon II-II de la figure 1,

La figure 3 est une vue partielle à plus grande échelle d'un détail de la coupe axiale et longitudinale de la figure 1,

La figure 4 est une vue en plan représentant, en traits pleins, un ensemble d'obturation à quatre lames-ressorts constituant les obturateurs mobiles de quatre clapets de décharge constituant un dispositif d'écrêtage disposé d'un côté de la cloison de la contre-fiche des figures 1 à 3, la figure 4 représentant également, en traits interrompus, une butée limitant la flexion des quatre lames-ressorts.

La figure 5 est une vue partielle analogue à la figure 3 et représentant le fonctionnement d'un clapet de décharge à lame-ressort,

La figure 6 est une vue partielle à plus grande échelle d'une partie de la coupe de la figure 1 correspondant à l'accumulateur de compensation des dilatations thermiques du fluide hydraulique,

La figure 7 est encore une vue partielle à plus grande échelle d'un détail d'une variante de la figure 1 assurant un amortissement variable en fonction de la charge de l'amortisseur,

La figure 8 est une vue en coupe axiale et longitudinale analogue à la figure 1 d'un second exemple de contre-fiche selon l'invention,

La figure 9 est une vue en coupe axiale et longitudinale analogue à la figure 1 d'un troisième exemple de contre-fiche selon l'invention,

La figure 10 est une vue partielle en coupe axiale de la figure 9, représentant à plus grande échelle une partie de la figure 9 correspondant à l'amortisseur hydraulique de la contre-fiche,

La figure 11 représente également en coupe partielle et à plus grande échelle un détail de la contre-fiche représentée sur la figure 9, au niveau de sa cloison transversale, et

La figure 12 est une vue partielle en coupe axiale et longitudinale d'une variante de contre-fiche selon les figures 9 et 11.

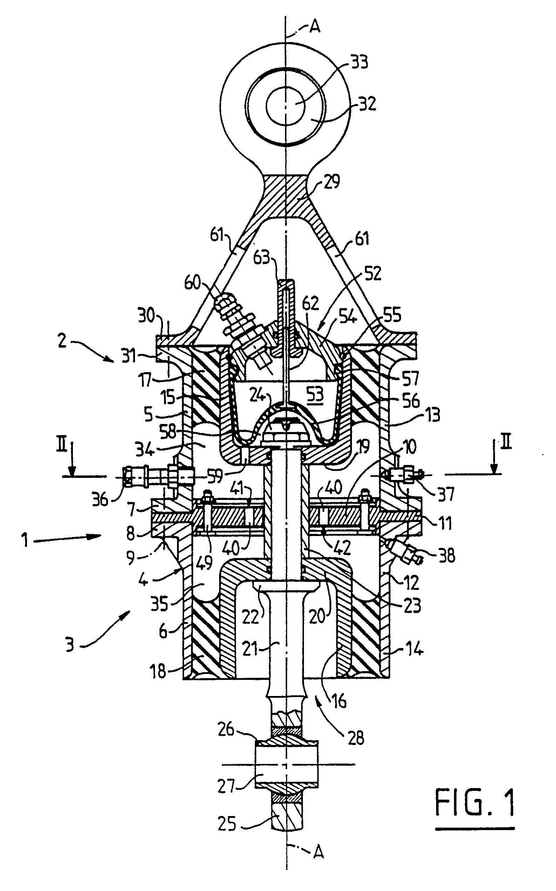

La contre-fiche de rappel élastique de type élastohydraulique, à amortissement linéaire incorporé, qui est représentée sur la figure 1 comprend essentiellement un amortisseur hydraulique 1, à laminage d'un fluide de viscosité élevée, qui est disposé en position centrale entre deux ressorts de rappel élastique 2 et 3 montés en série axiale l'un avec l'autre et de part et d'autre de l'amortisseur 1. L'ensemble est disposé dans une armature externe rigide et tubulaire 4, constituée par l'assemblage boulonné et démontable de deux troncs de cylindre tubulaires métalliques et de section transversale circulaire 5 et 6, ayant des alésages internes de même diamètre. Les deux troncs de cylindre 5 et 6 sont coaxiaux autour de l'axe longitudinal A-A de la contre-fiche et disposés dans le prolongement axial l'un de l'autre en étant sensiblement bout à bout par deux brides radiales externes 7 et 8, dont chacune est d'une seule pièce avec l'extrémité axiale interne de l'un des troncs de cylindre 5 et 6, c'est-à-dire l'extrémité axiale la plus proche de l'autre tronc de cylindre. La solidarisation des deux troncs de cylindre 5 et 6 est assurée par les deux brides 7 et 8 qui sont serrées l'une vers l'autre par une couronne d'ensemble vis-écrous schématiquement représentés par leurs traits d'axes 9 et régulièrement répartis sur la périphérie des brides 7 et 8 et autour de l'axe A-A, et les deux brides 7 et 8 enserrent entre elles une collerette annulaire périphérique et amincie 11 d'une cloison transversale rigide et annulaire 10, qui est ainsi solidarisée à l'armature externe 4. De préférence les vis de fixation des brides 7 et 8 traversent également cette collerette 11. La cloison 10 s'étend radialement à l'intérieur d'un corps tubulaire d'amortisseur 12, formé par les parties d'extrémité axiale interne des cylindres 5 et 6, qui s'étendent sur environ la moitié de la dimension axiale de ces cylindres 5 et 6, et par lesquelles ces cylindres 5 et 6 sont sensiblement adjacents l'un à l'autre, et la partie radiale interne de la cloison 10, de plus grande épaisseur axiale que sa collerette 11 en position radiale externe, est logée et centrée dans les alésages des cylindres 5 et 6 de sorte qu'elle est coaxiale aux cylindres 5 et 6 autour de l'axe A-A. La cloison 10 constitue ainsi un piston d'amortisseur, annulaire et solidaire du corps tubulaire 12 de l'amortisseur 1, dont la description de la structure sera complétée ci-dessous.

Chacun des deux ressorts de rappel 2 et 3 est constitué d'un tronçon cylindrique tubulaire externe respectivement 13 ou 14, délimité par la partie d'extrémité axiale externe du cylindre 5 ou 6 du côté correspondant, c'est-à-dire par la partie d'extrémité axiale s'étendant sur environ la moitié de la dimension axiale du cylindre 5 ou 6 et du côté opposé à la cloison 10, ainsi que d'un tronçon cylindrique tubulaire métallique et interne respectivement 15 ou 16, de section transversale circulaire, qui est relié au tronçon cylindrique externe correspondant 13 ou 14 par un manchon tubulaire 17 ou 18 d'un matériau élastiquement déformable. Chaque manchon 17 ou 18, réalisé par moulage, est en élastomère, par exemple en caoutchouc naturel, et adhérisé par vulcanisation de ses surfaces latérales respectivement interne et externe respectivement contre la surface latérale externe du tronçon cylindrique interne 15 ou 16 correspondant et contre la surface latérale interne du tronçon cylindrique externe 13 ou 14 correspondant. De la sorte, chaque manchon d'élastomère 17 ou 18 peut se déformer élastiquement en cisaillement entre les deux tronçons cylindriques tubulaires et rigides qu'il relie coaxialement l'un à l'autre. Chaque tronçon cylindrique interne 15 ou 16 est d'une seule pièce, à son extrémité axiale interne, avec un fond radial 19 ou 20, percé d'un alésage central et axial présentant une gorge interne périphérique logeant un joint d'étanchéité torique, de sorte que les fonds 19 et 29 peuvent être montés avec étanchéité sur une tige centrale et axiale 21. Cette tige 21 présente un épaulement 22, formant une butée fixe sur la tige 21 et contre laquelle le fond de fermeture 20 du tronçon cylindrique interne 16 est maintenu appliqué et axialement écarté de la cloison 10 par une entretoise tubulaire 23, qui est engagée autour de la tige 21 et centrée autour de l'axe A-A en traversant avec un jeu radial calibré l'alésage central de la cloison transversale et annulaire 10. Cette entretoise tubulaire 23 maintient également le fond de fermeture 19 du tronçon cylindrique interne 15 axialement écarté de la cloison 10 et dans une position axiale fixe sur la tige 21 par coopération avec une butée amovible, constituée par un écrou 24 qui est vissé et goupillé sur une extrémité filetée de la tige 21 qui s'étend au-delà du fond 19, à l'intérieur du tronçon cylindrique interne 15 du ressort de rappel 2. De l'autre côté, au-delà de la butée fixe 22, la tige 21 se prolonge axialement dans le tronçon cylindrique interne 16 du ressort de rappel 3, et au-delà de l'extrémité axiale externe de ce tronçon interne 16, par un embout rigide 25, équipé d'une rotule 26 à oeil de liaison 27.

Ainsi, le tronçon cylindrique interne 16 avec son fond 20, l'entretoise 23 et le tronçon cylindrique interne 15 avec son fond 19 peuvent être successivement empilés sur la tige 21, puis fixés en position axiale sur cette tige 21 par le vissage de l'écrou 24, de façon à constituer avec cette tige 21 une armature axiale interne et rigide 28, qui peut être attachée et articulée par son embout 25 à oeil 27 sur rotule 26 au moyeu d'un rotor d'hélicoptère.

Du côté de l'autre extrémité axiale de la contre-fiche, l'armature tubulaire externe 4 est solidaire d'un embout 29, en forme de cloche sensiblement tronconique, dont la grande base est ouverte et présente une bride radiale externe 30 fixée de manière amovible par boulonnage, à l'aide d'une couronne d'ensemble vis-écrous (non représentés) contre une bride radiale externe 31 de l'extrémité axiale externe du tronçon de cylindre 5, tandis que la petite base de l'embout en cloche 29 est fermée et porte une rotule 32 à oeil de liaison 33, par laquelle l'armature externe 4 de la contre-fiche peut être attachée et articulée au pied d'une pale du rotor ou à manchon ou à une chape de raccordement du pied de pale au moyeu du rotor.

Dans la contre-fiche, dont les principaux éléments de structure viennent d'être décrits et telle que les deux tronçons cylindriques 15 et 16, de même diamètre externe, les deux troncs de cylindre externe 5 et 6, l'entretoise 23 et la tige 21 sont coaxiaux autour de l'axe A-A, deux chambres d'amortisseur 34 et 35 sont délimitées dans le corps d'amortisseur 12, de part et d'autre de la cloison 10, et chacune de ces chambres est fermées axialement, du côté opposé à la cloison 10, par l'un des ressorts de rappel élastique 2 et 3. Les deux chambres 34 et 35 sont remplies d'une huile de viscosité élevée, qui est introduite dans l'amortisseur 1 par une valve de remplissage 36, montée dans le tronc de cylindre 5 et débouchant dans la chambre 34, le remplissage étant facilité par deux vis de purge 37 et 38 montées respectivement dans les troncs de cylindre 5 et 6 pour obturer et libérer des évents débouchant respectivement dans les chambres 34 et 35.

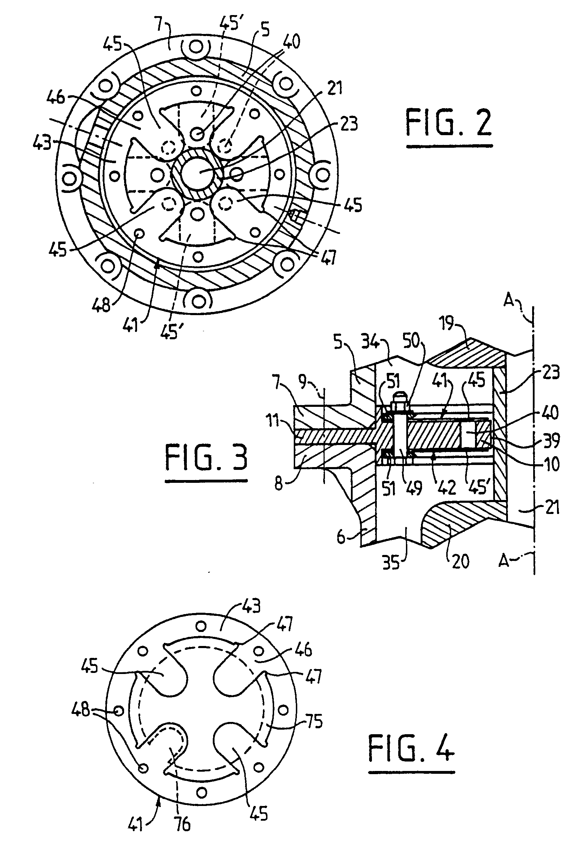

L'huile de viscosité élevée utilisée est une huile de silicone telle que celle commercialisée par la société RHONE-POULENC sous la dénomination RHODORSIL 47 V 12500, dont la viscosité varie en fonction de la température dans une bien moindre mesure que les huiles minérales ou organiques de plus faible viscosité, habituellement utilisées comme huile hydraulique dans les amortisseurs de qualité aéronautique. En plus de sa compatibilité avec le caoutchouc naturel utilisé pour réaliser les manchons d'élastomère 17 et 18, qui ferment chacun de manière étanche l'une des chambres d'amortisseur 34 et 35, une telle huile de silicone, dont la viscosité à une température de 25°C est de l'ordre de 12.500 centistokes, a pour avantage que pour un écart de température de 100°C, sa viscosité varie dans un rapport de 8 au lieu de 40 pour un fluide hydraulique usuel, ce qui procure des caractéristiques d'amortissement bien plus stables en fonction de la température. L'utilisation de cette huile de silicone de viscosité élevée permet également d'utiliser comme passage étranglé de laminage d'huile, assurant une communication permanente entre les deux chambres d'amortisseur 34 et 35, dont les volumes internes varient en sens opposé, lorsque les armatures interne 28 et externe 4 sont déplacées axialement l'une par rapport à l'autre par une charge axiale en compression ou en traction sur la contre-fiche, le passage annulaire délimité par le jeu radial relativement important, par exemple de l'ordre de 1 mm, entre le bord radial interne de la cloison annulaire 10 et la surface latérale externe de l'entretoise 23. L'importance de ce jeu radial, qui délimite le passage annulaire de laminage axial, représenté à plus grande échelle en 39 sur la figure 3, permet d'augmenter les tolérances de fabrication, en particulier au niveau de l'alésage central de la cloison 10 et du diamètre externe de l'entretoise 23, sans influence notablement défavorable sur les caractéristiques d'amortissement.

L'amortissement est assuré par laminage de l'huile au travers du passage annulaire 39, entre la cloison 10 et l'entretoise 23 qui constitue la partie centrale de l'armature interne 28, l'huile s'écoulant de celle des deux chambres 34 et 35 qui est comprimée par le déplacement axial relatif des armatures 4 et 28, vers l'autre chambre, en dépression relative, tandis que le rappel élastique des deux armatures 4 et 28 vers leur position relative initiale est assuré par les deux ressorts 2 et 3, avec une raideur déterminée par les tampons d'élastomère 17 et 18, et à laquelle s'ajoute la raideur due à la compressibilité de l'huile de silicone, les manchons d'élastomère 17 et 18 étant déformés en cisaillement non seulement en raison du déplacement relatif des armatures 4 et 28, mais également en raison de la pression hydraulique interne de l'amortisseur 1.

Comme le passage de laminage 39 est défini par le jeu radial précité et par une longueur qui correspond à la dimension axiale de la cloison 10, les dimensions radiale et axiale de ce passage 39 peuvent être choisies pour assurer le fort amortissement, se traduisant par une effort axial important sur la contre-fiche, qui est nécessaire pour lutter contre le phénomène de résonance-sol, avant le décollage et après l'atterrissage, aux faibles amplitudes de déplacement axial relatif des armatures 4 et 28, par exemple jusqu'à 1,5 mm. Mais, au-delà de ce premier seuil d'amplitude, il est nécessaire d'écrêter l'effort d'amortissement, afin de limiter, en vol de croisière, les sollicitations dynamiques dans la contre-fiche et ses attaches sur la pale et le moyeu.

L'amortisseur 1 est en conséquence équipé d'un dispositif d'écrêtage de l'effort d'amortissement, ce dispositif comportant des clapets de décharge à obturateurs mobiles qui dégagent une section de laminage complémentaire, venant s'ajouter à celle du passage annulaire de laminage 39 en permanence ouvert, pour mettre en communication les deux chambres d'amortisseur 34 et 35, dès que la pression différentielle entre ces deux chambres atteint un premier seuil de pression, correspondant à un effort permettant d'obtenir le seuil d'amplitude de déplacement axial relatif des deux armatures 4 et 28, au-delà duquel on souhaite réduire l'effort transmis par la contre-fiche de l'un des embouts rotulés 25 et 29 à l'autre.

Ces clapets de décharge sont disposés de part et d'autre de la cloison 10 et leurs obturateurs mobiles sont constitués par les lames-ressorts précontraintes, dont une partie d'extrémité libre forme un diaphragme venant obturer des orifices de communication entre les chambres 34 et 35, ces orifices étant réalisés sous la forme de trous percés dans la cloison 10, tant que la pression différentielle entre les chambres 34 et 35 est inférieure au premier seuil de pression donnée, et dégageant par flexion élastique ces trous pour autoriser des débits de fuite de la chambre 34 ou 35 qui est comprimée vers l'autre chambre, en dépression, dès que la différence de pression entre ces deux chambres est supérieure à ce seuil de pression, le niveau d'écrêtage étant ajusté et adapté à la section de passage des orifices d'écrêtage, donc au diamètre des trous s'ils sont circulaires et au nombre de ces trous, ainsi qu'à la précontrainte des lames-ressorts. La diminution de l'effort transmis par l'amortisseur est ainsi obtenue, à partir d'une certaine pression différentielle, donc d'un certain effort s'exerçant sur les lamelles-ressorts, par la flexion de ces lamelles qui libèrent pour l'huile de silicone un passage complémentaire au passage annulaire 39, et l'ouverture de ce passage complémentaire est d'autant plus grande que l'effort à atténuer est important.

Les clapets de décharge disposés d'un côté et de l'autre de la cloison 10 peuvent être sensibles à un même seuil de pression différentielle entraînant la flexion de leurs lames-ressorts, mais il est également possible que les clapets de décharge disposés d'un seul côté de la cloison 10, et autorisant des débits de fuite dans un sens axial seulement, soient sensibles à un premier seuil de pression différentielle alors que les clapets de décharge disposés de l'autre côté de la cloison 10 sont sensibles à un second seuil de pression différentielle, et ne laissent passer de débit de fuite que dans l'autre sens axial, de sorte que la contre-fiche bénéficie d'un effet différencié de l'écrêtage de l'effort d'amortissement, selon qu'elle est sollicitée en traction ou en compression.

Dans l'exemple de contre-fiche selon la figure 1, et comme représenté également sur les figures 2 à 5, tous les clapets de décharge sont sensibles à un seul et même seuil de pression différentielle, et les lames-ressorts des clapets de décharge disposées d'un même côté de la cloison 10 sont réalisées sous la forme d'un sous-ensemble obturateur de structure simple et avantageuse pour le montage, et qui est de plus identique au sous-ensemble obturateur des clapets disposés de l'autre côté de la cloison 10, sur laquelle ces deux sous-ensembles sont fixés par des moyens communs.

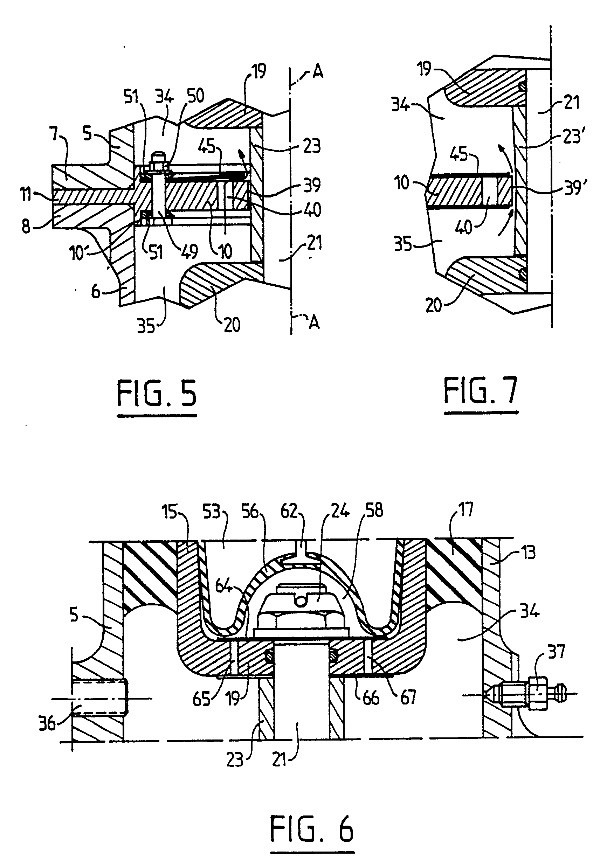

Comme représenté sur la figure 2, la cloison 10 est percée de huit trous 40, circulaires et axiaux et de même diamètre, qui sont régulièrement répartis en direction circonférentielle autour de l'axe A-A, et à une distance relativement faible du passage annulaire de laminage 39. Deux de ces trous 40 sont également représentés sur la figure 1, et un seul sur les figures 3 et 5. Quatre de ces trous 40, pris en alternance en direction circonférentielle, donc décalés les uns des autres d'un angle au centre de 90°, sont masqués par un sous-ensemble obturateur 41, qui est logé dans la chambre d'amortisseur 34 et appliqué contre la face de la cloison 10 qui est tournée vers cette chambre 34, tandis qui les quatre autres trous 40, également décalés à 90° les uns des autres, sont masqués par un sous-ensemble obturateur 42, identique au sous-ensemble 41, mais qui est logé dans la chambre d'amortisseur 35 et appliqué contre l'autre face de la cloison 10, qui est tournée vers cette chambre 35, le sous-ensemble 42 étant de plus décalé d'un angle au centre de 45°, en direction circonférentielle, par rapport au sous-ensemble 41, qui est représenté en traits pleins sur la figure 4.

Ce sous-ensemble obturateur 41 est découpé d'une seule pièce dans une tôle métallique, et comprend une couronne annulaire périphérique 43, essentiellement plate. La couronne 43 supporte quatre lames-ressorts 45, identiques les unes aux autres et décalées à 90° en direction circonférentielle, et dont chacune s'étend radialement vers l'intérieur, en étant rattachée à la couronne 43 par un pied 46, délimité entre deux petits évidements arrondis 47 ménagés dans le bord radial interne de la couronne 43, afin de faciliter la flexion de la lame-ressort 45 par rapport à la couronne 43. L'extrémité libre et arrondie, en position radiale interne, de chaque lame-ressort 45 forme un diaphragme venant en regard de l'un des quatre trous 40 auxquels correspond le sous-ensemble 41, et les lames-ressorts 45 sont précontraintes de façon à ce qu'elles s'appliquent contre la face correspondante de la cloison 10, et que leurs diaphragmes d'extrémité obturent les quatre trous 40 correspondants, comme représenté sur la figure 2.

Le sous-ensemble obturateur 42, identique au sous-ensemble 41, est appliqué contre l'autre face de la cloison 10, mais avec le décalage angulaire précité de 45° par rapport au sous-ensemble 41, de sorte que les lames-ressorts 45' du sous-ensemble obturateur 42 sont précontraintes et appliquées contre la face de la cloison 10 tournée vers la chambre 35 et obturent par leur diaphgrame d'extrémité les quatre autres trous 40. Ainsi, les trous 40 sont masqués en quinconce, quatre d'un côté de la cloison 10 et quatre autres de l'autre côté de cette cloison, par les lames-ressorts précontraintes 45 et 45' comme représenté sur la figure 2. Sur cette figure 2, les lames-ressorts 45' ont été partiellement représentées en pointillé. Les couronnes 43 des deux sous ensembles 41 et 42 sont percées chacune de huit trous de fixation 48, décalés à 45° les uns des autres en direction circonférentielle, et qui viennent en coïncidence non seulement les uns avec les autres et d'un sous-ensemble 41 ou 42 à l'autre, en raison du décalage circonférentiel de 45° entre ces deux sous-ensemble 41, 42, mais également avec huit trous de fixation percés dans la partie radiale externe de la cloison 10, et centrés chacun sur la même direction radiale que l'un respectivement des huit trous d'écrètage 40, comme cela est également représenté sur la figure 2. On peut ainsi fixer les deux sous-ensembles obturateur 41 et 42 contre les faces opposées de la cloison 10 par huit ensembles identiques à vis 49 et écrou 50, dont un seul est représenté sur les figures 3 et 5, et dont deux d'entre eux sont visibles sur la figure 1. Pour un bon appui des couronnes 43 contre les faces opposées de la cloison 10, une rondelle 51 est interposée entre les têtes des vis 49 et la couronne 43 du sous-ensemble obturateur 42, et une seconde rondelle 51 est également interposée entre les écrous 50 (vissés sur les vis 49) et la couronne 43 de l'autre sous-ensemble obturateur 41, et les deux rondelles 51 sont chacune annulaires, avec un bord radial interne chanfreiné du côté tourné vers la cloison 10 comme représenté sur les figures 3 et 5, afin de ne pas déformer les lames-ressorts 45 et 45' ni de les gêner lorsqu'elles sont fléchies élastiquement vers l'intérieur de la chambre 34 ou 35 qui les logent.

Ainsi, comme représenté schématiquement sur la figure 5 pour une seule lame-ressort 45, lorsque l'huile de silicone contenue dans la chambre d'amortisseur 35 est comprimée par un déplacement axial relatif des armatures 4 et 28 de la contre-fiche et que la pression dynamique dans la chambre 35 devient supérieure à la pression dans la chambre en dépression 34 d'une valeur supérieure au seuil de pression déterminé par la section du trou 40 correspondant et par la précontrainte de la lame-ressort 45, cette lame-ressort 45 est soumise à un effort supérieur à sa précontrainte et est donc fléchie élastiquement vers l'intérieur de la chambre 34, et ainsi écartée du trou 40 qu'elle obturait préalablement, en libérant un passage de communication entre les deux chambres 34 et 35, ce qui permet l'écoulement (représenté par une flèche sur la figure 5) d'un débit de fuite d'huile laminée par ce trou 40 et qui s'ajoute à l'huile laminée par le passage annulaire 39. Il en est de même des trois autres lames-ressorts 45, mais, par contre, les lames-ressorts 45' sont fortement appliquées contre la cloison 10 en obturant les quatre trous 40 en regard desquels leurs diaphragmes d'extrémité sont disposés, et elles interdisent tout débit de fuite de la chambre 35 comprimée vers la chambre 34 détendue.

Inversement, lorsque la chambre 34 est comprimée et la chambre 35 détendue, et lorsque la pression différentielle entre ces chambres dépasse le seuil de pression mentionné ci-dessus, les quatre lames 45' fléchissent vers l'intérieur de la chambre en dépression 35, en dégageant les quatre trous 40 correspondants et en permettant des débits de fuite de la chambre comprimée 34 vers la chambre détendue 35, tandis que les quatre lames-ressorts 45 sont appliquées en position d'obturation des quatre trous 40 correspondants et interdisent tout écoulement de la chambre 34 vers la chambre 35.

La contre-fiche comprend également un dispositif intégré de compensation des variations de volume de l'huile de silicone en fonction de sa température, ces variations étant d'une manière générale appelées "dilatations thermiques" de l'huile. Ce dispositif de compensation des dilatations thermiques de l'huile est réalisé sous la forme d'un accumulateur pneumatique 52 logé à l'intérieur du tronçon cylindrique interne 15 du ressort de rappel 2, et décrit ci-dessous en référence aux figures 1 et 6. Cet accumulateur pneumatique 52 comprend une chambre pneumatique 53, délimitée entre, d'une part un couvercle 54 de fermeture de l'extrémité axiale externe du tronçon cylindrique 15, sur lequel le couvercle 54 est retenu par un jonc 55, et, d'autre part, une membrane souple et étanche en élastomère 56, de forme cupulaire à fond bombé, qui est engagée dans le tronçon cylindrique 15 de sorte que son fond bombé recouvre l'écrou 24 et l'extrémité filetée de la tige 21. Le bord périphérique de la membrane 56 présente un bourrelet 57 élastiquement encliqueté dans une gorge périphérique de la partie du couvercle 54 que est engagée dans le tronçon cylindrique 15, de sorte que la membrane 56 est ainsi appliquée avec étanchéité, d'une part, dans la gorge du couvercle 54, pour fermer la chambre pneumatique 53 de manière étanche, et, d'autre part, contre la face interne du tronçon cylindrique 15, pour fermer de manière étanche une chambre de compensation hydraulique 58 délimitée entre, d'une part, la membrane 56 et, d'autre part, le fond 19 et la face interne de tronçon cylindrique 15. Un orifice 59 percé dans le fond 19 (voir figure 1) assure une communication permanente entre les chambres 34 et 58, et permet le remplissage de la chambre 58 en huile de silicone au remplissage de l'amortisseur. La chambre pneumatique 53 contient de l'air sous pression, introduit par la valve de gonflage 60 montée sur le couvercle 54, à une pression nominale de gonflage qui est, par exemple fixée à 0,6 MPa à une température nominale de 20°C. La valve 60 est accessible de l'extérieur de la contre-fiche par l'un des deux évidements 61 ménagés dans la cloche de l'embout 29, dont l'autre évidement 61 permet un contrôle visuel de l'extérieur de l'état de remplissage de la chambre de compensation 58 en huile, grâce à l'indicateur de niveau dont l'accumulateur 52 est muni. Cet indicateur de niveau comprend une tige témoin 62, dont une extrémité conformée en tête élargie est encliquetée élastiquement dans un évidement ménagé dans la partie centrale du fond bombé de la membrane 56, et cette tige témoin 62 traverse axialement la chambre pneumatique 53 de sorte que sa partie d'extrémité opposée est montée coulissante dans un tube transparent 63, qui traverse le couvercle 54 axialement et avec étanchéité, et est retenu dans ce dernier par une collerette entourant son ouverture centrale qui reçoit la tige 62, tandis que son extrémité en saillie à l'extérieur du couvercle 54 est fermée. Le volume d'huile contenu dans la chambre de compensation 58 est pressurisé par la membrane 56, sous l'effet du ressort à gaz que constitue la chambre pneumatique 53, de sorte que la pression de cette dernière est transmise par l'orifice 59 aux deux chambres d'amortisseur 34 et 35, et détermine la pression statique de l'amortisseur, pour laquelle la chambre de compensation 58 est moyennement remplie d'huile.

Dès qu'un échauffement fait dilater l'huile de silicone, l'excédent d'huile qui se forme dans les chambres 34 et 35 s'écoule par l'orifice 59 dans la chambre de compensation 58 et repousse la membrane 56 en comprimant l'air contenu dans la chambre pneumatique 53, de sorte que l'augmentation de volume peut être absorbée. Inversement, dans le cas d'un refroidissement, la contraction de l'huile de silicone dans les chambres 34 et 35 crée un appel d'huile provenant de la chambre de compensation et s'écoulant vers les chambres 34 et 35 par l'orifice 59, sous l'effet de la membrane 56, repoussée par la détente de l'air de la chambre pneumatique 53 dans un sens qui diminue le volume de la chambre de compensation 58.

L'orifice 59 de communication entre la chambre de compensation 58 et les chambres d'amortisseur 34 et 35 est un orifice calibré, de faible diamètre, pour faire fonction de filtre dynamique, isolant la chambre de compensation 58 des pulsations dynamiques de pression dans les chambres d'amortisseur. Ceci est obtenu par le fait que le faible diamètre de l'orifice 59 introduit au passage de l'huile de viscosité élevée, une perte de charge suffisante pour filtrer les variations de pression dynamique dans la plage de fonctionnement souhaitée de l'amortisseur.

Cet isolement de l'accumulateur pneumatique 52 vis-à-vis des pulsations de pression dynamique des chambres d'amortisseur 34 et 35 et également assuré par un double clapet à lames-ressorts formant diaphragmes et fonctionnant comme les clapets d'écrêtage décrits ci-dessus. Ce double clapet est représenté sur la figure 6. Il comporte un clapet de surpression constitué d'une lame-ressort 64 dont une partie est maintenue appliquée contre la face du fond 19 qui est tournée vers la chambre 58 par le vissage de l'écrou 24 sur la tige 21, et dont une autre partie libre forme un diaphragme précontraint contre cette face du fond 19 en position d'obturation d'un second orifice 65 percé dans le fond 19 et faisant communiquer les chambres 58 et 34. Cette lame-ressort 64 est tarée à une pression d'ouverture qui est supérieure à la pression maximum de fonctionnement normal de l'amortisseur, de sorte qu'en cas de surcharge accidentelle dans les chambres d'amortisseur 34 et 35, l'huile peut élastiquement repousser la lame-ressort 64 vers l'intérieur de la chambre 58 et s'écouler dans cette dernière où elle se détend en repoussant la membrane 56. L'autre clapet est un clapet de gavage constitué d'une lame-ressort 66, dont une partie est maintenue appliquée contre la face du fond 19 qui est tournée vers la chambre 34 par l'entretoise tubulaire 23, et dont une autre partie libre forme un diaphragme précontraint contre cette face du fond 19 en position d'obturation d'un troisième orifice 67, percé dans le fond 19 et faisant communiquer les chambres 34 et 58. Cette lame-ressort 66 est tarée à une pression inférieure à la pression de gonflage de l'accumulateur pneumatique 52, de façon à assurer en bon remplissage des chambres d'amortisseur 34 et 35, afin d'éviter tout phénomène de cavitation, en particulier après une phase de fonctionnement au cours de laquelle la chambre 34 a été mise en dépression.

Par rapport aux amortisseurs à fluide hydraulique de faible viscosité, et en plus des avantages précédemment mentionnés, la contre-fiche selon l'invention présente des avantages supplémentaires qui sont, notamment, une étanchéité totale de l'amortisseur, avec compensation intégrée des dilations thermiques de l'huile. De plus, la structure de la contre-fiche ne comporte pas de pièce d'usure, ce qui présente une garantie de fiabilité et de longévité. Les coûts de fabrication de la contre-fiche sont réduits du fait que la haute viscosité de l'huile de silicone utilisée permet, d'une part, d'élargir les tolérances de fabrication, et, d'autre part, d'utiliser des clapets de structure simple donc économique.

Mais en outre, l'amortisseur qui équipe la contre-fiche selon l'invention peut permettre d'assurer un amortissement variable en fonction de la charge de la contre-fiche, et en particulier de la charge statique, en faisant varier l'importance du jeu radial de laminage entre la cloison 10 et l'entretoise 23 en fonction de la position axiale relative occupée par ces deux éléments.

Sur la figure 7, on a représenté partiellement une variante de la contre-fiche des figures 1 à 6, dans laquelle l'amortisseur assure un tel amortissement variable en fonction de la charge statique de la contre-fiche. Dans cette variante, la surface latérale externe de l'entretoise tubulaire 23′ n'est pas cylindrique, mais de forme biconique divergeant de sa partie centrale vers ses parties d'extrémité appliquées contre les fonds 19 et 20 des tronçons cylindriques internes des ressorts de rappel. Ainsi, le jeu radial 39′ délimité entre le bord radial interne de la cloison annulaire 10 et la surface latérale externe de l'entretoise 23′ est un jeu radial que diminue lorsque l'entretoise 23′ est déplacée axialement avec l'ensemble de l'armature interne, dans un sens ou dans l'autre, par rapport à la cloison 10 et à l'armature tubulaire externe. On peut ainsi réaliser une contre-fiche avec un effet d'amortissement qui durcit en fonction de la course.

Une contre-fiche selon les figures 1 à 7 peut ainsi présenter des caractéristiques convenables pour équiper le rotor sustentateur d'un hélicoptère de faible tonnage. Cependant, la déformation des manchons d'élastomère 17 et 18 assurant la fermeture étanche des chambres 34 et 35 de l'amortisseur, sous le fait de la pression dynamique interne de ce dernier, peut entraîner une chute des caractéristiques d'amortissement qui est incompatible avec les exigences de charge à transmettre à un amortisseur destiné à équiper le rotor sustentateur d'un hélicoptère de moyen tonnage. Dé plus, sur le rotor d'un tel hélicoptère, il peut être souhaitable d'augmenter l'amortissement aux grandes amplitudes de déplacement axial relatif des armatures de la contre-fiche.

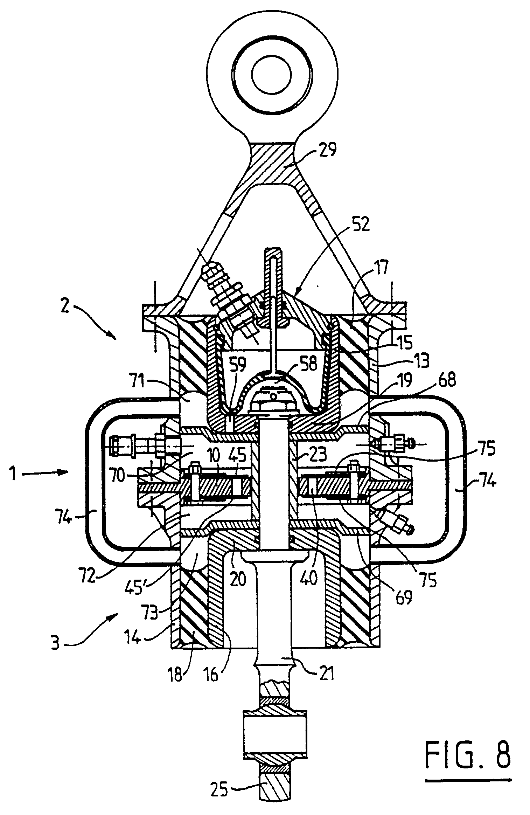

Le second exemple de contre-fiche, représenté sur la figure 8, a été réalisé, d'une part, pour remédier à l'inconvénient présenté par le premier exemple à propos de la chute des caractéristiques d'amortissement et, d'autre part, pour satisfaire à la nouvelle exigence d'un amortissement augmenté aux grandes amplitudes de déplacement relatif des armatures. Ce second exemple de contre-fiches résulte de deux adjonctions principales qui ont été apportées à la structure de base du premier exemple, qui a été conservée, de sorte qu'il n'est pas utile de décrire à nouveau cette structure de base, dont les éléments essentiels sont repérés sur la figure 8 par les mêmes références numériques. On se contentera de décrire à présent les deux modifications de structure propres à ce second exemple.

La première modification essentielle consiste à subdiviser chacune des deux chambres d'amortisseur, délimitées entre la cloison 10 et l'un respectivement des deux ressorts de rappel 2 et 3, en deux parties séparées l'une de l'autre et dont l'une est directement adjacente à la cloison 10 tandis que l'autre est directement adjacente au manchon d'élastomère 17 ou 18 du ressort 2 ou 3 correspondant, et à raccorder l'une à l'autre les deux parties de chambre adjacentes aux manchons d'élastomère 17 et 18, de façon à compenser les variations de volume d'huile dans les chambres d'amortisseur qui sont dues aux déformations des manchons d'élastomère 17 et 18, et ainsi à ne pas faire travailler l'élastomère en pression.

Sur le second exemple de réalisation de la figure 8, ceci est obtenu par des coupelles rigides et identiques 68 et 69, ayant chacune la forme d'un disque circulaire conformé en assiette dont le centre est percé d'un passage pour la tige 21, et dont l'une 68 est maintenue appliquée contre le fond 19 du tronçon cylindrique interne 15 par une extrémité de l'entretoise tubulaire 23, sans cependant obturer l'orifice 59 de communication avec la chambre de compensation 58, et en subdivisant la chambre d'amortisseur 34 du premier exemple (voir figure 1) en une chambre de travail 70, active en pression dynamique, entre la coupelle 68 et la cloison 10, et en une chambre 71 de compensation des variations de volume dues aux déformations de l'élastomère, entre la coupelle 68 et le manchon d'élastomère 17.

De même l'autre coupelle 69 est maintenue appliquée contre le fond 20 de l'autre tronçon cylindrique interne 16 par l'autre extrémité axiale de l'entretoise 23, et subdivise la chambre d'amortisseur 35 du premier exemple (voir figure 1) en une chambre de travail 72 active en pression dynamique, entre la coupelle 69 et la cloison 10, et en une chambre 73 de compensation des variations de volume dues aux déformations de l'élastomère 18, entre la coupelle 69 et le manchon d'élastomère 18. En outre, les chambres 71 et 73 sont en communication permanente l'une avec l'autre par quatre canalisations, délimitées chacune dans l'une de quatre tuyauteries coudées 74, dont deux seulement sont représentées sur la figure 8, extérieures à l'armature externe tubulaire de la contre-fiche et dont les deux extrémités de chacune sont raccordées de manière étanche au corps tubulaire d'amortisseur dans lequel elles débouchent, de sorte que de l'huile de silicone peut librement passer de l'une à l'autre des deux chambres 71 et 73 pour compenser toute variation de volume de ces chambres qui est causée par une déformation de l'élastomère des manchons 17 et 18.

La seconde modification essentielle, adoptée pour saturer le débit de fuite des clapets de décharge, et donc pour limiter l'écrètage de l'effort d'amortissement, de façon à augmenter cet effort aux grandes amplitudes, consiste à limiter le débattement en flexion des lames-ressorts. Ceci est obtenu en disposant dans chacune des chambres de travail 70 et 72 de l'amortisseur une butée limitant la flexion élastique, vers l'intérieur de cette chambre, de chacune des lames-ressorts 45 ou 45' disposées dans la chambre 70 ou 72 correspondante, lorsque ces lames-ressorts sont écartées de leur position respective d'obturation des trous d'écrètage 40. Ces lames-ressorts 45 et 45' sont les obturateurs mobiles à diaphragme des clapets de décharge d'un dispositif d'écrètage de l'effort d'amortissement qui est identique à celui équipant l'exemple de contre-fiche décrit ci-dessus en référence aux figures 1 à 6, avec la seule différence que les rondelles annulaires 51, interposées dans ce premier exemple entre, d'une part, les couronnes 43 des sous-ensembles obturateur 41 et 42, et, d'autre part et respectivement les têtes de vis 49 et les écrous 50 de fixation des sous-ensembles 41 ou 42 à la paroi 10, sont chacune remplacée par une cale annulaire 75, représentée en traits interrompus sur la figure 4, et dont le bord radial interne est situé vers l'intérieur au-delà du bord radial interne de la couronne 43 et des pieds 46 des lames-ressorts 45 ou 45' correspondantes. Ces deux cales 75 constituent chacune une butée unique limitant les débattements en flexion de toutes les lames-ressorts 45 ou 45' fixées sur la face correspondante de la cloison 10.

En variante, et comme représenté également en traits interrompus et pour une seule lame-ressort 45 sur la figure 4, chaque cale 75 comporte des bras radiaux et rigides 76, en nombre égal aux lames-ressorts 45, et s'étendant radialement vers l'intérieur à partir du bord radial interne de la cale annulaire 75, chaque bras 76 étant en regard d'une lame ressort 45 et présentant vers cette dernière une surface d'appui incurvée selon la déformée en flexion de la lame-ressort 45 lorsque la pression différentielle qui la fléchit est égal à un autre seuil de pression, à partir duquel le débit de fuite par le trou d'écrètage 40 correspondant, doit être saturé, pour augmenter l'effet d'amortissement.

En résumé, sur ce second exemple de réalisation, et par rapport au premier exemple, les coupelles 68 et 69 et les canalisations 74 permettent d'annuler les déformations de l'élastomère des manchons 17 et 18 sous l'effet de la pression dynamique interne de l'amortisseur, et, après l'ouverture des trous 40 d'écrètage, qui amène l'infléchissement souhaité de la courbe d'effort au niveau de la limite supérieure d'une plage de faibles amplitudes de déplacement axial relatif des armatures de la contre-fiche, l'effet de saturation des débits de fuite par la venue des lames-ressorts en appui contre une butée limitant leur fléchissement élastique assure le redressement, également souhaité, de la courbe d'effort pour de plus grandes amplitudes de déplacement axial relatif desdites armatures de la contre-fiche.

Afin que le niveau d'effort subi par la contre-fiche ne soit pas trop pénalisant pour la durée de vie des pièces mécaniques de sa structure, il est avantageux de le réduire en disposant la contre-fiche de sorte que la pente de la courbe de l'effort d'amortissement en fonction du déplacement axial relatif de ses armatures soit plus faible aux amplitudes de déplacement intermédiaires, correspondant aux vols de croisière stabilisée, que la pente tant aux faibles amplitudes, pour s'opposer au phénomène de résonance-sol qu'aux grandes amplitudes de déplacement, pour s'opposer aux cas de fortes charges en traînée sur les pales.

Cette réduction du niveau des charges aux amplitudes de déplacement intermédiaires peut être obtenue en combinant un choix délibéré de clapets de décharge ayant des orifices d'écrètage de grande section de passage et des lames-ressorts à débattement limité par des butées avec un dispositif intégré de coupure de l'écrètage, comportant des clapets de fermeture des orifices d'écrètage pour rétablir ainsi, aux grandes amplitudes de déplacement, le laminage obtenu pour les faibles amplitudes.

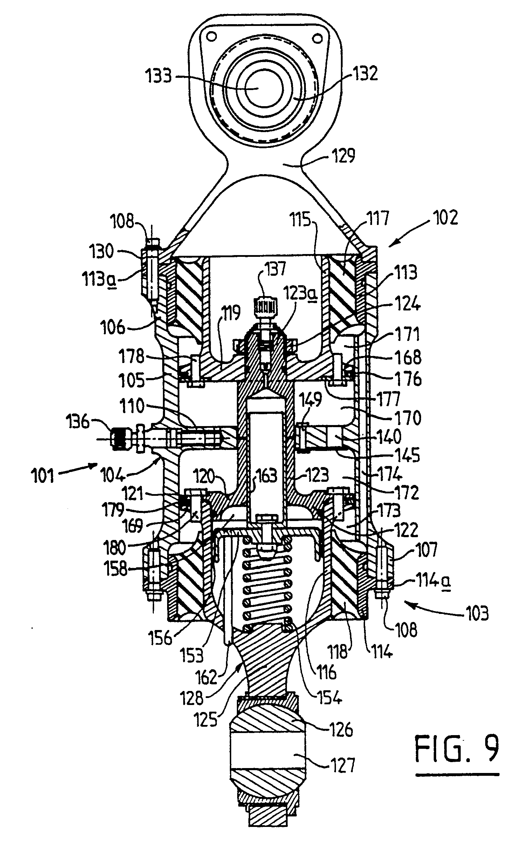

Le troisième exemple de contre-fiche, représenté sur les figures 9 à 11, remplit non seulement toutes les fonctions assurées par la contre-fiche de la figure 8, mais également la fonction de coupure de l'écrètage et de rétablissement, aux grandes amplitudes, du laminage assuré pour les faibles amplitudes, à l'aide d'un dispositif piloté par la pression de la chambre active en pression dynamique.

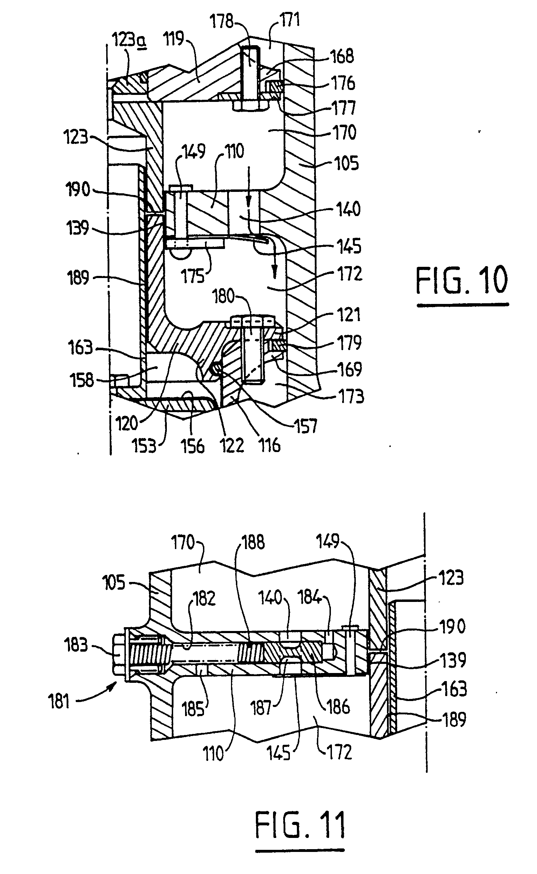

Sur la contre-fiche hydro-élastique de la figure 9, on retrouve un amortisseur hydraulique linéaire 101, à laminage d'une huile de viscosité élevée, et qui est incorporé en position axiale centrale entre deux ressorts de rappel 102 et 103, montés en série et assurant le rappel élastique. L'ensemble est disposé dans une armature externe rigide et tubulaire 104, qui est constituée d'un corps cylindrique tubulaire d'amortisseur 105, ayant ses deux parties d'extrémité axiale 106 et 107 élargies, et des deux tronçons cylindriques tubulaires externes et rigides 113 et 114 des ressorts de rappel respectivement 102 et 103. Chacun des tronçons externes 113 et 114 est engagé coaxialement et retenu avec étanchéité dans l'une des parties d'extrémité élargies 106 et 107 du corps 105 par des vis de fixation 108, qui sont vissées longitudinalement dans ces parties d'extrémité 106 et 107 en serrant contre leur extrémité axiale respective des brides radiales externes 113a et 114a des tronçons externes 113 et 114. La bride 113a est de plus enserrée entre la partie d'extrémité 106 et une bride radiale externe 130 de la grande base ouverte de l'embout 129 en forme de cloche, qui porte une rotule d'articulation 132 à oeil 133 pour la liaison au moyeu du rotor, et qui est ainsi solidarisé par des vis 108 à l'armature externe 104 de la contre-fiche. On retrouve également une cloison transversale et annulaire 110 en saillie radiale vers l'intérieur du corps d'amortisseur 105, et formant piston d'amortisseur, qui est dans ce cas d'une seule pièce avec la partie centrale de ce corps 105, et le passage permanent de laminage de l'amortisseur 101 est également le passage annulaire défini par le jeu radial entre le bord radial interne de la cloison annulaire 110 et la surface latérale externe d'une entretoise tubulaire 123 formant la partie centrale de l'armature axiale interne 128. Cette armature interne 128 comprend également les tronçons cylindriques tubulaires internes et rigides 115 et 116, respectivement des ressorts 102 et 103, et qui sont chacun reliés au tronçon externe correspondant 113 ou 114 par un manchon d'élastomère élastiquement déformable en cisaillement 117 ou 118, vulcanisé de manière étanche entre les deux tronçons rigides correspondant 113 et 115 ou 114 et 116. Le tronçon interne 115 est relié à l'entretoise 123 par un fond radial 119 d'une seule pièce avec l'extrémité axiale interne de ce tronçon 115, en présentant un passage axial et central, ainsi qu'une bride périphérique 168, en saillie radiale vers l'extérieur et aménagée en piston monté coulissant avec étanchéité à l'intérieur du corps d'amortisseur 105, grâce à un joint d'étanchéité annulaire 176 maintenu dans une gorge périphérique de la bride 168 par une rondelle annulaire 177 fixée à l'aide de vis 178 contre la face de la bride 168 qui est tournée vers la cloison 110. Le tronçon interne 115 est rigidement lié à l'entretoise 123 par son fond 119, engagé avec étanchéité par son passage central sur une partie d'extrémité filetée 123a et de diamètre réduit de l'entretoise 123, et sur laquelle un écrou 124 est vissé et retenu en formant une butée radiale amovible maintenant le fond 119 appliqué contre l'épaulement de raccordement de la partie d'extrémité de diamètre réduit 123a à la partie tubulaire de l'entretoise 123. L'autre extrémité de l'entretoise 123 est d'une seule pièce avec un fond radial 120 qui, comme représenté à une plus grande échelle sur la figure 10, présente une bride radiale externe 121, s'étendant jusqu'à proximité de la face interne du corps d'amortisseur 105, et une partie annulaire axiale 122 par laquelle le fond 120 est emmanché avec étanchéité à l'intérieur de l'extrémité axiale interne du tronçon cylindrique interne 116 du ressort 103. Ce fond 120 est solidaire de ce tronçon interne 116 par sa bride 121, qui est fixée par des vis longitudinales 180 contre une bride radiale externe 169 d'une seule pièce avec l'extrémité axiale interne du tronçon 116, et aménagée en piston monté coulissant à l'intérieur du corps d'amortisseur 105 par un joint d'étanchéité annulaire 179, maintenu dans une gorge périphérique de la bride 169 par la bride 121 du fond 120. Par son extrémité axiale externe, le tronçon interne 116 est d'une seule pièce avec un embout 125, qui porte une rotule d'articulation 126 à oeil 127 de liaison au pied de pale, et qui donne à la pièce formée avec le tronçon interne 116 la forme générale d'une cloche d'embout.

Ainsi, l'armature axiale interne 128 est constituée des tronçons internes 115 et 116, des fonds 119 et 120 et de l'entretoise 123, et elle présente l'embout rotulé 125 pour la liaison de la contre-fiche du côté de la pale, tandis que l'autre embout rotulé 129 assure la liaison de la contre-fiche du côté du moyeu du rotor.

L'amortisseur 101 ainsi réalisé entre les deux ressorts 102 et 103 présente quatre chambres remplies d'huile de silicone de viscosité élevée, deux de ces chambres étant des chambres de travail 170 et 172, actives en pression dynamique, et délimitées respectivement entre la cloison 110 et le fond 119, et entre la cloison 110 et le fond 120, et les deux autres chambres sont des chambres 171 et 173 de compensation des variations de volume dues aux déformations de l'élastomère des manchons 117 et 118, et qui sont délimitées l'une 171 entre le piston 168 et le manchon d'élastomère 117, qui assure la fermeture étanche de cette chambre 171, et l'autre chambre 173 entre le piston 169 et le manchon 118, qui assure également la fermeture étanche de cette chambre 173, les deux chambres 171 et 173 directement adjacentes aux manchons d'élastomère 117 et 118 étant de plus en communication permanente l'une avec l'autre par au moins un canal longitudinal tel que 174, percé dans l'épaisseur du corps d'amortisseur 105.

Dans cet exemple, les pistons 168 et 169, intégrés aux tronçons cylindriques internes 115 et 116 des ressorts 102 et 103, correspondent aux coupelles 68 et 69, qui dans le second exemple de la figure 8, subdivisent chacune des deux chambres délimitées dans le corps d'amortisseur de part et d'autre de la cloison 10 en deux chambres dont l'une est une chambre de travail active en pression dynamique et l'autre une chambre de compensation des variations de volume dues aux déformations de l'élastomère.

Ce dernier, comme dans les exemples précédents, assure deux fonctions : un apport de raideur qui s'ajoute à celle provenant de la compressibilité de l'huile et de l'amortissement hydraulique, et la fermeture étanche de l'amortisseur 101 entre les tronçons cylindriques internes 115, 116 et externes 113, 114 des ressorts de rappel 102 et 103.

Comme dans l'exemple précédent, le laminage permanent de l'huile de silicone entre les deux chambres de travail 170 et 172 est assuré par le passage annulaire, représenté à plus grande échelle en 139 sur la figure 10, et délimité par le jeu radial entre la cloison 110 et l'entretoise 123, pour mettre les chambres de travail 170 et 172 en permanence en communication l'une avec l'autre. A partir d'un seuil de pression différentielle entre ces deux chambres, l'écrêtage de l'effort d'amortissement est assuré, selon que la contre-fiche est sollicitée en traction ou en compression, par l'un ou l'autre de deux clapets de décharge identiques, disposés de part et d'autre de la cloison 110, et dont l'obturateur mobile de chacun est constitué d'une lame-ressort fixée contre la face correspondante de la cloison 110 et précontrainte en position initiale d'obturation de l'un de deux trous d'écrêtage 140 percé dans la cloison 110, chaque lame-ressort étant écartée par flexion élastique du trou 140 correspondant pour libérer une section de laminage complémentaire à celle du passage annulaire 139 et autorisant un débit de fuite entre les deux chambres 170 et 172. Un seul clapet de décharge est représenté sur les figures 9 et 10, et comprend la lame ressort 145, disposée radialement et fixée par sa partie d'extrémité radiale interne contre la face de la cloison 110 tournée vers la chambre de travail 172 par un ensemble vis-écrou 149, et dont la partie d'extrémité radiale externe forme un diaphgrame précontraint en position d'obturation d'un trou 140, et cette lame ressort 145 est écartée par flexion élastique, vers l'intérieur de la chambre 172, dès que la pression dans la chambre de travail 170 est supérieure à celle de la chambre 172 d'une valeur correspondant au seuil de pression différentielle mentionné ci-dessus. La lame-ressort de l'autre clapet est fixée de la même manière sur l'autre face de la cloison 110, de sorte que les deux trous d'écrêtage 140 sont masqués en opposition.

Comme représenté sur la figure 10, une butée 175 est fixée par le même ensemble vis-écrou 149 contre la face de la lame-ressort 145 qui est tournée vers la chambre 172, de façon à limiter le débattement en flexion de la lame 145, afin de saturer le début de fuite et de ne pas dépasser en fatigue la limite de résistance de la lame-ressort métallique 145.

Pour rétablir le laminage initial par le passage annulaire 139, afin d'obtenir la forte pente d'augmentation d'effort souhaitée aux grandes amplitudes de déplacement relatif des deux armatures 104 et 128, chacun des deux clapets de décharge est combiné à un clapet de fermeture du trou d'écrêtage 140 correspondant. Le clapet de fermeture 181, combiné au clapet de décharge à lame-ressort 145 précédemment décrit, est représenté sur la figure 11 et est logé dans un alésage transversal 182, percé dans l'épaisseur de la cloison 110 de façon à couper perpendiculairement le trou d'écrêtage 140 correspondant. L'extrémité radiale externe de l'alésage 182 débouche à l'extérieur du corps d'amortisseur 105 et est obturée par un bouchon fileté amovible 183, tandis que l'extrémité radiale interne de l'alésage 182, au-delà du trou 140, est en communication permanente avec la chambre de travail 170 par un petit canal longitudinal 184, percé dans la cloison 110. Un autre petit canal 185 est percé dans la cloison 110 et met la chambre de travail 172 en communication permanente avec l'alésage 182, entre le trou 140 et le bouchon 183. Un obturateur mobile, conformé en tiroir 186, avec une gorge périphérique centrale 187, est monté coulissant avec étanchéité dans l'alésage 182. Un ressort hélicoïdal 188, également logé dans l'alésage 182 en prenant appui contre le bouchon 183 et contre l'extrémité du tiroir 186 qui est tournée vers ce bouchon 183, repousse le tiroir 186 en position initiale dans laquelle la gorge 187 est dans le trou d'écrêtage 140, et autorise le passage d'un débit de fuite dès que la lame-ressort 145 est fléchie. La pression de la chambre 172 est constamment appliquée par le canal 185 sur l'extrémité du tiroir 186 au contact du ressort 188, tandis que la pression de la chambre 170 est toujours appliquée par le canal 184 sur l'autre extrémité du tiroir 186. Ainsi, dès que la pression différentielle entre les deux chambres 170 et 172 développe sur le tiroir 186 un effort supérieur à la force de rappel du ressort 188, le tiroir 186 est déplacé à l'encontre du ressort 188 et vient fermer le trou d'écrêtage 140 par sa portée d'extrémité du côté opposé au ressort 188. Le tiroir 186 est ainsi piloté en pression, et le tarage du ressort 188 est choisi, en fonction de la section efficace du tiroir 186, pour que ce dernier soit déplacé en position de coupure de l'écrêtage lorsque la pression différentielle qui le sollicite dépasse un seuil supérieur au seuil de pression différentielle commandant la déflextion élastique de la lame ressort 145 et au seuil de pression différentielle pour lequel la dépression de la lame-ressort 145 est limitée par la butée 175 de la figure 10. Un clapet de fermeture identique est également monté dans la cloison 110 pour coopérer avec l'autre clapet de décharge, fonctionnant en sens opposé.

Dans ce troisième exemple de contre-fiche, le dispositif de compensation des dilations thermiques de l'huile est logé dans le tronçon cylindrique interne 116 du ressort 103 et comprend également une chambre auxiliaire et étanche 158, remplie d'huile et délimitée entre le fond 120 et une membrane d'élastomère souple et étanche 156 de forme cupulaire et à déroulement, dont le bord périphérique présente un bourrelet 157 (voir figure 10) qui est retenu de façon étanche dans une gorge périphérique de la partie tubulaire 122 du fond 120 et contre le tronçon cylindrique interne 116. L'huile contenue dans cette chambre auxiliaire 158 est pressurisée par un mécanisme simple et fiable, qui comprend un piston 153 monté librement coulissant dans le tronçon cylindrique 116, et repoussé contre le partie centrale de la membrane 156 par un ressort hélicoïdal de compression 154, qui prend appui contre l'embout 125. Le piston 153 est guidé dans ses déplacements axiaux par une tige axiale 163, qui est vissée sur la partie centrale du piston 153 en coinçant la partie centrale de la membrane 156 contre ce dernier, et qui est engagée à coulissement axial dans l'entretroise tubulaire 123. Une tige témoin 162, dont une extrémité est solidaire du piston 153, s'étend longitudinalement dans le cylindre 116 de sorte que son extrémité libre traverse le fond de ce cylindre 116, formé par le raccordement à l'embout 125, et apparaisse en saillie à l'extérieur de la contre-fiche pour indiquer la position du piston 153 et faire office d'indicateur de remplissage de la chambre auxiliaire 158 de huile.

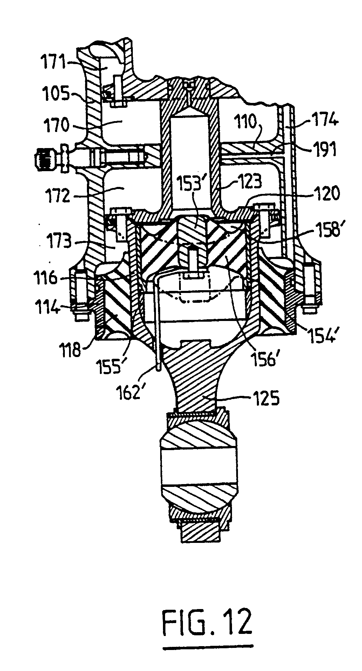

Cette chambre 158 est en communication permanente avec les chambres de travail 170 et 172 par le passage annulaire et axial calibré 189, délimité dans l'entretoise 123 entre cette dernière et la tige interne 163 (voir figures 10 et 11) et par deux canaux radiaux calibrés 190, diamétralement opposés, percés dans l'entretoise tubulaire 123 et débouchant dans le passage annulaire 139 de laminage permanent. Cette communication peut également être réalisée par au moins un canal radial calibré comme représenté en 191 sur la figure 12, percé dans la cloison transversale et annulaire 110 et débouchant dans le canal longitudinal 174 percé dans l'épaisseur du corps d'amortisseur et mettant en communication permanente les deux chambres 171 et 173. Ces canaux 190 et 191, placés en un point de faible pression dynamique forment un filtre passe-bas des pulsations de pression dynamique régnant dans les chambres de travail 170 et 172. Comme dans les exemples précédents, les augmentations de volume de l'huile sont absorbées par une augmentation du volume de la chambre 158, en repoussant la membrane 156 et le piston 153 à l'encontre du ressort 154, tandis que ce dernier assure une réalimentation des chambres d'amortisseur sous pression statique.

Le fond 120 peut être de plus équipé d'un clapet de surcharge et d'un clapet de gavage (non représentés) identiques à ceux qui sont montés sur le fond 19 dans le premier exemple de contre-fiche de la figure 1.

Le remplissage de l'amortisseur 101 en huile se fait par une valve d'entrée 136 (figure 9) montée dans un perçage transversal ménagé dans la cloison 110 et débouchant dans un passage longitudinal s'ouvrant dans les deux chambres de travail 170 et 172, et avec l'assistance d'une vis de purge 137, vissée dans un alésage taraudé et axial traversant la partie d'extrémité de diamètre réduit 123 a de l'entretoise 123, et débouchant dans l'alésage interne de cette dernière, qui s'étend jusqu'au travers du fond 120 et débouche dans la chambre auxiliaire 158. Cette vis de purge 139 permet une mise en dépression préalable au remplissage en pression par la valve d'entrée 136.

Une telle contre-fiche permet d'obtenir un niveau d'amortissement important aux faibles comme aux grandes amplitudes de déplacement, ce qui est satisfaisant pour le comportement de l'hélicoptère au sol et en vol sous forte charge, ainsi qu'un niveau d'amortissement qui peut être suffisamment affaibli aux amplitudes intermédiaires, qui correspondent au vol de croisière stabilisé, pour ne pas pénaliser inutilement la durée de vie de la contre-fiche.

La variante de la contre-fiche des figures 9 à 11 qui est représentée sur la figure 12 est d'une structure très voisine de celle représentée sur la figure 9, de sorte que les mêmes références numériques ont été conservées, pour désigner les éléments identiques, et que seules les différences essentielles sont décrites ci-dessous. En plus du canal radial calibré 191, percé dans la cloison 110 et débouchant, d'une part, dans le passage annulaire de laminage 139, et, d'autre part, dans le canal 174, pour constituer une liaison filtrant les pulsations de pression entre les chambres de travail 170, 172 et les chambres de compensation 171, 173, l'autre différence essentielle concerne la réalisation de la chambre auxiliaire, étanche et remplie d'huile, du dispositif de compensation des dilations thermiques de l'huile. Sur la variante de la figure 12, cette chambre auxiliaire est constituée du volume interne à l'entretroise tubulaire 123 et de la chambre 158', délimitée dans le tronçon cylindrique interne 116, entre le fond 120 et un fond d'accumulateur mobile et élastiquement déformable, rappelé élastiquement en position de compression et de pressurisation de l'huile de la chambre auxiliaire. Ce fond mobile d'accumulateur est constitué d'une paroi annulaire 156' d'élastomère élastiquement déformable, adhérisée avec étanchéité, d'une part, autour d'un noyau central rigide 153', en métal ou en matière synthétique, et, d'autre part, à l'intérieur d'une chemise rigide cylindrique 154', montée avec étanchéité et maintenue axialement dans le tronçon cylindrique interne 116, entre le fond 120 et une entretroise tubulaire rigide 155' en appui contre le fond de l'embout 125. Cette paroi annulaire 156' d'élastomère est relativement épaisse et moulée pour prendre, au repos, la position représentée en traits pleins sur la figure 12, c'est-à-dire une déformation tronconique en saillie axiale vers le fond 120, pour que la chambre 158' soit minimale. Au remplissage sous pression de la contre-fiche, l'huile logée dans la chambre 158' déforme axialement la paroi annulaire 156' qui est déplacée avec le noyau 153', vers l'embout 125, comme représenté en traits mixtes sur la figure 12, ce qui est indiqué par la tige témoin 162', faisant saillie à l'extérieur de cet embout 125, et dont l'extrémité interne est repliée et vissée contre la face du noyau 153' du côté opposé à la chambre 158'. De la sortie, la paroi 156' assure la fermeture étanche du fond d'accumulateur déformable qu'elle constitue, et constitue simultanément le mécanisme de pressurisation de l'huile de la chambre auxiliaire, par son rappel élastique dans le sens axial que comprime cette huile. Cette paroi 156' remplace ainsi la membrane 156 de la figure 9 pour assurer l'étanchéité de l'accumulateur, et remplace simultanément le piston coulissant 153 et le ressort 154 de la figure 9, pour assurer la pressurisation, la tige axiale de guidage 163 de la figure 9 étant supprimée puisque le piston à guider 153 l'est aussi.

Pour le reste, cette variante de contre-fiche fonctionne comme celle décrite ci-dessus en référence aux figures 9 à 11 et procure les mêmes avantages.

## Revendications

1. Contre-fiche de rappel élastique de type élasto-hydraulique, à amortissement linéaire incorporé par laminage d'un fluide hydraulique, en particulier pour une pale d'un rotor d'aérodyne à voilure tournante, et comprenant :
   – deux organes rigides (25, 29) munis chacun de moyens d'articulation (26, 32) destinés à relier l'un des organes rigides à une première pièce, telle qu'une pale ou un organe de liaison de ladite pale à un moyeu du rotor, et l'autre organe rigide à une seconde pièce, telle que ledit moyeu du rotor,
   – un amortisseur hydraulique (1) comprenant deux chambres d'amortisseur (34, 35) à volume variable en sens opposé, qui sont délimitées à l'intérieur d'un corps tubulaire (12) solidaire de l'un des organes rigides (29), et séparées l'une de l'autre par une cloison transversale (10), formant piston, montée dans le corps tubulaire (12) et également solidaire de l'un des organes rigides (29), et qui sont remplies d'un fluide hydraulique destiné à passer de l'une à l'autre des chambres d'amortisseur (34, 35) par au moins un passage étranglé de communication (39) entre ces chambres (34, 35), lorsque les organes rigides (25, 29) sont déplacés l'un par rapport à l'autre sensiblement selon l'axe général (A-A) de la contre-fiche, afin de produire un effet d'amortissement linéaire du déplacement relatif des organes rigides (25, 29),
   – un dispositif (52) de compensation des dilatations thermiques du fluide hydraulique, comprenant une chambre auxiliaire (58) contenant un volume de fluide hydraulique et en permanence en communication avec l'une au moins des chambres d'amortisseur (34) au-travers (59) d'un fond d'amortisseur (19) délimitant partiellement la chambre auxiliaire (58) et adjacent à une chambre d'amortisseur (34), et
   – au moins un organe de rappel élastique (2 ou 3) comprenant un manchon (17 ou 18) d'un matériau élastiquement déformable adhérisé de façon étanche par ses surfaces latérales respectivement interne et externe entre deux tronçons tubulaires rigides respectivement interne (15 ou 16) et externe (13 ou 14), sensiblement coaxiaux suivent l'axe général (A-A) de la contre-fiche et solidaires chacun de l'un respectivement des deux organes rigides (25, 29), de sorte que le manchon (17 ou 18) soit déformé en cisaillement lorsque les deux organes rigides (25, 29) sont déplacés l'un par rapport à l'autre sensiblement selon l'axe général (A-A) de la contre-fiche, et que le manchon (17 ou 18) exerce sur lesdits organes rigides une action de rappel élastique tendant à les ramener dans une position relative initiale, ledit manchon (17 ou 18) formant également un joint de fermeture étanche de l'amortisseur hydraulique (1), caractérisée en ce que les chambres d'amortisseur (34, 35) sont délimitées, en direction axiale, entre deux organes de rappel élastique (2, 3), dont les tronçons tubulaires rigides externes (13, 14) sont disposés longitudinalement de part et d'autre du corps tubulaire d'amortisseur (12), sensiblement coaxiaux l'un à l'autre et audit corps tubulaire (12), et solidaires de ce dernier en formant une unique armature externe tubulaire (4) solidaire de l'un (29) des deux organes rigides, les tronçons tubulaires rigides internes (15, 16) des organes de rappel élastique (2, 3) étant sensiblement coaxiaux l'un à l'autre, disposés longitudinalement avec espacement et de part et d'autre de ladite cloison transversale (10) de l'amortisseur (1), et solidaires l'un de l'autre ainsi que de l'autre organe rigide (25), dont l'armature tubulaire externe (4) n'est pas solidaire, en formant une unique armature interne (28) comportant une partie centrale (23) qui traverse axialement les deux chambres d'amortisseur (34, 35) et solidarise les deux tronçons tubulaires internes (15, 16) l'un à l'autre en étant entourée par la cloison transversale (10), de forme annulaire et solidaire de l'armature externe (4), et de sorte que les manchons (17, 18) de matériau élastiquement déformable des organes de rappel élastique (2, 3) assurent chacun la fermeture étanche de l'une respectivement des deux chambres d'amortisseur (34, 35) du côté opposé à la cloison transversale (10), lesdites chambres d'amortisseur (34, 35) étant en communication permanente l'une avec l'autre par un passage étranglé annulaire (39) délimité par un jeu radial de laminage entre ladite cloison transversale (10) et celle (28) des armatures dont la cloison transversale (10) n'est pas solidaire, et au-travers duquel est laminé le fluide hydraulique de viscosité élevée contenu dans les chambres d'amortisseur (34, 35) et dans la chambre auxiliaire (58).

2. Contre-fiche selon la revendication 1, caractérisée en ce que ladite cloison transversale annulaire (10) est solidaire de l'armature externe tubulaire (4) et s'étend en saillie sensiblement radiale vers l'intérieur de la partie centrale, formant corps d'amortisseur (12), de ladite armature externe (4), de sorte que son bord radial interne délimite ledit passage annulaire de laminage (39) autour de ladite partie centrale (23) de l'armature interne (28).

3. Contre-fiche selon la revendication 2, caractérisée en ce que ladite partie centrale de l'armature interne (28) comprend une entretoise longitudinale (23) maintenant un écartement axial constant entre deux fonds d'amortisseur (19, 20), dont chacun est adjacent à l'une respectivement des chambres d'amortisseur (34, 35) et solidaire de l'un respectivement des tronçons tubulaires internes (15, 16), ledit passage annulaire de laminage (39) étant délimité entre ladite cloison transversale (10) et la surface latérale externe de ladite entretoise (23).

4. Contre-fiche selon l'une des revendications 1 à 3, caractérisée en ce que l'amortisseur hydraulique (1) comporte au moins un dispositif d'écrêtage de l'effort d'amortissement, comprenant au moins un clapet de décharge (45, 40) destiné à autoriser l'écoulement d'un débit de fuite de l'une des chambres d'amortisseur (34, 35), qui est comprimée par un déplacement axial relatif des deux organes rigides (25, 29), vers l'autre chambre d'amortisseur alors en dépression, dès que la pression différentielle entre les deux chambres dépasse un seuil donné.

5. Contre-fiche selon la revendication 4, caractérisée en ce que le dispositif d'écrêtage d'effort comprend au moins deux clapets de décharge (40, 45, 45′) dont l'un au moins (40, 45) autorise l'écoulement d'un débit de fuite d'une première chambre d'amortisseur (34), vers la seconde chambre (35) lorsque la pression dans la première chambre est supérieure d'un premier seuil donné à la pression de la seconde chambre et s'oppose à tout écoulement du fluide de viscosité élevée en sens opposé, de ladite seconde chambre (35) à ladite première chambre (34) tandis qu'au moins un autre clapet de décharge (40, 45′) autorise l'écoulement d'un débit de fuite de ladite seconde (35) vers ladite première (34) chambre lorsque la pression dans ladite seconde chambre est supérieure d'un second seuil donné, éventuellement égal au premier seuil, à la pression dans ladite première chambre (34), et s'oppose à tout écoulement en sens opposé, de la première (34) vers la seconde (35) chambre d'amortisseur.

6. Contre-fiche selon l'une des revendications 4 et 5, caractérisée en ce qu'au moins un clapet de décharge est un clapet à obturateur mobile (45) précontraint qui est normalement rappelé en position d'obturation d'au moins un orifice d'écrêtage (40) faisant communiquer les deux chambres d'amortisseur (34, 35) l'une avec l'autre, et écarté de la position d'obturation dès que la pression différentielle à laquelle il est sensible dépasse ledit seuil donné correspondant.

7. Contre-fiche selon la revendication 6, caractérisée en ce qu'au moins un orifice d'écrêtage est un trou (40) percé au travers de la cloison transversale (10), et l'obturateur mobile correspondant est une lame-ressort (45) dont au moins une partie, formant diaphragme, est logée dans l'une des chambres d'amortisseur (35), et élastiquement précontrainte et appliquée en position d'obturation du trou (40), contre la face de la cloison (10), qui est tournée vers ladite chambre d'amortisseur (35), ledit trou (40) étant progressivement dégagé par flexion élastique de la lame-ressort (45) vers l'intérieur de ladite chambre d'amortisseur (35) qui la loge au moins partiellement pour libérer un passage complémentaire au passage annulaire de laminage (39) et augmenter la section de laminage du fluide de viscosité élevée, dès que la pression dans ladite chambre d'amortisseur (35) est inférieure à pression dans l'autre chambre d'amortisseur (34) d'une valeur égale audit seuil donné correspondant.

8. Contre-fiche selon l'une des revendications 4 à 7, caractérisé en ce que l'amortisseur hydraulique (1) comporte de plus au moins un dispositif de saturation (75) du débit de fuite d'au moins un clapet de décharge (40, 45), qui limite ledit débit de fuite lorsque la pression différentielle entre les deux chambres d'amortisseur (34, 35) atteint un troisième seuil donné, supérieur au premier et/ou au second seuil donné.

9. Contre-fiche selon la revendication 8 telle que rattachée à l'une des revendications 6 à 7, caractérisée en ce que ledit dispositif de saturation du débit de fuite d'au moins un clapet de décharge (40, 45) comprend un mécanisme comportant au moins une butée (75) limitant la course de l'obturateur mobile (45) lorsque ce dernier est écarté de sa position d'obturation du ou des orifices d'écrêtage (40) correspondants.

10. Contre-fiche selon la revendication 9 telle que rattachée à la revendication 7, caractérisée en ce que ladite butée est une cale (75) fixée à une face de ladite cloison (10) et chevauchant au moins partiellement une lame-ressort (45) de sorte que cette dernière soit au moins en partie logée entre ladite cale (75) et ladite face de la cloison (10) et que ses débattements en flexion soient limités par appui contre ladite cale (75).

11. Contre-fiche selon l'une des revendications 4 à 10, caractérisée en ce que l'amortisseur hydraulique (101) comprend de plus au moins un dispositif de coupure d'écrêtage (181) piloté en pression, et commandant l'interruption du débit de fuite d'au moins un clapet de décharge (140, 145) lorsque pression différentielle entre les deux chambres d'amortisseur (170, 172) atteint un quatrième seuil donné, supérieur auxdits premier, second et troisième seuils donnés.

12. Contre-fiche selon la revendication 11, telle que rattachée à la revendication 6, caractérisée en ce que ledit dispositif de coupure d'écrêtage comprend un clapet de fermeture (181) muni d'un obturateur mobile (186) déplacé d'une position de dégagement d'au moins un orifice d'écrêtage (140) d'au moins un clapet de décharge (140, 145) à une position d'obturation du ou desdits orifices d'écrêtage correspondants (140), lorsque la pression différentielle atteint ledit quatrième seuil.

13. Contre-fiche selon la revendication 12, telle que rattachée à la revendication 7, caractérisée en ce que ledit clapet de fermeture (181) est porté par ladite cloison (110) de sorte que son obturateur mobile (186) vienne obturer au moins un trou d'écrêtage (140) percé dans ladite cloison (110).

14. Contre-fiche selon la revendication 13, caractérisée en ce que l'obturateur mobile du clapet de fermeture (181) est monté en tiroir (186) coulissant avec étanchéité dans un alésage transversal (182) ménagé dans ladite cloison (110) et qui coupe un trou d'écrêtage (140), ledit alésage transversal (182) étant, de part et d'autre dudit tiroir (186), en communication permanente (184, 185) avec l'une respectivement des deux chambres d'amortisseur (170, 172) de sorte que les pressions de ces chambres soient constamment appliquées sur les extrémités du tiroir (186), qui est rappelé élastiquement (188) en position de dégagement du trou d'écrêtage (140) par au moins un organe élastique (188), de préférence également logé dans ledit alésage transversal (182), ledit tiroir (186) étant repoussé à l'encontre de l'organe élastique (188) en position d'obturation du trou d'écrêtage (140) lorsque la pression différentielle entre les deux chambres d'amortisseur (170, 172) atteint ledit quatrième seuil et développe sur le tiroir (186) un effort supérieur à la précontrainte de l'organe élastique de rappel (188).

15. Contre-fiche selon l'une des revendications 11 à 14, caractérisée en ce que l'amortisseur hydraulique (101) comprend un dispositif de rétablissement du laminage initial par le passage annulaire de laminage (139) et qui comprend un dispositif de coupure d'écrêtage (181) combiné à chaque clapet de décharge (140, 145).

16. Contre-fiche selon l'une des revendications 1 à 15, caractérisée en ce que chacune des deux chambres d'amortisseur (34, 35) délimitées de part et d'autre de ladite cloison transversale (10) dans le corps tubulaire d'amortisseur (12) est subdivisé par une paroi transversale rigide (68, 69), et solidaire de celle des deux armatures dont la cloison (10) transversale n'est pas solidaire, en deux chambres dont l'une, en position axiale interne et adjacente à ladite cloison transversale (10), est une chambre de travail (70, 72) active en pression dynamique, et dont l'autre, en position axiale externe et directement adjacente au manchon élastiquement déformable (17, 18) du côté correspondant, est une chambre (71, 73) de compensation des variations de volume dues aux déformations du matériau élastiquement déformable, et qui est en communication permanente avec l'autre chambre, de même nature, en position axiale externe, par au moins une canalisation (74).

17. Contre-fiche selon la revendication 16, caractérisée en ce qu'au moins une canalisation de liaison des deux chambres (71, 73) en position axiale externe est une tuyauterie extérieure (74) au corps d'amortisseur (12) auquel elle est raccordée ses deux extrémités.

18. Contre-fiche selon la revendication 16, caractérisée en ce qu'au moins une canalisation de liaison des deux chambres (171, 173) en position axiale externe est formée par un passage (174) essentiellement longitudinal ménagé dans l'épaisseur du corps d'amortisseur (105).

19. Contre-fiche selon l'une des revendications 16 à 18, dont la cloison transversale (10) est solidaire du corps d'amortisseur (12), caractérisée en ce que les parois transversales sont des coupelles (68, 69) sensiblement en forme de disques et maintenues en position fixe et écartées l'une de l'autre sur l'armature interne par une entretoise (23) de cette armature qui applique chacune des coupelles (68, 69) contre l'un respectivement de deux fonds d'amortisseur (19, 20) sensiblement radiaux, dont chacun est solidaire de l'un respectivement des deux tronçons tubulaires internes (15, 16).

20. Contre-fiche selon l'une des revendications 16 à 18, caractérisée en ce que les parois transversales sont des pistons (168, 169) montés coulissant avec étanchéité contre celle (104) des deux armatures (104, 128) dont ils ne sont pas solidaires.

21. Contre-fiche selon la revendication 20, dont la cloison transversale (110) est solidaire du corps d'amortisseur (105), caractérisée en ce que les pistons (168, 169) sont solidaires chacun de l'un respectivement des tronçons tubulaires internes (115, 116).

22. Contre-fiche selon la revendication 21, caractérisée en ce que l'un au moins (168) des deux pistons est d'une seule pièce avec un tronçon tubulaire interne (115) et un fond (119) de fermeture de l'extrémité axiale interne de ce tronçon (115).

23. Contre-fiche selon l'une des revendications 21 et 22, caractérisée en ce que l'un au moins (169) des deux pistons est réalisé par l'assemblage amovible d'une bride radiale externe solidaire d'un tronçon solidaire interne (116) et d'une bride radiale externe (121) solidaire d'un fond (120) rapporté sur la partie d'extrémité axiale interne dudit tronçon tubulaire interne (116).

24. Contre-fiche selon l'une des revendications 1 à 23, caractérisée en ce que le jeu radial de laminage entre la cloison transversale (10) et l'armature (23') dont la cloison (10) n'est pas solidaire est un jeu variable en fonction de la position axiale relative de ladite cloison (10) et de ladite armature (23') dont la cloison n'est pas solidaire, afin d'assurer un amortissement variable en fonction de la charge.

25. Contre-fiche selon la revendication 24, sur laquelle le jeu radial de laminage est délimité entre le bord radial interne de la cloison transversale annulaire (10) et la surface latérale externe d'une entretoise (23') de l'armature interne, caractérisée en ce que ladite surface latérale externe de l'entretoise (23') est de forme sensiblement tronconique ou biconique vers au moins une extrémité axiale de l'amortisseur.

26. Contre-fiche selon l'une des revendications 1 à 25, caractérisée en ce que le dispositif de compensation des dilatations thermiques (52) du fluide de viscosité élevée est agencé en accumulateur dans lequel la chambre auxiliaire (58) est remplie de fluide et pressurisée par l'action d'un dispositif de pressurisation (53, 54, 56) assurant le remplissage sous pression statique des deux chambres d'amortisseur (34, 35).

27. Contre-fiche selon la revendication 26, caractérisée en ce que ladite communication permanente entre ladite chambre auxiliaire (58) et au moins une chambre d'amortisseur (34) est assurée par un canal calibré (59) sur au moins une partie de sa longueur et constituant un filtre des pulsations de pression dynamique dans les chambres d'amortisseur (34, 35).

28. Contre-fiche selon la revendication 27, caractérisée en ce que la canal calibré (59) traverse ledit fond d'amortisseur (19) qui délimite partiellement ladite chambre auxiliaire (58) en débouchant directement dans la chambre d'amortisseur (34) dont ledit fond (19) est adjacent.

29. Contre-fiche selon la revendication 27, telle que rattachée à la revendication 2, caractérisée en ce que la partie calibrée du canal comprend au moins un perçage radial (190) ménagé dans ladite partie centrale (123) de l'armature interne (128) et débouchant d'un côté dans ledit passage annulaire de laminage (139) et de l'autre côté dans un conduit longitudinal (189) s'étendant dans l'armature interne (128) jusqu'au delà d'un fond d'amortisseur (120) solidaire d'un tronçon tubulaire interne (116) et débouchant dans ladite chambre auxiliaire (158) logée dans ledit tronçon tubulaire interne (116).

30. Contre-fiche selon la revendication 27 telle que rattachée à la revendication 18, caractérisée en ce que la partie calibrée du canal comprend au moins un perçage radial (191) ménagé dans la cloison transversale et annulaire (110) et débouchant d'une part dans le canal longitudinal (174) percé dans l'épaisseur du corps d'amortissement et mettant en communication les deux chambres de compensation (171) et (173), et, d'autre part, dans ledit passage annulaire de laminage (139).

31. Contre-fiche selon l'une des revendications 27 à 30, caractérisée en ce que la chambre auxiliaire (58) est également isolée des pulsations de pression dynamique dans les chambres d'amortisseur (34, 35) par un clapet de surpression (64, 65) taré à une pression d'ouverture supérieure à la pression maximale de fonctionnement normal de l'amortisseur, pour autoriser un écoulement de fluide d'au moins une chambre d'amortisseur (34) vers la chambre auxiliaire (58) dès que la pression dans ladite chambre d'amortisseur est supérieure à ladite pression d'ouverture.

32. Contre-fiche selon la revendication 31, caractérisée en ce que ledit clapet de surpression est un clapet à au moins une lame-ressort (64) logée dans la chambre auxiliaire (58) et précontrainte contre le fond d'amortisseur (19) qui délimite partiellement ladite chambre auxiliaire (58), en position d'obturation d'au moins un orifice (65) traversant ledit fond (19) et mettant ladite chambre auxiliaire (58) en communication avec la chambre d'amortisseur (34) adjacente audit fond (19).

33. Contre-fiche selon l'une des revendications 27 à 32, caractérisée en ce que la chambre auxiliaire (58) est également isolée des pulsations de pression dynamique dans les chambres d'amortisseur (34, 35) par un clapet de gavage taré à une pression d'ouverture inférieure à la pression du fluide dans la chambre auxiliaire (58) sous l'effet du dispositif de pressurisation (53, 54, 56).

34. Contre-fiche selon la revendication 33, caractérisée en ce que ledit clapet de gavage est un clapet à au moins une lame-ressort (66) logée dans la chambre d'amortisseur (34) adjacente au fond d'amortisseur (19) délimitant partiellement la chambre auxiliaire (58), et précontrainte contre ledit fond (19) en position d'obturation d'au moins un orifice (67) traversant ledit fond (19) et mettant ladite chambre auxiliaire (58) en communication avec ladite chambre d'amortisseur (34).

35. Contre-fiche selon l'une des revendications 26 à 34, caractérisée en ce que, dans ledit accumulateur, le fond de ladite chambre auxiliaire (158') est constitué une paroi (156') élastiquement déformable en élastomère assurant l'étanchéité et le rappel élastique dudit fond en position de compression du fluide contenu dans la chambre auxiliaire (158').

36. Contre-fiche selon l'une des revendications 26 à 35, caractérisée en ce que, dans ledit accumulateur (52), ladite chambre auxiliaire (58) est partiellement délimitée par une membrane souple et étanche (56) soumise à l'action d'un organe élastique du dispositif de pressurisation.

37. Contre-fiche selon la revendication 36, caractérisée en ce que le dispositif de pressurisation est pneumatique et son organe élastique est un volume de gaz sous pression logé dans une chambre pneumatique (53) partiellement délimitée par ladite membrane (56).

38. Contre-fiche selon la revendication 37, caractérisée en ce que ladite chambre auxiliaire (58) est délimitée à l'intérieur d'un tronçon tubulaire interne (15), entre un fond de fermeture (19) de l'extrémité axiale interne de ce tronçon (15) et ladite membrane étanche (56), de forme cupulaire et fixée de manière étanche par son bord périphérique (57) dans ledit tronçon tubulaire interne (15), ladite chambre pneumatique sous pression (53) étant délimitée entre ladite membrane (56) et un couvercle (54) de fermeture de l'extrémité axiale externe dudit tronçon tubulaire interne (15).

39. Contre-fiche selon la revendication 38, caractérisée en ce que le dispositif de compensation des dilatations (52) comporte un indicateur du niveau de remplissage de la chambre auxiliaire (58), ledit indicateur comportant une tige témoin (62), dont une extrémité est solidaire de la partie centrale de la membrane (56), et qui est montée coulissante axialement dans un tube (63) au moins partiellement transparent faisant saillie à l'extérieur dudit couvercle (54), sur lequel est de préférence également montée une valve de gonflage (60) de la chambre pneumatique (53).

40. Contre-fiche selon la revendication 36, caractérisée en ce que le dispositif de pressurisation est mécanique et son organe élastique est un ressort (154) repoussant un piston (153) contre ladite membrane (156).

41. Contre-fiche selon la revendication 40, caractérisée en ce que ladite chambre auxiliaire (158) est délimitée à l'intérieur d'un tronçon tubulaire interne (116), entre un fond d'amortisseur (120) solidaire de l'extrémité axiale interne dudit tronçon (116) et ladite membrane (156) du type à déroulement et dont la partie centrale est appliquée contre le piston (153) monté coulissant axialement sans étanchéité dans ledit tronçon (116) qui loge également le ressort (154), le piston (153) étant guidé dans ses déplacements axiaux par un axe central (163) solidaire du piston (153) et monté axialement coulissant avec un faible jeu radial à l'intérieur d'une entretoise tubulaire (123), qui maintient un écartement axial constant entre ledit fond d'amortisseur (120) et un autre fond d'amortisseur (119) solidaire de l'extrémité axiale interne de l'autre tronçon tubulaire interne (115).

42. Contre-fiche selon la revendication 41, caractérisée en ce que ledit dispositif de compensation des dilatations comporte un indicateur du niveau de remplissage de ladite chambre auxiliaire (158), ledit indicateur comportant une tige témoin (162) solidaire dudit piston (153) et s'étendant longitudinalement vers l'extérieur en traversant un fond (125) qui ferme l'extrémité axiale externe dudit tronçon tubulaire interne (116) et contre lequel prend appui le ressort (154) de poussée du piston (153).

43. Contre-fiche selon l'une des revendications 8 à 42 telle que rattachée à la revendication 7, caractérisée en ce que la lame ressort (45) d'au moins un clapet de décharge est fixée contre la face de la cloison (10) qui est tournée vers la chambre d'amortisseur (34) vers l'intérieur de laquelle la lame-ressort (45) est fléchie à ouverture dudit clapet de décharge.

44. Contre-fiche selon la revendication 43, caractérisée en ce que le dispositif d'écrêtage d'effort comporte plusieurs trous (40) percés dans la cloison transversale (10) et à chacun desquels est associé un clapet de décharge à lame-ressort précontrainte (45, 45') lesdits clapets de décharge étant disposés de part et d'autre de ladite cloison (10) de sorte que les lames ressorts (45, 45') de tous les clapets autorisant l'écoulement de débits de fuite dans un même sens d'une chambre d'amortisseur à l'autre, sont toutes fixées contre la face de la cloison (10) qui est tournée vers la chambre d'amortisseur dans laquelle lesdites lames-ressorts (45, 45') fléchissent.

45. Contre-fiche selon la revendication 44, caractérisée en ce que les lames-ressorts (45, 45') fixées sur une même face de la cloison transversale (10) sont des lames qui, en position non fléchie, s'étendent sensiblement radialement contre cette face.

46. Contre-fiche selon l'une des revendications 44 et 45, caractérisée en ce qu'au moins deux lames-ressorts (45, 45') disposées d'un même côté de la cloison transversale (10), sont solidaires d'une embase commune (43) par rapport à laquelle les lames-ressorts sont destinées à fléchir élastiquement, et qui est fixée contre la face de ladite cloison (10) tournée de ce côté.

47. Contre-fiche selon l'une des revendications 44 à 46, caractérisée en ce que toutes les lames-ressorts (45, 45') disposées d'un même côté de la cloison transversale (10) sont d'une seule pièce, découpée dans une tôle métallique, avec une couronne annulaire (43) plane fixée de manière amovible contre une partie annulaire en position radiale externe sur la face correspondante de ladite cloison (10) et à l'intérieur du corps d'amortisseur (12), et chaque lame-ressort (45) est liée à ladite couronne (43) par son pied (46) délimité entre deux évidements (47) ménagés dans le bord radial interne de la couronne (43), et s'étend vers l'intérieur de cette dernière jusqu'à son extrémité libre formant diaphragme en regard d'un trou d'écrêtage (40) de ladite cloison (10).

48. Contre-fiche selon l'une des revendications 43 à 47, caractérisée en ce que au moins une lame-ressort (45) disposée d'un côté de la cloison (10) et au moins une lame-ressort (45') disposée de l'autre côté de ladite cloison (10) sont fixées à cette dernière par des moyens de fixation communs (49, 50).

49. Contre-fiche selon l'une des revendications 44 à 48, caractérisée en ce que la cloison (10) est percée d'un nombre pair de trous d'écrètage (40), de préférence régulièrement répartis en direction circonférentielle autour de l'axe de la contre-fiche, et en ce qu'une moitié du même nombre pair de lames-ressorts (45, 45') est disposée de chaque côté de la cloison (10), les lames-ressorts de chaque côté de cette dernière coopérant avec une moitié du nombre de trous (40), pris en alternance en direction circonférentielle avec les trous (40) coopérant avec les lames-ressorts de l'autre côté de la cloison (10).

50. Contre-fiche selon la revendication 49, caractérisée en ce que les lames-ressorts (45, 45') sont réalisées en deux sous-ensembles identiques (41, 42) fixés chacun sur l'une respectivement des faces de la cloison transversale (10) par les mêmes ensembles vis-écrou (49, 50), et constitués chacun d'une seule pièce en tôle métallique décalée par rapport à l'autre, en direction circonférentielle, d'un angle au centre égal au rapport de 360° par le nombre de trous d'écrètage (40) percés dans la cloison transversale (10).

51. Contre-fiche selon l'une des revendications 43 à 50, telle que rattachée à la revendication 10, caractérisée en ce qu'au moins une lame-ressort (45) et au moins une cale (75) formant butée limitant la flexion de ladite lame-ressort (45) sont fixées contre la cloison (10) par des moyens de fixation communs (49, 50).

52. Contre-fiche selon la revendication 51, telle que rattachée à la revendication 47, caractérisée en ce qu'une cale (75) formant une unique butée pour toutes les lames-ressorts (45, 45') disposées d'un même côté de ladite cloison (10) a la forme d'une rondelle annulaire rigidement appliquée contre la couronne annulaire (43) dont sont solidaires lesdites lame-ressorts (45, 45'), et comportant de préférence des bras radiaux (76) en saillie vers l'intérieur et recouvrant lesdites lames-ressorts (45, 45') en présentant en regard de ces dernières des surfaces d'appui conformées selon la déformée en flexion des lames-ressorts (45, 45') pour une pression différentielle égale audit troisième seuil.

53. Contre-fiche selon l'une des revendications 1 à 52, caractérisée en ce que l'armature tubulaire externe (4) comprend l'assemblage rigide et démontable de deux cylindres (5, 6) de même section transversale, disposés dans le prolongement axial l'un de l'autre et sensiblement bout-à-bout par des brides d'extrémité (7, 8) en regard et entre lesquelles est enserrée au moins une partie radiale périphérique (11) de la cloison transversale (10), de sorte que les parties d'extrémité adjacentes des deux cylindres (5, 6) forment le corps tubulaire d'amortisseur (12), et que l'autre partie d'extrémité de chacun d'eux forme le tronçon tubulaire externe (13, 14) d'un organe de rappel élastique (2, 3), l'un (5) des deux cylindres comportant de plus, de préférence à son extrémité opposée à celle par laquelle il est adjacent à l'autre cylindre (6), une autre bride (31) d'assemblage rigide et démontable à l'organe rigide (29), qui est solidaire de l'armature externe (4) et de préférence agencé en cloche à embout (29) muni d'un oeil de liaison (33) sur rotule (32) constituant lesdits moyens d'articulation correspondants.

54. Contre-fiche selon l'une des revendications 1 à 52, caractérisée en ce que l'armature tubulaire externe 104) comprend un corps central cylindrique (105) d'une seule pièce avec ladite cloison transversale (110), et formant corps tubulaire d'amortisseur, et ayant deux parties d'extrémité axiale (106, 107) dans chacune desquelles est engagé et retenu un cylindre formant le tronçon tubulaire externe (113, 114) de l'un des organes de rappel élastique (102, 103), l'une desdites parties d'extrémité axiale (106) étant simultanément fixée rigidement à l'organe rigide (129) solidaire de l'armature externe (104) et de préférence agencée en cloche à embout muni d'un oeil de liaison (133) sur rotule (132) constituant lesdits moyens d'articulation correspondants.

55. Contre-fiche selon l'une des revendications 1 à 54, caractérisée en ce que l'armature interne (28) comprend, en plus des deux tronçons tubulaires internes (15, 16), qui sont cylindriques, au moins un fond radial (19) percé d'un trou central et solidaire d'un tronçon tubulaire interne (15), ainsi qu'au moins un support axial (21) et une entretoise axiale (23), ladite entretoise maintenant au moins un fond radial (19) contre une butée radiale (24) portée par un support axial (21) traversant avec étanchéité le trou central dudit fond (19).

56. Contre-fiche selon la revendication 55, caractérisée en ce que ladite butée radiale est une butée amovible comportant un écrou (24) vissé sur une partie filetée du support axial correspondant (21).

57. Contre-fiche selon l'une des revendications 55 et 56, caractérisée en ce que au moins un support axial est une tige axiale (21) également engagée dans ladite entretoise (23) qui est tubulaire.

58. Contre-fiche selon la revendication 57, caractérisée en ce que ladite tige axiale (21) est d'une seule pièce avec l'organe rigide (25) solidaire de l'armature interne (28) et conformé en embout présentant de préférence un oeil de liaison (27) sur rotule (26) formant lesdits moyens d'articulation correspondants.

59. Contre-fiche selon la revendication 56, caractérisée en ce qu'au moins un support axial est une portion d'extrémité axiale (123a) de ladite entretoise (123), ladite portion d'extrémité axiale (123a) étant partiellement filetée et raccordée au reste de l'entretoise (123) par un épaulement contre lequel un fond radial (119) est serré par un écrou (124) vissé sur ladite portion d'extrémité axiale (123a) de l'entretoise.

## Ansprüche

1. Elastische Rückstellverbindungsvorrichtung vom elastohydraulischen Typ mit eingebauter linearer Dämpfung, die durch gedrosselte Strömung einer Hydraulikflüssigkeit in dünner Schicht bewirkt wird, insbesondere für ein Rotorblatt eines Fluggeräts mit Hubschraube, mit:

- zwei starren Elementen (25, 29), die jeweils mit Gelenkmitteln (26, 32) versehen sind, die dazu vorgesehen sind, eines der starren Elemente mit einem ersten Teil, etwa einem Rotorblatt oder einem Element für die Verbindung des Rotorblatts mit der Rotornabe, und das andere starre Element mit einem zweiten Teil, etwa der Rotornabe, zu verbinden,

- einer hydraulischen Dämpfungsvorrichtung (1), die zwei Dämpfungskammern (34, 35) mit in entgegengesetzter Richtung veränderbarem Volumen umfaßt, die durch den Innenraum eines mit einem der starren Elemente (29) verbundenen röhrenförmigen Körpers (12) begrenzt sind und voneinander durch eine einen Kolben bildende, im röhrenförmigen Körper (12) angebrachte und ebenfalls mit einem der starren Elemente (29) verbundene transversale Zwischenwand (10) getrennt sind und die mit einer Hydraulikflüssigkeit gefüllt sind, die dazu vorgesehen ist, sich von einer in die andere der Dämpfungskammern (34, 35) durch wenigstens einen schmalen Verbindungskanal (39) zwischen diesen Kammern (34, 35) zu bewegen, wenn die starren Elemente (25, 29) gegeneinander im wesentlichen entlang der Hauptachse (A-A) der Verbindungsvorrichtung verschoben werden, um für die relative Verschiebung der starren Elemente (25, 29) eine lineare Dämfungswirkung zu erzeugen,

- einer Vorrichtung (52) zur Kompensation der Wärmeausdehnungen der Hydraulikflüssigkeit, die eine Hilfskammer (58) umfaßt, welche ein Volumen für die Hydraulikflüssigkeit enthält und ständig mit wenigstens einer der Dämpfungskammern (34) durch (59) einen die Hilfskammer (58) teilweise begrenzenden und an eine Dämpfungskammer (34) angrenzenden Boden (19) der Dämpfungsvorrichtung hindurch in Verbindung steht, und

- wenigstens einem elastischen Rückstellelement (2 oder 3), das eine Muffe (17 oder 18) aus einem verformbaren elastischen Material umfaßt, die mit ihren inneren bzw. äußeren Seitenflächen auf dichte Weise zwischen zwei inneren (15 oder 16) bzw. äußeren (13 oder 14) starren, röhrenförmigen, im wesentlichen zur Hauptachse (A-A) koaxialen Teilen der Verbindungsvorrichtung haftet und mit einem entsprechenden der zwei starren Elemente (25, 29) verbunden ist, derart, daß die Muffe (17 oder 18) durch eine Schubkraft verformt wird, wenn die zwei starren Elemente (25, 29) im wesentlichen entlang der Hauptachse (A-A) der Verbindungsvorrichtung gegeneinander verschoben werden und daß die Muffe (17 oder 18) auf die starren Elemente eine elastische Rückstellwirkung ausübt, die sie in eine relative Anfangsposition zurückzubringen versucht, wobei die Muffe (17 oder 18) außerdem eine dichte Verschlußverbindung der hydraulischen Dämpfungsvorrichtung (1) bildet, dadurch gekennzeichnet, daß die Dämpfungskammern (34, 35) in axialer Richtung zwischen zwei elastischen Rückstellelementen (2, 3) begrenzt sind, deren äußere, starre, röhrenförmige Teile (13, 14) in Längsrichtung auf beiden Seiten des röhrenförmigen Dämpfungsvorrichtungskörpers (12) im wesentlichen koaxial zueinander und zum röhrenförmigen Körper (12) angeordnet und mit diesem letzteren unter Ausbildung einer einzigen, röhrenförmigen, äußeren Ummantelung (4), die mit einem (29) der zwei starren Elemente verbunden ist, verbunden sind, wobei die inneren, starren, röhrenförmigen Teile (15, 16) der elastischen Rückstellelemente (2, 3) im wesentlichen zueinander koaxial sind, in Längsrichtung in einem gegenseitigen Abstand und auf beiden Seiten der transversalen Zwischenwand (10) der Dämpfungsvorrichtung (1) angeordnet und miteinander sowie mit dem anderen starren Element (25), dessen äußere, röhrenförmige Ummantelung (4) nicht mit ihm verbunden ist, verbunden sind und dadurch eine einzige innere Ummantelung (28) ausbilden, die einen Mittelteil (23) enthält, der die zwei Dämpfungskammern (34, 35) in axialer Richtung durchsetzt und die zwei inneren, röhrenförmigen Teile (15, 16) miteinander verbindet und dabei von der transversalen Zwischenwand (10), die eine ringförmige Gestalt besitzt und mit der äußeren Ummantelung (4) verbunden ist, umgeben ist, derart, daß die Muffen (17, 18) aus elastisch verformbarem Material der elastischen Rückstellelemente (2, 3) jeweils den dichten Verschluß einer entsprechenden der zwei Dämpfungskammern (34, 35) auf der transversalen Zwischenwand (10) gegenüberliegenden Seite gewährleisten, wobei die Dämpfungskammern (34, 35) miteinander durch einen schmalen, ringförmigen Kanal (39), der durch ein radiales Schichtbildungsspiel zwischen der transversalen Zwischenwand (10) und derjenigen (28) der Ummantelungen, die nicht mit der transversalen Zwischenwand (10) verbunden ist, begrenzt wird, in ständiger Verbindung stehen und wobei durch diesen Kanal hindurch die Hydraulikflüssigkeit mit erhöhter Viskosität, die in den Dämpfungskammern (34, 35) und in der Hilfskammer (58) enthalten ist, gepreßt wird.

2. Verbindungsvorrichtung gemäß Anspruch 1, dadurch gekennzeichnet, daß die ringförmige transversale Zwischenwand (10) mit der röhrenförmigen, äußeren Ummantelung (4) verbunden ist und sich zum Innenraum des den Dämpfungsvorrichtungskörper (12) bildenden Mittelteils der äußeren Ummantelung (4) im wesentlichen in radialer Richtung vorstehend erstreckt, derart, daß ihre radiale Innenkante den ringförmigen Schichtbildungskanal (39) um den Mittelteil (23) der inneren Ummantelung (28) begrenzt.

3. Verbindungsvorrichtung gemäß Anspruch 2, dadurch gekennzeichnet, daß der Mittelteil der inneren Ummantelung (28) einen longitudinalen Abstandhalter (23) umfaßt, der zwischen den zwei Böden der Dämpfungsvorrichtung (19, 20) einen konstanten axialen Abstand aufrechterhält, wobei jeder der zwei Böden an eine entsprechende der zwei Dämpfungskammern (34, 35) angrenzt und mit einem entsprechenden inneren, röhrenförmigen Teil (15, 16) verbunden ist und wobei der ringförmige Schichtbildungskanal (39) zwischen der transversalen Zwischenwand (10) und der äußeren Seitenfläche des Abstandhalters (23) begrenzt wird.

4. Verbindungsvorrichtung gemäß einem der Ansprüche 1 bis 3, dadurch gekennzeichnet, daß die hydraulische Dämpfungsvorrichtung (1) wenigstens eine Vorrichtung zur Spitzenbegrenzung der Dämpfungswirkung enthält, die wenigstens ein Ausflußventil (45, 40) umfaßt, das dazu vorgesehen ist, den Ausfluß einer Leckrate aus einer der Dämpfungskammern (34, 35), die durch eine relative axiale Verschiebung der zwei starren Elemente (25, 29) komprimiert wird, in die andere Dämpfungskammer, die daher entspannt wird, zuzulassen, sobald der Druckunterschied zwischen den zwei Kammern einen gegebenen Schwellenwert übersteigt.

5. Verbindungsvorrichtung gemäß Anspruch 4, dadurch gekennzeichnet, daß die Vorrichtung zur Kraftspitzenbegrenzung wenigstens zwei Auslaufventile (40, 45, 45') umfaßt, von denen wenigstens eines (40, 45) das Auslaufen einer Leckrate einer ersten Dämpfungskammer (34) in die zweite Dämpfungskammer (35) zuläßt, wenn der Druck in der ersten Kammer über einem gegebenen ersten Schwellenwert oberhalb des Druckes der zweiten Kammer liegt und sich jedem Ausfluß der Flüssigkeit mit erhöhter Viskosität in entgegengesetzter Richtung von der zweiten Kammer (35) in die erste Kammer (34) widersetzt, während wenigstens ein anderes Auslaufventil (40, 45') den Auslauf einer Leckrate der zweiten (35) in die erste (34) Kammer zuläßt, wenn der Druck in der zweiten Kammer über einem zweiten gegebenen Schwellenwert, der eventuell gleich dem ersten Schwellenwert ist, oberhalb des Druckes in der ersten Kammer (34) liegt, und sich jedem Ausfluß in entgegengeseszter Richtung von der ersten (34) in die zweite (35) Dämpfungskammer widersetzt.

6. Verbindungsvorrichtung gemäß einem der Ansprüche 4 und 5, dadurch gekennzeichnet, daß wenigstens ein Auslaufventil ein mechanisch vorgespanntes Ventil mit beweglichem Verschluß (45) ist, das normalerweise in die Position des Verschlusses wenigstens einer die zwei Dämpfungskammern (34, 35) miteinander verbindenden Spitzenbegrenzungsöffnung (40) zurückgestellt ist und zu dieser Verschlußposition in einen Abstand gelangt, sobald der Druckunterschied, auf den sie anspricht, den entsprechenden gegebenen Schwellenwert übersteigt.

7. Verbindungsvorrichtung gemäß Anspruch 6, dadurch gekennzeichnet, daß wenigstens eine Spitzenbegrenzungsöffnung eine Bohrung (40) ist, die die transversale Zwischenwand (10) durchsetzt, und der entsprechende bewegliche Verschluß ein Federblatt (45) ist, von dem sich wenigstens ein ein Plattenventil bildender Teil in einer der Dämpfungskammern (35) befindet und elastisch vorgespannt ist und in der Verschlußposition der Bohrung (40) gegen die Fläche der Zwischenwand (10) gedrückt wird, die der Dämpfungskammer (35) zugewandt ist, wobei die Bohrung (40) durch die elastische Biegung des Federblatts (45) in das Innere der Dämpfungskammer (35), die sie wenigstens teilweise aufnimmt, progressiv freigegeben wird, um einen zum ringförmigen Schichtbildungskanal (39) komplementären Kanal freizugeben und den Schichtbildungsquerschnitt für die Flüssigkeit mit erhöhter Viskosität zu erhöhen, sobald der Druck in der Dämpfungskammer (35) um einen Wert, der gleich dem entsprechenden gegebenen Schwellenwert ist, unterhalb des Druckes in der anderen Dämpfungskammer (34) liegt.

8. Verbindungsvorrichtung gemäß einem der Ansprüche 4 bis 7, dadurch gekennzeichnet, daß die hydraulische Dämpfungsvorrichtung (1) außerdem wenigstens eine Sättigungsvorrichtung (75) für die Leckrate wenigstens eines Auslaufventils (40, 45) enthält, die die Auslaufmenge begrenzt, wenn der Druckunterschied zwischen den zwei Dämpfungskammern (34, 35) einen dritten gegebenen Schwellenwert erreicht, der über dem ersten und/oder dem zweiten gegebenen Schwellenwert liegt.

9. Verbindungsvorrichtung gemäß Anspruch 8 sowie in Verbindung mit einem der Ansprüche 6 und 7, dadurch gekennzeichnet, daß die Sättigungsvorrichtung für die Leckrate wenigstens eines Auflaufventils (40, 45) einen Mechanismus umfaßt, der wenigstens einen Anschlag (75) enthält, der den Weg des beweglichen Verschlusses (45) begrenzt, sobald sich dieser letztere von seiner Verschlußposition der entsprechenden Spitzenbegrenzungsöffnung(en) (40) in einem Abstand befindet.

10. Verbindungsvorrichtung gemäß Anspruch 9 sowie in Verbindung mit Anspruch 7, dadurch gekennzeichnet, daß der Anschlag ein Beilageblech (75) ist, das an einer Seite der Zwischenwand (10) befestigt ist und wenigstens teilweise eine Blattfeder (45) überlappt, derart, daß sich diese letztere wenigstens zum Teil zwischen dem Beilageblech (75) und der Seite der Zwischenwand (10) befindet und daß ihre Federwege bei der Biegung durch das Anstoßen am Beilageblech (75) begrenzt werden.

11. Verbindungsvorrichtung gemäß einem der Ansprüche 4 bis 10, dadurch gekennzeichnet, daß die hydraulische Dämpfungsvorrichtung (101) außerdem wenigstens eine druckgesteuerte Vorrichtung zum Abschalten der Spitzenbegrenzung (181) umfaßt, die die Unterbrechung der Leckrate wenigstens eines Auslaufventils (140, 145) steuert, wenn der Druckunterschied zwischen den zwei Dämpfungskammern (170, 172) einen vierten gegebenen Schwellenwert erreicht, der oberhalb der gegebenen ersten, zweiten und dritten Schwellenwerte liegt.

12. Verbindungsvorrichtung gemäß Anspruch 11 sowie in Verbindung mit Anspruch 6, dadurch gekennzeichnet, daß die Vorrichtung zum Abschalten der Spitzenbegrenzung ein Verschlußventil (181) umfaßt, das mit einem beweglichen Verschluß (186) versehen ist, der aus einer geöffneten Position wenigstens einer Spitzenbegrenzungsöffnung (140) wenigstens eines Auslaufventils (140, 145) in eine Verschlußposition der entsprechenden Spitzenbegrenzungsöffnung(en) (140) verschoben ist, wenn der Druckunterschied den vierten Schwellenwert erreicht.

13. Verbindungsvorrichtung gemäß Anspruch 12 sowie in Verbindung mit Anspruch 7, dadurch gekennzeichnet, daß das Verschlußventil (181) von der Zwischenwand (110) gehalten wird, derart, daß sein beweglicher Verschluß (186) wenigstens eine die Zwischenwand (110) durchsetzende Spitzenbegrenzungsbohrung (140) verschließt.

14. Verbindungsvorrichtung gemäß Anspruch 13, dadurch gekennzeichnet, daß der bewegliche Verschluß des Verschlußventils (181) als Schieber (186) angebracht ist, der dicht abschließend in einer in der Zwischenwand (110) ausgesparten transversalen Bohrung (182) gleitet und eine Spitzenbegrenzungsbohrung (140) unterbricht, wobei die transversale Bohrung (182) auf beiden Seiten des Schiebers (186) in ständiger Verbindung (184, 185) mit einer entsprechenden der zwei Dämpfungskammern (170, 172) steht, derart, daß die Drücke dieser Kammern ständig auf die Enden des Schiebers (186) ausgeübt werden, der durch wenigstens ein elastisches Element (188), das sich vorzugsweise ebenfalls in der transversalen Bohrung (182) befindet, elastisch in die geöffnete Position der Spitzenbegrenzungsbohrung (140) zurückgestellt wird und der gegen das elastische Element (188) in die Position des Verschlusses der Spitzenbegrenzungsbohrung zurückgedrückt wird, wenn der Druckunterschied zwischen den zwei Dämpfungskammern (170, 172) den vierten Schwellenwert erreicht und auf den Schieber (186) eine Kraft ausübt, die oberhalb der Vorspannung des elastischen Rückstellelementes (188) liegt.

15. Verbindungsvorrichtung gemäß einem der Ansprüche 11 bis 14, dadurch gekennzeichnet, daß die hydraulische Dämpfungsvorrichtung (101) eine Vorrichtung zur Wiederherstellung der anfänglichen Schichtbildung durch den ringförmigen Schichtbildungskanal (139) enthält, die eine mit jedem Auslaufventil (140, 145) kombinierte Vorrichtung zum Abschalten der Spitzenbegrenzung (181) umfaßt.

16. Verbindungsvorrichtung gemäß einem der Ansprüche 1 bis 15, dadurch gekennzeichnet, daß jede der zwei Dämpfungskammern (34, 35), die auf beiden Seiten der transversalen Zwischenwand (10) im röhrenförmigen Dämpfungsvorrichtungskörper (12) begrenzt sind, durch eine starre transversale Wand (68, 69) in zwei Kammern unterteilt ist und mit derjenigen der zwei Ummantelungen, die nicht mit der transversalen Zwischenwand (10) verbunden ist, verbunden ist, wobei eine dieser beiden Kammern in der in axialer Richtung inneren und an die transversale Zwischenwand (10) angrenzenden Position eine auf einen dynamischen Druck ansprechende Arbeitskammer (70, 72) ist und die andere dieser Kammern in der in axialer Richtung äußeren und direkt an die elastisch verformbare Muffe (17, 18) der entsprechenden Seite angrenzenden Position eine Kammer (71, 73) für die Kompensation der Volumenänderungen aufgrund der Verformungen des elastisch verformbaren Materials ist und mit der anderen Kammer gleicher Gestalt in der in axialer Richtung äußeren Position durch wenigstens einen Kanal (74) ständig verbunden ist.

17. Verbindungsvorrichtung gemäß Anspruch 16, dadurch gekennzeichnet, daß wenigstens ein Verbindungskanal für zwei in der in axialer Richtung äußeren Position befindliche Kammern (71, 73) eine außerhalb des Dämpfungsvorrichtungskörpers (12) verlaufende Rohrleitung (74) ist, die mit ihren zwei Enden mit dem Dämpfungsvorrichtungskörper (12) verbunden ist.

18. Verbindungsvorrichtung gemäß Anspruch 16, dadurch gekennzeichnet, daß wenigstens ein Verbindungskanal der zwei Kammern in der in axialer Richtung äußeren Position (171, 173) durch einen im wesentlichen longitudinalen Durchlaß (174), der in der Wand des Dämpfungsvorrichtungskörpers (105) ausgespart ist, gebildet wird.

19. Verbindungsvorrichtung gemäß einem der Ansprüche 16 bis 18, bei der die transversale Zwischenwand (10) mit dem Dämpfungsvorrichtungskörper (12) verbunden ist, dadurch gekennzeichnet, daß die transversalen Wände im wesentlichen scheibenförmige Schalen (68, 69) sind, die durch einen Abstandhalter (23) der inneren Ummantelung in einem gegenseitigen Abstand an dieser Ummantelung an einer festen Position gehalten werden, wobei diese Ummantelung jede der Schalen (68, 69) gegen einen entsprechenden der zwei im wesentlichen radialen Böden der Dämpfungsvorrichtung (19, 20) drückt, von denen jede mit einem entsprechenden der zwei inneren, röhrenförmigen Teile (15, 16) verbunden ist.

20. Verbindungsvorrichtung gemäß einem der Ansprüche 16 bis 18, dadurch gekennzeichnet, daß die transversalen Wände Kolben (168, 169) sind, die auf dichte Weise an derjenigen (104) der zwei Ummantelungen (104, 128) gleitend angebracht sind, mit der sie nicht verbunden sind.

21. Verbindungsvorrichtung gemäß Anspruch 20, bei der die transversale Zwischenwand (110) mit dem Dämpfungsvorrichtungskörper (105) verbunden ist, dadurch gekennzeichnet, daß die Kolben (168, 169) jeweils mit einem entsprechenden der inneren, röhrenförmigen Teile (115, 116) verbunden sind.

22. Verbindungsvorrichtung gemäß Anspruch 21, dadurch gekennzeichnet, daß wenigstens einer (168) der zwei Kolben mit dem inneren, röhrenförmigen Teil (115) und einem Boden (119) zum Verschließen des in axialer Richtung inneren Endes dieses Teils (115) aus einem Stück ausgebildet ist.

23. Verbindungsvorrichtung gemäß einem der Ansprüche 21 und 22, dadurch gekennzeichnet, daß wenigstens einer (169) der zwei Kolben durch die lösbare Verbindung eines mit dem inneren einstückigen Teil verbundenen äußeren radialen Flansches mit einem äußeren radialen Flansch (121), der mit einem am inneren axialen Endbereich des inneren röhrenförmigen Teils (116) angebrachten Boden (120) verbunden ist, hergestellt wird.

24. Verbindungsvorrichtung gemäß einem der Ansprüche 1 bis 23, dadurch gekennzeichnet, daß das radiale Schichtbildungsspiel zwischen der transversalen Zwischenwand (10) und der Ummantelung (23′), die mit der Zwischenwand (10) nicht verbunden ist, ein veränderbares Spiel in Abhängigkeit von der relativen axialen Position der Zwischenwand (10) und derjenigen Ummantelung (23′) ist, die nicht mit der Zwischenwand verbunden ist, damit eine variable Dämpfung in Abhängigkeit von der Beanspruchung gewährleistet wird.

25. Verbindungsvorrichtung gemäß Anspruch 24, bei der das radiale Schichtbildungsspiel zwischen der radialen Innenkante der ringförmigen, transversalen Zwischenwand (10) und der äußeren Seitenfläche eines Abstandhalters (23′) der inneren Ummantelung begrenzt ist, dadurch gekennzeichnet, daß die äußere Seitenfläche des Abstandhalters (23′) eine im wesentlichen kegelstumpfartige oder doppelkonische Form in Richtung wenigstens eines axialen Endes der Dämpfungsvorrichtung besitzt.

26. Verbindungsvorrichtung gemäß einem der Ansprüche 1 bis 25, dadurch gekennzeichnet, daß die Vorrichtung zur Kompensation der Wärmedehnungen (52) der Flüssigkeit mit erhöhter Viskosität als Akkumulator angeordnet ist, in dem die Hilfskammer (58) mit Flüssigkeit gefüllt ist und durch die Wirkung einer Druckbeaufschlagungsvorrichtung (53, 54, 56), die das Auffüllen der zwei Kammern der Dämpfungsvorrichtung (34, 35) unter statischem Druck gewährleistet, unter Druck gesetzt wird.

27. Verbindungsvorrichtung gemäß Anspruch 26, dadurch gekennzeichnet, daß die ständige Verbindung zwischen der Hilfskammer (58) und wenigstens einer Kammer der Dämpfungsvorrichtung (34) durch einen Kanal (59) gewährleistet wird, der wenigstens auf einem Teil seiner Länge kalibriert ist und ein Impulsfilter für den in den Kammern der Dämpfungsvorrichtung (34, 35) herrschenden dynamischen Druck bildet.

28. Verbindungsvorrichtung gemäß Anspruch 27, dadurch gekennzeichnet, daß der kalibrierte Kanal (59) den die Hilfskammer (58) teilweise begrenzenden Boden (19) der Dämpfungsvorrichtung durchsetzt und direkt in diejenige Dämpfungskammer (34) mündet, deren Boden (19) angrenzt.

29. Verbindungsvorrichtung gemäß Anspruch 27 sowie in Verbindung mit Anspruch 2, dadurch gekennzeichnet, daß der kalibrierte Teil des Kanals wenigstens eine radiale Bohrung (190) umfaßt, die im Mittelteil (123) der inneren Ummantelung (128) ausgespart ist und einerseits in den ringförmigen Schichtbildungsdurchlaß (139) und andererseits in eine longitudinale Leitung (189) mündet, die sich in der inneren Ummantelung (128) bis über einen mit einem inneren, röhrenförmigen Teil (116) verbundenen Boden (120) der Dämpfungsvorrichtung hinaus erstreckt und in die im inneren, röhrenförmigen Teil (116) befindliche Hilfskammer (158) mündet.

30. Verbindungsvorrichtung gemäß Anspruch 17 sowie in Verbindung mit Anspruch 18, dadurch gekennzeichnet, daß der kalibrierte Teil des Kanals wenigstens eine radiale Bohrung (191) umfaßt, die in der transversalen und ringförmigen Zwischenwand (110) ausgespart ist und einerseits in den longitudinalen Kanal (174), der die Wand des Dämpfungsvorrichtungskörpers durchsetzt und die zwei Kompensationskammern (171 und 173) verbindet, und andererseits in den ringförmigen Schichtbildungskanal (139) mündet.

31. Verbindungsvorrichtung gemäß einem der Ansprüche 27 bis 30, dadurch gekennzeichnet, daß die Hilfskammer (58) gleichermaßen gegen die Impulse des in den Kammern der Dämpfungsvorrichtung (34, 35) herrschenden dynamischen Druckes durch ein Überdruckventil (64, 65) isoliert ist, das auf einen Öffnungsdruck geeicht ist, der oberhalb des für die normale Funktion der Dämpfungsvorrichtung maximalen Druckes liegt, um einen Ausfluß der Flüssigkeit aus wenigstens einer Kammer der Dämpfungsvorrichtung (34) in die Hilfskammer (58) zuzulassen, sobald der Druck in der Kammer der Dämpfungsvorrichtung oberhalb des Öffnungsdruckes liegt.

32. Verbindungsvorrichtung gemäß Anspruch 31, dadurch gekennzeichnet, daß das Überdruckventil ein Ventil mit wenigstens einem Federblatt (64) ist, das sich in der Hilfskammer (58) befindet und gegen den Boden (19) der Dämpfungsvorrichtung, der die Hilfskammer (58) teilweise begrenzt, in der Position des Verschlusses wenigstens einen den Boden (19) durchsetzenden und die Hilfskammer (58) mit der an den Boden (19) angrenzenden Kammer (34) der Dämpfungsvorrichtung verbindenden Öffnung (65) vorgespannt ist.

33. Verbindungsvorrichtung gemäß einem der Ansprüche 27 bis 32, dadurch gekennzeichnet, daß die Hilfskammer (58) gleichermaßen gegen Impulse des in den Kammern (34, 35) der Dämpfungsvorrichtung herrschenden dynamischen Druckes durch ein Zwangsversorgungsventil isoliert ist, das auf einen Öffnungsdruck geeicht ist, der unterhalb des Flüssigkeitsdruckes in der Hilfskammer (58) unter der Einwirkung der Druckbeaufschlagungsvorrichtung (53, 54, 56) liegt.

34. Verbindungsvorrichtung gemäß Anspruch 33, dadurch gekennzeichnet, daß das Zwangsversorgungsventil ein Ventil mit wenigstens einem Federblatt (66) ist, das sich in der an den die Hilfskammer (58) teilweise begrenzenden Boden (19) der Dämpfungsvorrichtung angrenzenden Kammer (34) der Dämpfungsvorrichtung befindet und in der Position des Verschlusses gegen den Boden (19) wenigstens einer den Boden (19) durchsetzenden und die Hilfskammer (58) mit der Kammer (34) der Dämpfungsvorrichtung verbindenden Öffnung (67) vorgespannt ist.

35. Verbindungsvorrichtung gemäß einem der Ansprüche 26 bis 34, dadurch gekennzeichnet, daß im Akkumulator der Boden der Hilfskammer (158') durch eine elastisch verformbare Wand (156') aus einem Elastomer gebildet ist, die die Dichtigkeit und die elastische Rückstellung des Bodens in die Position der Kompression der in der Hilfskammer (158') enthaltenen Flüssigkeit gewährleistet.

36. Verbindungsvorrichtung gemäß einem der Ansprüche 26 bis 35, dadurch gekennzeichnet, daß im Akkumulator (52) die Hilfskammer (58) teilweise durch eine biegsame und dichte Membran (56) begrenzt wird, die der Wirkung eines elastischen Elementes der Druckbeaufschlagungsvorrichtung unterworfen ist.

37. Verbindungsvorrichtung gemäß Anspruch 36, dadurch gekennzeichnet, daß die Druckbeaufschlagungsvorrichtung pneumatisch arbeitet und ihr elastisches Element ein unter Druck stehendes Gasvolumen ist, das sich in einer durch die Membran (56) teilweise begrenzten pneumatischen Kammer (53) befindet.

38. Verbindungsvorrichtung gemäß Anspruch 37, dadurch gekennzeichnet, daß die Hilfskammer (58) im Inneren eines inneren röhrenförmigen Teils (15) zwischen einem Verschlußboden (19) des in axialer Richtung inneren Endes dieses Teils (15) und der Dichtungsmembran (56), die die Gestalt einer Kuppel besitzt und auf dichte Weise mit ihrer Umfangskante (57) im inneren, röhrenförmigen Teil (15) befestigt ist, begrenzt wird, wobei die unter Druck stehende pneumatische Kammer (53) zwischen der Membran (56) und einer Rappe (54) zum Verschließen des in axialer Richtung äußeren Endes des inneren, röhrenförmigen Teils (15) begrenzt wird.

39. Verbindungsvorrichtung gemäß Anspruch 38, dadurch gekennzeichnet, daß die Vorrichtung zur Kompensation der Wärmedehnungen (52) eine Anzeigevorrichtung für die Füllhöhe in der Hilfskammer (58) enthält, wobei die Anzeigevorrichtung einen Anzeigestift (62) enthält, von dem ein Ende mit dem Mittelteil der Membran (56) verbunden ist und der in axialer Richtung gleitend in einer wenigstens teilweise durchsichtigen Röhre (63) angebracht ist, die aus der Kappe (54), auf der vorzugsweise auch ein Schlauchventil (60) der pneumatischen Kammer (53) angebracht ist, herausragt.

40. Verbindungsvorrichtung gemäß Anspruch 36, dadurch gekennzeichnet, daß die Druckbeaufschlagungsvorrichtung mechanisch arbeitet und sein elastisches Element eine Feder (154) ist, die einen Kolben (153) gegen die Membran (156) zurückdrückt.

41. Verbindungsvorrichtung gemäß Anspruch 40, dadurch gekennzeichnet, daß die Hilfskammer (158) im Inneren eines inneren, röhrenförmigen Teils (116) zwischen einem Boden (120) der Dämpfungsvorrichtung, der mit dem in axialer Richtung inneren Ende des Teils (116) verbunden ist, und der Membran (156) vom Abrolltyp begrenzt wird, wobei der Mittelteil der Membran (156) gegen den Kolben (153) gedrückt wird, der in axialer Richtung gleitend ohne Dichtheit in dem Teil (116) angebracht ist, in dem sich außerdem die Feder (154) befindet, wobei der Kolben (153) bei seinen axialen Verschiebungen mittels einer Mittelachse (163) geführt wird, die mit dem Kolben (153) verbunden ist und in axialer Richtung gleitend mit geringem radialen Spiel im Inneren eines röhrenförmigen Abstandhalters (123) angebracht ist, der einen konstanten axialen Abstand zwischen dem Boden (120) der Dämpfungsvorrichtung und einem weiteren Boden (119) der Dämpfungsvorrichtung, der mit dem in axialer Richtung inneren Ende des anderen inneren, röhrenförmigen Teils (115) verbunden ist, aufrecht erhält.

42. Verbindungsvorrichtung gemäß Anspruch 41, dadurch gekennzeichnet, daß die Vorrichtung zur Kompensation der Wärmedehnungen eine Anzeigevorrichtung für die Füllhöhe der Hilfskammer (158) enthält, wobei die Anzeigevorrichtung einen Anzeigestift (162) enthält, der mit dem Kolben (153) verbunden ist und sich in Längsrichtung nach außen erstreckt und dabei einen Boden (125), der das in axialer Richtung äußere Ende des inneren, röhrenförmigen Teils (116) verschließt und gegen den sich die Feder (154) zum Zurückdrücken des Kolbens (153) abstützt, durchsetzt.

43. Verbindungsvorrichtung gemäß einem der Ansprüche 8 bis 42 sowie in Verbindung mit Anspruch 7, dadurch gekennzeichnet, daß das Federblatt (45) wenigstens eines Ausflußventils an der Seite der Zwischenwand (10) befestigt ist, die zu der Kammer (34) der Dämpfungsvorrichtung weist, in deren Innenraum daß Federblatt (45) hineingebogen wird, wenn das Auslaufventil geöffnet wird.

44. Verbindungsvorrichtung gemäß Anspruch 43, dadurch gekennzeichnet, daß die Vorrichtung zur Kraftspitzenbegrenzung eine Mehrzahl von die transversale Zwischenwand (10) durchsetzenden Bohrungen (40) enthält, denen jeweils ein Auslaufventil mit vorgespanntem Federblatt (45, 45') zugeordnet ist, wobei die Auslaufventile auf beiden Seiten der Zwischenwand (10) angeordnet sind, derart, daß die Federblätter (45, 45') sämtlicher Ventile, die das Auslaufen der Leckraten in der gleichen Richtung von einer Kammer der Dämpfungsvorrichtung in die andere zulassen, an der Seite der Zwischenwand (10) befestigt sind, die zu der Kammer der Dämpfungsvorrichtung weist, in die sich die Federblätter (45, 45') hineinbiegen.

45. Verbindungsvorrichtung gemäß Anspruch 44, dadurch gekennzeichnet, daß die an derselben Fläche der transversalen Zwischenwand (10) befestigten Federblätter (45, 45') Blätter sind, die sich in der nicht gebogenen Stellung im wesentlichen in radialer Richtung auf dieser Fläche erstrecken.

46. Verbindungsvorrichtung gemäß einem der Ansprüche 44 und 45, dadurch gekennzeichnet, daß wenigstens zwei auf derselben Seite der transversalen Zwischenwand (10) angeordnete Federblätter (45, 45') mit einer gemeinsamen Befestigungsfläche (43) verbunden sind, in bezug auf die sich die Federblätter biegen sollen und die an der dieser Seite zugewandten Fläche der Zwischenwand (10) befestigt ist.

47. Verbindungsvorrichtung gemäß einem der Ansprüche 44 bis 46, dadurch gekennzeichnet, daß sämtliche auf derselben Seite der transversalen Zwischenwand (10) angeordnete Federblätter (45, 45') aus einem einzigen, aus einem Metallblech ausgeschnittenen Stück mit einem ebenen, ringförmigen Kranz (43) ausgebildet sind, der ablösbar gegenüber einem ringförmigen Teil in einer in radialer Richtung äußeren Position an der entsprechenden Fläche der Zwischenwand (10) und im Inneren des Dämpfungsvorrichtungskörpers (12) befestigt ist, wobei jedes Federblatt (45) über seine Basis (46), die zwischen zwei am radialen Innenrand des Kranzes (43) ausgesparten Vertiefungen (47) begrenzt ist, mit dem Kranz (43) verbunden ist und sich bis zu seinem freien Ende ins Innere des Kranzes (43) erstreckt und dabei ein Plattenventil für eine Spitzenbegrenzungsbohrung (40) der Zwischenwand (10) bildet.

48. Verbindungsvorrichtung gemäß einem der Ansprüche 43 bis 47, dadurch gekennzeichnet, daß wenigstens ein auf einer Seite der Zwischenwand (10) angeordnetes Federblatt (45) und wenigstens ein auf der anderen Seite der Zwischenwand (10) angeordnetes Federblatt an dieser letzteren durch gemeinsame Befestigungsmittel (49, 50) befestigt sind.

49. Verbindungsvorrichtung gemäß einem der Ansprüche 44 bis 48, dadurch gekennzeichnet, daß die Zwischenwand (10) von einer geraden Zahl von Spitzenbegrenzungsbohrungen (40) durchsetzt ist, die in Umfangsrichtung vorzugsweise um die Achse der Verbindungsvorrichtung regelmäßig verteilt sind, und daß die Hälfte der gleichen geraden Zahl von Federblättern (45, 45') auf jeder Seite der Zwischenwand (10) angeordnet ist, wobei die Federblätter einer jeden Seite dieser letzteren mit einer Hälfte der Zahl der Bohrungen (40) zusammenwirken, wobei in Umfangsrichtung die Bohrungen (40), die mit den Federblättern der einen Seite der Zwischenwand (10) zusammenwirken, mit den Bohrungen (40), die mit den Federblättern der anderen Seite der Zwischenwand (10) zusammenwirken, abwechseln.

50. Verbindungsvorrichtung gemäß Anspruch 49, dadurch gekennzeichnet, daß die Federblätter (45, 45') in zwei identischen Untergruppen (41, 42) hergestellt werden, die jeweils an einer entsprechenden Fläche der transversalen Zwischenwand (10) durch die gleichen Gruppen von Schrauben und Muttern (49, 50) befestigt sind und jeweils aus einem einzigen Stück aus Metallblech gebildet sind, das gegenüber dem anderen Stück in Umfangsrichtung um einen Zentrumswinkel versetzt ist, der bezogen auf 360° den Bruchteil entspricht, der gleich der Anzahl der Spitzenbegrenzungsbohrungen (40) ist, die die transversale Zwischenwand (10) durchsetzen.

51. Verbindungsvorrichtung gemäß einem der Ansprüche 43 bis 50 sowie in Verbindung mit Anspruch 10, dadurch gekennzeichnet, daß wenigstens ein Federblatt (45) und wenigstens ein Beilageblech (75), das einen die Biegung des Federblatts (45) begrenzenden Anschlag bildet, gegenüber der Zwischenwand (10) durch gemeinsame Befestigungsmittel (49, 50) befestigt sind.

52. Verbindungsvorrichtung gemäß Anspruch 51 sowie in Verbindung mit Anspruch 47, dadurch gekennzeichnet, daß ein einen einzigen Anschlag für sämtliche auf derselben Seite der Zwischenwand (10) angeordnete Federblätter (45, 45') bildendes Beilageblech (75) die Form einer ringförmigen Unterlegscheibe besitzt, die starr gegen den ringförmigen Kranz (43) drückt, mit dem die Federblätter (45, 45') verbunden sind, und vorzugsweise radiale Arme (76) aufweist, die nach innen vorstehen und die Federblätter (45, 45') überdecken und dabei für diese letzteren Stützflächen darstellen, die bei der Biegeverformung der Federblätter (45, 45') einem Druckunterschied entsprechen, der gleich dem dritten Schwellenwert ist.

53. Verbindungsvorrichtung gemäß einem der Ansprüche 1 bis 52, dadurch gekennzeichnet, daß die äußere, röhrenförmige Ummantelung (4) eine starre und zerlegbare Verbindung zweier Zylinder (5, 6) mit gleichem transversalen Querschnitt umfaßt, die in gegenseitiger axialer Verlängerung und im wesentlichen über Endflansche (7, 8) stumpf stoßend angeordnet sind, wobei gegenüber und zwischen ihnen wenigstens ein radialer Umfangsteil (11) der transversalen Zwischenwand (10) eingeschlossen ist, derart, daß die aneinandergrenzenden Endteile der zwei Zylinder (5, 6) den röhrenförmigen Körper der Dämpfungsvorrichtung (12) bilden und daß der andere Endteil eines jeden von ihnen das äußere röhrenförmige Teil (13, 14) eines elastischen Rückstellelementes (2, 3) bildet, wobei einer (5) der zwei Zylinder außerdem, vorzugsweise an seinem Ende, das demjenigen gegenüberliegt, mit dem es an den anderen Zylinder (6) angrenzt, einen weiteren starren Verbindungsflansch (31) aufweist, der vom starren Element (29), das mit der äußeren Ummantelung (4) verbunden ist und vorzugsweise glockenförmig unter einem Ansatz (29) angeordnet ist, der mit einer Öse (33) für die Verbindung mit einem die entsprechenden Gelenkmittel bildenden Kugelgelenk (32) versehen ist, abnehmbar ist.

54. Verbindungsvorrichtung gemäß einem der Ansprüche 1 bis 52, dadurch gekennzeichnet, daß die äußere ringförmige Ummantelung (104) einen zylindrischen Mittelkörper (105) umfaßt, der einstückig mit der transversalen Zwischenwand (110) ausgebildet ist und den röhrenförmigen Körper der Dämpfungsvorrichtung bildet und zwei axiale Endteile (106, 107) besitzt, wobei in jeden von ihnen ein Zylinder eingreift und gehalten wird, der das äußere, röhrenförmige Teil (113, 114) eines der elastischen Rückstellelemente (102, 103) bildet, wobei einer dieser axialen Endteile (106) gleichzeitig starr am starren Element (129) befestigt ist, das mit der äußeren Ummantelung (104) verbunden ist und vorzugsweise glockenförmig unter einem Ansatz angeordnet ist, der mit einer Öse (133) für die Verbindung mit einem die entsprechenden Gelenkmittel darstellenden Kugelgelenk (132) versehen ist.

55. Verbindungsvorrichtung gemäß einem der Ansprüche 1 bis 54, dadurch gekennzeichnet, daß die innere Ummantelung (28) außer den zwei inneren, röhrenförmigen Teilen (15, 16), die zylindrisch sind, wenigstens einen radialen Boden (19), der von einer Mittelbohrung durchsetzt ist und mit einem inneren, röhrenförmigen Teil (15) einteilig ausgebildet ist, sowie wenigstens eine axiale Stütze (21) und einen axialen Abstandhalter (23) umfaßt, wobei der Abstandhalter wenigstens einen radialen Boden (19) an einem radialen Anschlag (24) hält, der von der axialen Stütze (21), die die Mittelbohrung des Bodens (19) dicht durchsetzt, gehalten wird.

56. Verbindungsvorrichtung gemäß Anspruch 55, dadurch gekennzeichnet, daß der radiale Anschlag ein abnehmbarer Anschlag ist, der eine auf einen Gewindeteil der entsprechenden axialen Stütze (21) geschraubte Mutter (24) aufweist.

57. Verbindungsvorrichtung gemäß einem der Ansprüche 55 und 56, dadurch gekennzeichnet, daß wenigstens eine axiale Stütze eine axiale Stange (21) ist, die ebenfalls in den röhrenförmigen Abstandhalter (23) eingreift.

58. Verbindungsvorrichtung gemäß Anspruch 57, dadurch gekennzeichnet, daß die axiale Stange (21) einstückig mit dem mit der inneren Ummantelung (28) verbundenen starren Element (25) ausgebildet ist und in einen Ansatz ausläuft, der vorzugsweise eine Öse (27) für die Verbindung mit einem die entsprechenden Gelenkmittel bildenden Kugelgelenk (26) darstellt.

59. Verbindungsvorrichtung gemäß Anspruch 56, dadurch gekennzeichnet, daß wenigstens eine axiale Stütze ein axialer Endbereich (123a) des Abstandhalters (123) ist, wobei der axiale Endbereich (123a) teilweise mit einem Gewinde versehen ist und mit dem Rest des Abstandhalters (123) über eine Schulter verbunden ist, gegen die der radiale Boden (119) durch eine Mutter (124) gedrückt wird, die auf den axialen Endbereich (123a) des Abstandhalters geschraubt ist.

## Claims

1. Resilient return strut of the elastic-hydraulic type with incorporated linear damping, by throttling a hydraulic fluid, intented, in particular for a blade of an aerodyne rotor of a rotary-wing aircraft, and comprising :
   – two rigid elements (25, 29) each provided with articulation means (26, 32) for connecting one of said rigid elements to a first part, as a blade or a part-joining said blade to a rotor hub, and the other of said rigid elements to a second part, such as said rotor hub,
   – a hydraulic damper (1) comprising two damper chambers (34, 35), of inversely variable capacities, said damper chambers being delimited within a tubular body (12) which is unitary with one of said rigid elements (29) and being separated from one another by a transverse partition (10), constituting a piston, said partition being mounted in said tubular body (12) and being unitary with one of said rigid elements (29), and which are filled with a hydraulic fluid intended to flow from one to the other of the damper chambers (34, 35) through at least one narrow connecting passage (39) between these chambers (34, 35) when the rigid elements (25, 29) are displaced one in relation to the other substantially along the general axis (A--A) of the strut, so as to produce a linear damping effect on the relative displacement of the rigid elements (25, 29),
   – a device (52) for compensation of thermal expansion of the hydraulic fluid, comprising an auxiliary chamber (58) containing a volume of hydraulic fluid, said auxiliary chamber being permanently connected with at least one of the damper chambers (34) through a damper base (19) which partially delimits the auxiliary chamber (58) and is adjacent to a damper chamber (34),
– at least one resilient return device (2 or 3) comprising a sleeve (17 or 18) made of an elastically-deformable material and attached so as to be water-tight by its internal and external lateral surfaces, respectively, between two rigid tubular sections, internal (15 or 16) and external (13 or 14) respectively, each of said tubular sections being substantially coaxial with said general axis (A--A) of the strut and unitary with one of said first and second rigid elements (25, 29), respectively, such that the sleeve (17 or 18) is deformed by shearing when said first and second rigid elements (25, 29) are displaced relative to one another substantially along said general axis (A--A) of the strut, and such that the sleeve (17 or 18) exerts on said rigid elements a resilients return effect tending to return them to an initial relative position, in which arrangement said sleeve (17 or 18) also forms a fluid-tight closure seal sealing the hydraulic damper (1), characterised in that the damper chambers (34, 35) are delimited axially between first and second resilient return devices (2, 3) having rigid tubular sections (13, 14) arranged longitudinally on either side of said tubular damper body (12), said tubular sections (13, 14) being substantially coaxial one with the other and with said tubular body (12) and being unitary with said tubular body (12) while constituting a single external tubular armature (4) which is unitary with one (29) of said two rigid elements, and in which arrangement the internal rigid tubular sections (15, 16) of the resilient return devices (2, 3) are substantially coaxial one with the other, are arranged longitudinally while leaving clearance on either side of said transverse partition (10) of the damper (1), and are unitary with one another and with the other rigid device (25), with which said external tubular armature (4) does not form a single piece, while forming a single internal armature (28) comprising a central part (23) which passes axially through the two damper chambers (34, 35) and secures the two internal tubular sections to one another, while being enclosed by the transverse partition (10) which is annular in shape and unitary with the external armature (4), and in such a way that said sleeves (17, 18) made of an elastically-deformable material each provide the fluid-tight sealing of one of the two damper chambers (34, 35) respectively, on the side opposite the transverse partition (10), and said damper chambers (34, 35) are permanently connected to one another by means of a narrow annular passage (39) delimited by radial throttling play between said transverse partition (10) and that one (28) of the armatures with which said transverse partition (10) does not form one piece, and through which the high-viscosity hydraulic fluid, which is contained in the damper chambers (34, 35) and in the auxiliary chamber (58), is throttled.

2. Strut according to claim 1, characterised in that said annular transverse partition (10) is unitary with the external tubular armature (4) and is extended as substantially radial projection toward the interior of the central part of said external armature (4), thus forming a damper body (12), such that its internal radial edge delimits said annular throttling passage (39) around said central portion (23) of the internal armature (28).

3. Strut according to claim 2, characterised in that said central portion of the internal armature (28) comprises a longitudinal brace (23) which maintains a uniform axial gap between two damper bases (19, 20), each of said damper bases being adjacent to one of the damper chambers (34, 35) respectively and being unitary with one of the internal tubular sections (15, 16) respectively, said annular throttling passage (39) being delimited between said transverse partition (10) and the external lateral surface of said brace (23).

4. Strut according to any of claims 1 to 3, characterised in that the hydraulic damper (1) comprises at least one device for limiting the force of damping, said device comprising at least one discharge valve (45, 40) permitting leakage from one of the damper chambers (34, 35) compressed by the relative axial displacement of the two rigid elements (25, 29), to the other damper chamber in which the pressure is reduced, when the differential pressure between the two chambers exceeds a predetermined threshold.

5. Strut according to claim 4, characterised in that the force-limiting device comprises at least two discharge valves (40, 45, 45'), at least one (40, 45) of said discharge valves permitting leakage from a first damper chamber (34) toward said second chamber (35) when the pressure in said first chamber rises above a first threshold above the pressure in said second chamber, and preventing any flow of the high-viscosity fluid from said second chamber (35) to said first chamber (34), while at least one other discharge valve (40, 45') permits leakage from said second chamber (35) toward said first chamber (34) when the pressure in said second chamber is greater than a second threshold, selectively equal to said first threshold, above the pressure in said first chamber (34), and prevents any flow from said first chamber (34) toward said second chamber (35) of the damper.

6. Strut according to claim 4 or 5, characterised in that at least one discharge valve comprises a prestressed movable seal (45) which is, under normal use, returned to a position in which it seals at least one limiting orifice (40) connecting the two damper chambers (34, 45), and withdrawn from said sealing position as soon as the differential pressure which determines its operation exceeds said corresponding predetermined threshold.

7. Strut according to claim 6, characterised in that at least one limiting orifice is a hole (40) drilled through the transverse partition (10), and said movable seal is a spring-leaf (45) of which at least one part, constituting a diaphragm, is housed in one of the damper champers (35), and which is prestressed and pressed, in the position in which it seals the hole (40), against the surface of the partition (10), which faces said damper chamber (35), and wherein said hole (40) becomes progressively unobstructed by means of elastic flexion of the spring-leaf (45) toward the interior of said damper chamber (35) which houses it at least partially, with the result that a passage supplementing the annular throttling passage (39) is freed and that the section for throttling the high-viscosity fluid is increased as soon as the pressure in said damper chamber (35) falls below the pressure in the other damper chamber (34), of a value equal to said corresponding predetermined threshold.

8. Strut according to any of claims 4 to 7, characterised in that the hydraulic damper (1) further comprises at least one device (75) for the saturation of the leakage flow from at least one of said discharge valves (40, 45), said device limiting said leakage flow when the pressure differential between the two damper chambers (34, 35) reaches a third predetermined threshold greater than said first and/or second predetermined threshold.

9. Strut according to claim 8 in its dependency on claim 6 or 7, characterised in that said saturation device comprises a mechanism containing at least one stop (75) which restricts the motion of the movable seal (45) when said seal is withdrawn from the position in which it seals the corresponding limiting hole(s) (40).

10. Strut according to claim 9 in its dependency of the claim 7, characterised in that said stop is a wedge (75) fastened to one surface of said partition (10) and overlapping at least partially a spring-leaf (45), such that said spring-leaf is at least partially housed between said wedge (75) and said partition (10) surface, and such that its ranges of motion when subjected to flexion are restricted by its abutment against said wedge (75).

11. Strut according to any of claims 4 to 10, characterised in that the hydraulic damper (101) further comprises at least one pressure-driven limiting-suppression device (181) which controls the interruption of the flow of leakage from at least one discharge valves (140, 145) when the pressure differential between the two damper chambers (170, 172) reaches a fourth predetermined threshold which is greater than said first, second, and third predetermined thresholds.

12. Strut according to claim 11 in its dependency on claim 6 characterised in that said limiting – suppression device comprises a closing valve (181) having a movable seal (186) which is shifted from a position in which it unblocks at least one limiting hole (140) in at least one discharge valve (140, 145) to a position in which it seals said limiting holes (140), when the pressure differential reaches said fourth threshold.

13. Strut according to claim 12 in its dependency on claim 7, characterised in that said closing valve (181) is carried on said partition (110) in such away that is movable seal (186) seals at least one limiting hole (140) drilled in said partition (110).

14. Strut according to claim 13, characterised in that the movable seal of the closing valve (181) is mounted as a slide valve (186) which slides in fluid-tight fashion in a transverse hole (182) in said partition (110) and which intersects a limiting hole (140), said transverse hole (182) being permanently connected (184, 185), on either side of said slide valve (186), with one of the two damper chambers (170, 172) respectively, in such a way that the pressures in said damper chambers are continuously applied on the ends of the slide valve (186), said slide valve being elastically repositioned (188) so as to free the limiting hole (140) by means of at least one elastic device (188) also housed in said transverse hole (182), said slide valve (186) being pushed against the force exerted by the elastic device (188) into the position in which it seals the limiting hole (140) when the pressure differential between the two damper champers (170, 172) reaches said fourth threshold and produces on the slide valve (186) a force greater than the prestressing of the resilient return device (188).

15. Strut according to any of claims 11 to 14, characterised in that the hydraulic damper (101) comprises a device for the restoration of the initial throttling through the annular throttling passage (139), said device comprising a limiting-suppression device (181) connected to each discharge valve (140, 145).

16. Strut according to any of claims 1 to 15, characterised in that each of the two damper chambers (34, 35) delimited on either side of said transverse partition (10) in the tubular damper body (12) is subdivided by a rigid transverse wall (68, 69) unitary with that one of the two armatures with which said transverse partition (10) is not unitary, into two chambers of which one, in an internal axial position and adjacent to said transverse partition (10) is a working chamber (70, 72) operating under dynamic pressure, and of which the other, in an external axial position and directly adjacent to the elastically-deformable sleeve (17, 18) on the corresponding side, is a compensation chamber (71, 73) which controls variations in volume resulting from deformations in the elastically-deformable material, and which is permanently connected with the other chamber of the same kind and in the external axial position, by means of at least one conduit (74).

17. Strut according to claim 16, characterised in that at least one connecting conduit joining the two chambers (71, 73) in the external axial position is a pipe (74) positioned outside the damper body (12) to which damper body said pipe is connected by its two ends.

18. Strut according to claim 16, characterised in that at least one connecting conduit joining the two chambers (171, 173) in the external axial position is formed by an substantially longitudinal passage (174) set in the thickness of the damper body (105).

19. Strut according to any one of claims 16 to 18, characterised in that said transverse partition (10) is unitary with the damper body (12), and wherein the transverse walls are dishes (68, 69) substantially in the form of disks which are held in a fixed position and separated from one another on the internal armature by a brace (23) of that armature which presses each of the dishes (68, 69) against one of the substantially radial damper bases (19, 20), respectively, each of which is unitary with one of the two internal tubular sections (15, 16), respectively.

20. Strut according to any one of claims 16 to 18, characterised in that the tranverse walls are pistons (168, 169) mounted for fluidtight sliding movement against the one (104) to the two armatures (104, 128) with which they are not unitary.

21. Strut according to claim 20, characterised in that said transverse partition (110) is unitary with the damper boby (105), and wherein the pistons (168, 169) are each unitary with a respective one of internal tubular sections (115, 116).

22. Strut according to claim 21, characterised in that at least one (168) of the two pistons is unitary with an internal tubular section (115) and a base (119) which seals the internal axial end of this tubular section (115).

23. Strut according to claim 21 or 22 characterised in that at least one (169) of the two pistons is embodied by the movable assembly comprising an external radial collar unitary with an internal tubular section (116) and an external radial collar (121) unitary with a base (120) mounted on the internal axial end-piece of said internal tubular section (116).

24. Strut according to any one of claims 1 to 23 characterised in that the radial throttling play between the transverse partition (10) and the armature (23'), with which the partition (10) is not unitary, is variable as a function of the relative axial position of said partition (10) and of said armature (23'), with which the partition is not unitary, so as to produce which is variable as a fonction of the load.

25. Strut according to claim 24, on which the radial throttling play is delimited between the internal radial edge of the transverse annular partition (10) and the external lateral surface of a brace (23') in the internal armature, characterised in that said external lateral surface as it faces at least one axial end of the damper of the brace (23') has a substantially truncated or biconical shape.

26. Strut according to any one of claims 1 to 25, characterised in that the compensation device for controlling the thermal expansion (52) of the high-viscosity fluid is an accumulator in which the auxiliary chamber (58) is filled with fluid and pressurized by the action of a pressurization device (53, 54, 56) for filling of the two damper chambers (34, 35) under static pressure.

27. Strut according to claim 26, characterised in that said permanent connection between said auxiliary chamber (58) and at least one damper chamber (34) is furnished by a duct (59) which is calibrated over at least one portion of its length and which constitutes a filter for the dynamic pressure pulsations in the damper chambers (34, 35).

28. Strut according to claim 27, characterised in that the calibrated duct (59) passes through said damper base (19) which partially delimits said auxiliary chamber (58), and opens directly into the damper chamber (34) to which said damper base (19) is adjacent.

29. Strut according to claim 27 in its dependency on claim 2, characterised in that the calibrated portion of the duct contains at least one radial hole (190) drilled in said central portion (123) of the internal armature (128), said radial hole opening, on one side, into said annular throttling passage (139) and, on the other side, into a longitudinal conduit (189) extending into the internal armature (128) and on the other side of a damper base (120) which is unitary with an internal tubular section (116) and opens into said auxiliary chamber (158) housed in said internal tubular section (116).

30. Strut according to claim 27 in its dependency on claim 18, characterised in that the calibrated portion of the duct comprises at least one radial hole (191) set into the annular, transverse partition (110) and opening, on the one hand, into the longitudinal conduit (174) drilled into the thickness of the damper body and connecting the two compensation chambers (171 and 173), and, on the other hand, into said annular throttling passage (139).

31. Strut according to any one of claims 27 to 30, characterised in that the auxiliary chamber (58) is also insulated from the dynamic pressure pulsations in the damper chambers (34, 35) by means of an excesspressure valve (64, 65) calibrated at an opening pressure which is greater than the maximum normal functioning pressure of the damper, so as to allow fluid flow from at least one damper chamber (34) toward the auxiliary chamber (58) as soon as the pressure in said damper chamber rises above said opening pressure.

32. Strut according to claim 31, characterised in that said excess-pressure valve comprises at least one spring-leaf (64) housed in the auxiliary chamber (58) and prestressed against the damper base (19) which partially demarcates said auxiliary chamber (58), in a position in which it seals at least one orifice (65) passing through said base (19) and placing said auxiliary chamber (58) in connection with the damping chamber (34) adjacent to said base (19).

33. Strut according to any one to claims 27 to 32, characterised in that the auxiliary chamber (58) is also insulated from the dynamic pressure pulsations in the damper chambers (34, 35) by means of a supercharging valve calibrated at an opening pressure which is lower than the pressure of the fluid in the auxiliary chamber (58) which is acted upon by the pressurization device (53, 54, 56).

34. Strut according to claim 33, characterised in that said supercharging valve has at least one spring-leaf (66) which is housed in the damper chamber (34) adjacent to the damper base (19) which partially delimits the auxiliary chamber (58), and which is prestressed against said base (19) in a sealing position in which it closes off at least one orifice (67) extending through said base (19) and connecting said auxiliary chamber (58) with said damper chamber (34).

35. Strut according to any one of claims 26 to 34, characterised in that in said accumulator, the base of said auxiliary chamber (158') is an elastically-deformable wall (156') made of an elastomer which provides fluid-tightness and the resilient return of said base into a position in which it compresses the fluid contained in the auxiliary chamber (158').

36. Strut according to any one of claims 26 to 35, characterised in that in said accumulator (52), said auxiliary chamber (58) is partially delimited by a flexible, fluid-tight diagragm (56) subjected to the action produced by an elastic device (53) in the pressurization device.

37. Strut according to claim 36, characterised in that the pressurization device is pneumatic, and its elastic device is a volume of pressurized gas housed in a pneumatic chamber (53) which is partially delimited by said diaphragm.

38. Strut according to claim 37, characterised in that said auxiliary chamber (58) is delimited on the inside of an internal tubular section (15), between a sealing base (19) and said fluid-tight diaphragm (56), said diaphragm being cup-shaped and fastened in fluid-tight fashion by its peripheral edge (57) in said internal tubular section (15), and wherein said pressurized pneumatic chamber (53) is delimited between said diaphragm (56) and a cover (54) which seals the external axial end of said internal tubular section (15).

39. Strut according to claim 38, characterised in that the compensation device for controlling thermal expansion (52) contains a fluidlevel indicator for the auxiliary chamber (58), said indicator comprising an indicator stick (62) one end of which is unitary with the central portion of the diaphragm (56), and which is mounted so as to slide axially in a tube (63) which is at least partially transparent and which projects on the outside of said cover (54), a valve (60) for the inflation of the pneumatic chamber (53) being mounted on said cover.

40. Strut according to claim 36, characterised in that the pressurization device is mechanical and its elastic device is a spring (154) which pushes a piston (153) against said diaphragm (156).

41. Strut according to claim 40, characterised in that said auxiliary chamber (158) is delimited on the inside of an internal tubular section (116) between a damper base (120) unitary with the internal axial end of said internal tubular section (116) and said diaphragm (156) of the unwinding type and of which the central portion is pressed against the piston (153) mounted so as to slide axially without fluid-tightness in said internal tubular section (116), said internal tubular section also housing the spring (154), the piston (153) being guided in its axial movements by a central shaft (163) unitary with the piston (153) and mounted axially so as to slide with slight radial play on the inside of a tubular brace (123), which brace maintains a uniform axial gap between said damper base (120) and another damper base (119) unitary with the internal axial end of the other internal tubular section (115).

42. Strut according to claim 41, characterised in that said compensation device for thermal expansion comprises a filling-level indicator for said auxiliary chamber (158) which comprises an indicator stick (162) unitary with said piston (153) and extending longitudinally outward through a base (125) which seals the external axial end of said internal tubular section (116), and against which the thrust spring (154) pushing the piston (153) abuts.

43. Strut according to any one of claims 8 to 42 in their dependencies on claim 7, characterised in that the spring-leaf (45) of at least one discharge valve is fastened against the surface of the partition (10) which faces the damper chamber (34) toward the interior of which the spring-leaf (45) is flexed when said discharge valve is opened.

44. Strut according to claim 43, characterised in that the force-limiting device comprises several holes (40) drilled in the transverse partition (10), each of said holes being associated to a discharge valve incorporating a prestressed spring-leaf (45, 45') and wherein said discharge valves are arranged on either side of said partition (10) in such a manner that the spring-leaves (45, 45') in all of the valves which permit leakage in one direction from one damper chamber to the other, are all attached to the surface of the partition (10) which faces the damper chamber in which said spring-leaves (45, 45') are flexed.

45. Strut according to claim 44 characterised in that the spring-leaves (45, 45') attached to the same surface of the transverse partition (10) extend, in non-flexed position, substantially radially against said surface.

46. Strut according to claim 44 or 45, characterised in that at least two spring-leaves (45, 45') arranged on a single side of the transverse partition (10) are unitary with a common seat (43), in relation to which the spring-leaves are designed to be flexed elastically, and which is attached to the surface of said partition (10) which faces toward this side.

47. Strut according to any one of claims 44 to 46, characterised in that all of the spring-leaves (45-45') arranged on the same side of the transverse partition (10) are made of a single piece, cut from sheet metal, which is unitary with a flat annular collar (43) attached in movable fashion to annular part set in an external radial position on the corresponding surface of said partition (10) and on the inside of the damper body (12), and wherein each spring-leaf (45) is connected to said collar (43) by its base (46), which is delimited between two recesses (47) cut in the internal radial edge of said collar (43), and extends toward the interior of this collar to its free end which forms a diaphragm facing a limiting hole (40) in said partition (10).

48. Strut according to anyone of claims 43 to 47, characterised in that at least one spring-leaf (45) located on one side of the partition (10) and at least one spring-leaf (45') located on the other side of said partition (10) are attached to said partition by common attachment means (49, 50).

49. Strut according to any one of claims 44 to 48, characterised in that the partition (10) is pierced by an even number of limiting holes (40), evenly spaced circumferentially around the axis if the strut, and wherein one-half of the same even number of spring-lieves (45, 45') are arranged on each side of the partition (10) in such a way that the spring-leaves on each side of said partition cooperate with one-half of the number of holes (40), taken circumferentially and in an alternating arrangement with the other of the holes (40) cooperating with the spring-leaves on the other side of the partition (10).

50. Strut according to claim 49 characterised in that the spring-leaves (45, 45') are embodied in two identical subassemblies (41, 42) each of which is attached to one of the surfaces, respectively, of the transverse partition (10) using the same screw-nut assemblies, and each of which is made of a single piece of sheet-metal offset circumferentially in relation to the other piece of sheet metal at an angle at center equal to the ratio of 360° to the number of limiting holes (40) drilled in the transverse partition (10).

51. Strut according to any one of claims 43 to 50 in their dependencies on claim 10, characterised in that at least one spring-leaf (45) and at least one wedge (75) forming a stop which restricts the flexion of said spring-leaf (45) are attached to the partition (10) by common attchment means (49, 50).

52. Strut according to claim 51 in its dependency on claim characterised in that a wedge (75) forming a single stop for all of the spring-leaves (45, 45') arranged on the same side of said partition (10) is an annular washer rigidly set in place against the annular collar (43) with which said spring-leaves (45, 45') are unitary, and comprising radial arms (76) projecting inward and covering said spring-leaves (45, 45'), while having, facing these spring-leaves, supporting surfaces matching the elastic line of the spring-leaves (45, 45') in flexion corresponding to a differential pressure equal to said third threshold.

53. Strut according to any one of claims 1 to 52, characterised in that the external tubular armature (4) comprises the rigid and dismountable assembly comprising two cylinders (5, 6) having the same transverse section, arranged so as to extend each other axially and substantially end-to-end by facing end flanges (7, 8) and between which is enclosed at least one radial peripheral part (11) of the transverse partition (10), such that the adjacent end-pieces of the two cylinders (5, 6) form the tubular damper body (12) and that the other end-piece of each of the cylinders forms the external tubular section (13, 14) of a resilient return device (2, 3), and wherein one (5) of the two cylinders further comprises at its end opposite to the end which makes it adjacent to the other cylinder (6), another flange (31) connecting the rigid, dismountable assembly to the rigid element (29), which is unitary with the external armature (4) and is preferably embodied as a bell-shaped connection-piece (29) equipped with a connecting eye (33) set on ball-joint (32) constituting said corresponding means or jointing.

54. Strut according to any one of claims 1 to 52, characterised in that the external tubular armature (104) comprises a central cylindrical body (105) unitary with said transverse partition (110), and forming a tubular damper body, and having two axial end-pieces (106, 107) in each of which is engaged and held a cylinder constituting the external tubular section (113, 114) of one of the resilient return devices (102, 103), such that one of said axial end-pieces (106) is simultaneously rigidly attached to the rigid element (129) unitary with the external armature (104) and embodied in the form of a bell-shaped connection-piece equipped with a connection eye (133) on a ball-joint (132) constituting said corresponding means of jointing.

55. Strut according to any one of claims 1 to 54, characterised in that the internal armature (28) comprises, in addition to the two internal cylindrical tubular sections (15, 16), at least one radial base (19) having a centrally-placed hole and unitary with an internal tubular section (15), as well as at least one axial support (21) and an axial brace (23), in an arrangement whereby said brace holds at least one radial base (19) against a radial stop (24) carried by an axial support (21) which extends in a fluid-tight manner through the centrally-placed hole in said base (19).

56. Strut according to claim 55, characterised in that said radial stop is a movable stop which comprises a nut (24) screwed onto a threaded part of the corresponding axial support (21).

57. Strut according to claim 55 or 56, characterised in that at least one axial support as an axial rod (21) also fitted into said tubular brace (23).

58. Strut according to claim 57, characterised in that said axial rod (21) is unitary with the rigid element (25) which forms one piece with the internal armature and is embodied in the form of a connection piece having, preferably, a connection eye (27) on a ball-joint (26), thereby forming said corresponding jointing means.

59. Strut according to claim 56, characterised in that at least one axial support is an axial end-portion (123a) of said brace (123), said axial end-portion being partially threaded and connnected to the remaining part of the brace (123) by a shoulder against which a radial base (119) is secured by a nut (124) screwed onto said axial end-portion (123a) of the brace.

FIG. 1

FIG. 2

FIG. 3

FIG. 4

FIG. 5

FIG. 7

FIG. 6

EP 0 334 716 B1

FIG. 8

44

FIG. 9

FIG. 10

FIG. 11

46

FIG. 12